# EUROPEAN PATENT SPECIFICATION

(11) **EP 2 261 170 B1**
(45) Date of publication and mention of the grant of the patent: **23.04.2014**
(21) Application number: 10175901.7
(22) Date of filing: 23.02.2006
(51) Int. Cl.: G02B 26/02, G02B 26/04, G09G 3/34, G09G 3/20

(54) **Display method and apparatus**
Anzeigeverfahren und -vorrichtung
Procédé et appareil d'affichage

(30) Priority: 23.02.2005 US 655827 P; 29.04.2005 US 676053 P; 06.01.2006 US 326696
(43) Date of publication of application: 15.12.2010
(62) Divisional of application: 06735919.0
(73) Proprietor: Pixtronix, Inc., San Diego, CA 92121-1714 (US)
(72) Inventor: Hagood, Nesbitt, W., Wellesley, Massachusetts 02482 (US); Barton, Roger, Grand Marais, MN 55604 (US); Lewis, Stephen, Reading, MA 01867 (US); McAllister, Abraham, Annandale VA 22003 (US)
(74) Representative: Dunlop, Hugh Christopher

(56) References cited:
- WO-A1-00/55916
- WO-A2-02/07482
- WO-A2-03/040802
- US-A1- 2001 043 177
- US-A1- 2004 263 076

## Description

### Field of the Invention

In general, the invention relates to the field of imaging displays, in particular, the invention relates to circuits for controlling light modulators incorporated into imaging displays.

### Background of the Invention

Displays built from mechanical light modulators are an attractive alternative to displays based on liquid crystal technology. Mechanical light modulators are fast enough to display video content with good viewing angles and with a wide range of color and grey scale. Mechanical light modulators have been successful in projection display applications. Backlit displays using mechanical light modulators have not yet demonstrated sufficiently attractive combinations of brightness and low power. There is a need in the art for fast, bright, low-powered mechanically actuated displays. Specifically there is a need for mechanically actuated displays that can be driven at high speeds and at low voltages for improved image quality and reduced power consumption.

The present invention provides a display apparatus according to claim 1.

### Brief Description of the Drawings

The foregoing discussion will be understood more readily from the following detailed description of the invention with reference to the following drawings:
Figure 1A is an isometric view of display apparatus;
Figure 1B is a block diagram of the a display apparatus;
Figure 2 is an isometric view of a shutter assembly suitable for inclusion in the display apparatus of Figure 1;
Figure 3A and 3B is an isometric view of dual-actuated shutter assembly suitable for inclusion in the display apparatus of Figure 1;
Figure 4 is a top view of an array of shutter assemblies suitable for inclusion in the display apparatus of Figure 1;
Figure 5A is a conceptual diagram of a control matrix suitable for controlling the shutter assemblies of the display apparatus of Figure 1;
Figure 5B is a isometric view of an array of pixels incorporating the control matrix of Figure 5A and the shutter assemblies of Figure 2;
Figure 6 is a diagram of a second control matrix suitable for controlling the shutter assemblies of the display apparatus of Figure ;
Figure 7 is a diagram of a third control matrix suitable for controlling the shutter assemblies of the display apparatus of Figure 1;
Figure 8 is a flow chart of a method of addressing the pixels of the control matrix of Figure 7;
Figure 9 is a diagram of a fourth control matrix suitable for controlling the shutter assemblies of the display apparatus of Figure 1;
Figure 10 is a flow chart of a method of addressing the pixels of the control matrix of Figure 9, according to an illustrative embodiment of the invention;
Figure 11 is a diagram of a fifth control matrix suitable for controlling the shutter assemblies of the display apparatus of Figure 1, according to an illustrative embodiment of the invention;
Figure 12 is a flow chart of a method of addressing the pixels of the control matrix of Figure 11, according to an illustrative embodiment of the invention;
Figure 13 is a diagram of a sixth control matrix suitable for controlling the shutter assemblies of the display apparatus of Figure 1, according to an illustrative embodiment of the invention;
Figure 14 is a diagram of a seventh control matrix suitable for controlling the shutter assemblies of the display apparatus of Figure 1, according to an illustrative embodiment of the invention;
Figure 15 is a diagram of an eighth control matrix suitable for controlling the shutter assemblies of the display apparatus of Figure 1, according to an illustrative embodiment of the invention;
Figure 16 is a diagram of a ninth control matrix suitable for controlling the shutter assemblies of the display apparatus of Figure 1, according to an illustrative embodiment of the invention;
Figure 17 is a diagram of a tenth control matrix suitable for controlling the shutter assemblies of the display apparatus of Figure 1, according to an illustrative embodiment of the invention;
Figure 18 is a diagram of an eleventh control matrix suitable for controlling the shutter assemblies of the display apparatus of Figure 1, according to an illustrative embodiment of the invention;
Figure 19 is a diagram of a twelfth control matrix suitable for controlling the shutter assemblies of the display apparatus of Figure 1, according to an illustrative embodiment of the invention.
Figure 20 depicts one embodiment of a portable handheld device ;
Figure 21 depicts in more detail an example of an image of the type that may be displayed on the portable hand held device depicted in Figure 20;
Figure 22 depicts a functional block diagram of the functional elements of the portable held hand device depicted in Figure 20;
Figure 23 depicts in more detail the functional elements of the display controller depicted in Figure 22;
Figure 24A is a conceptual diagram of a control matrix suitable for controlling moveable shutters in a display panel;
Figure 24B is an isometric view of an array of pixels incorporating the control matrix of Figure 24A;
Figures 25A, 25B and 25C depict in more detail of a display panel wherein Figure 25B includes three color filters;
Figure 26 depicts a display panel having a back light;
Figure 27 depicts of a display panel;
Figure 28 depicts of a portable hand held device according to the invention;
Figure 29 depicts a smart phone of a portable device ;
Figures 30A and 30B depict an e-book of a portable device ;
Figure 31A depicts a watch having a segmented display depicted in more detail in Figure 31B;
Figure 32 depicts a media player of the portable handheld device;
Figure 33 depicts a GNSS receiver portable handheld device;
Figure 34 depicts a laptop ;
Figures 35 and 36 depicts of a MEMS display panel; and
Figure 37 depicts of a reflective MEMS display panel suitable for use with the devices described herein.

### Description

To provide an overall understanding of the invention, certain illustrative embodiments will now be described, including apparatus and methods for displaying images. However, it will be understood by one of ordinary skill in the art that the systems and methods described herein may be adapted and modified as is appropriate for the application being addressed and that the systems and methods described herein may be employed in other suitable applications, and that such other additions and modifications will not depart from the scope hereof.

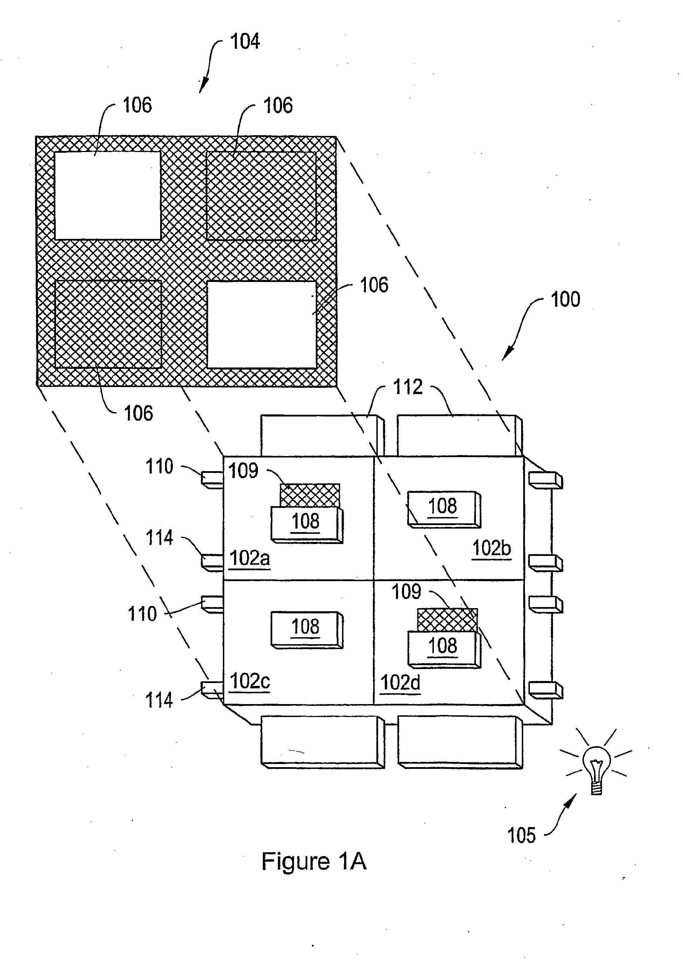

Figure 1A is an isometric view of a display apparatus 100. The display apparatus 100 includes a plurality of light modulators, in particular, a plurality of shutter assemblies 102a-102d (generally "shutter assemblies 102") arranged in rows and columns. In the display apparatus 100, shutter assemblies 102a and 102d are in the open state, allowing light to pass. Shutter assemblies 102b and 102c are in the closed state, obstructing the passage of light. By selectively setting the states of the shutter assemblies 102a-102d, the display apparatus 100 can be utilized to form an image 104 for a projection or backlit display, if illuminated by lamp 105. In another implementation the apparatus 100 may form an image by reflection of ambient light originating from the front of the apparatus.

In the display apparatus 100, each shutter assembly 102 corresponds to a pixel 106 in the image 104. In other implementations, the display apparatus 100 may utilize a plurality of shutter assemblies to form a pixel 106 in the image 104. For example, the display apparatus 100 may include three color-specific shutter assemblies 102. By selectively opening one or more of the color-specific shutter assemblies 102 corresponding to a particular pixel 106, the display apparatus 100 can generate a color pixel 106 in the image 104. In another example, the display apparatus 100 includes two or more shutter assemblies 102 per pixel 106 to provide grayscale in an image 104. With respect to an image, a "pixel" corresponds to the smallest picture element defined by the resolution of image. With respect to structural components of the display apparatus 100, the term "pixel" refers to the combined mechanical and electrical components utilized to modulate the light that forms a single pixel of the image.

Each shutter assembly 102 includes a shutter 108 and an aperture 109. To illuminate a pixel 106 in the image 104, the shutter 108 is positioned such that it allows light to pass through the aperture 109 towards a viewer. To keep a pixel 106 unlit, the shutter 108 is positioned such that it obstructs the passage of light through the aperture 109. The aperture 109 is defined by an opening patterned through a reflective or light-absorbing material in each shutter assembly 102.

The display apparatus also includes a control matrix connected to the substrate and to the shutter assemblies for controlling the movement of the shutters.. The control matrix includes a series of electrical interconnects (e.g., interconnects 110, 112, and 114), including at least one write-enable interconnect 110 (also referred to as a "scan-line interconnect") per row of pixels, one data interconnect 112 for each column of pixels, and one common interconnect 114 providing a common voltage to all pixels, or at least pixels from both multiple columns and multiples rows in the display apparatus 100. In response to the application of an appropriate voltage (the "write-enabling voltage, V_{we}"), the write-enable interconnect 110 for a given row of pixels prepares the pixels in the row to accept new shutter movement instructions. The data interconnects 112 communicate the new movement instructions in the form of data voltage pulses. The data voltage pulses applied to the data interconnects 112, in some implementations, directly contribute to an electrostatic movement of the shutters. In other implementations, the data voltage pulses control switches, e.g., transistors or other non-linear circuit elements that control the application of separate actuation voltages, which are typically higher in magnitude than the data voltages, to the shutter assemblies 102. The application of these actuation voltages then results in the electrostatic movement of the shutters 108.

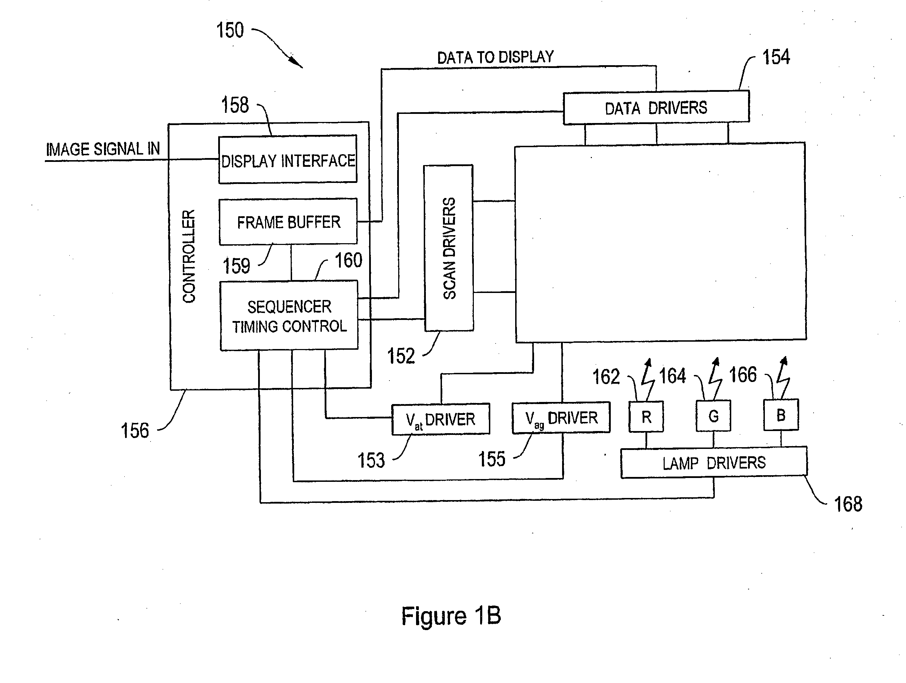

Figure 1B is a block diagram 150 of the display apparatus 100. In addition to the elements of the display apparatus 100 described above, as depicted in the block diagram 150, the display apparatus 100 includes a plurality of scan drivers 152 (also referred to as "write enabling voltage sources") and a plurality of data drivers 154 (also referred to as "data voltage sources"). The scan drivers 152 apply write enabling voltages to scan-line interconnects 110. The data drivers 154 apply data voltages to the data interconnects 112. In some embodiments of the display apparatus, the data drivers 154 are configured to provide analog data voltages to the shutter assemblies, especially where the gray scale of the image 104 is to be derived in analog fashion. In analog operation the shutter assemblies 102 are designed such that when a range of intermediate voltages is applied through the data interconnects 112 there results a range of intermediate open states in the shutters 108 and therefore a range of intermediate illumination states or gray scales in the image 104.

In other cases the data drivers 154 are configured to apply only a reduced set of 2, 3, or 4 digital voltage levels to the control matrix. These voltage levels are designed to set, in digital fashion, either an open state or a closed state to each of the shutters 108.

The scan drivers 152 and the data drivers 154 are connected to digital controller circuit 156 (also referred to as the "controller 156"). The controller includes a display interface 158 which processes incoming image signals into a digital image format appropriate to the spatial addressing and the gray scale capabilities of the display. The pixel location and gray scale data of each image is stored in a frame buffer 159 so that the data can be fed out as needed to the data drivers 154. The data is sent to the data drivers 154 in mostly serial fashion, organized in predetermined sequences grouped by rows and by image frames. The data drivers 154 can include series to parallel data converters, level shifting, and for some applications digital to analog voltage converters.

All of the drivers (e.g., scan drivers 152, data drivers 154, actuation driver 153 and global actuation driver 155) for different display functions are time-synchronized by a timing-control 160 in the controller 156. Timing commands coordinate the illumination of red, green and blue lamps 162, 164, and 166 via lamp drivers 168, the write-enabling and sequencing of specific rows of the array of pixels, the output of voltages from the data drivers 154, and for the output of voltages that provide for shutter actuation.

The controller 156 determines the sequencing or addressing scheme by which each of the shutters 108 in the array can be re-set to the illumination levels appropriate to a new image 104. New images can 104 be set at periodic intervals. For instance, for video displays, the color images 104 or frames of the video are refreshed at frequencies ranging from 10 to 300 Hertz. In some embodiments the setting of an image frame is synchronized with the illumination of a backlight such that alternate image frames are illuminated with an alternating series of colors, such as red, green, and blue. The image frames for each respective color is referred to as a color sub-frame. In this method, referred to as the field sequential color method, if the color sub-frames are alternated at frequencies in excess of 20 Hz, the human brain will average the alternating frame images into the perception of an image having a broad and continuous range of colors.

If the display apparatus 100 is designed for the digital switching of shutters 108 between open and closed states, the controller 156 can control the addressing sequence and/or the time intervals between image frames to produce images 104 with appropriate gray scale. The process of generating varying levels of grayscale by controlling the amount of time a shutter 108 is open in a particular frame is referred to as time division gray scale. In one embodiment of time division gray scale, the controller 156 determines the time period or the fraction of time within each frame that a shutter 108 is allowed to remain in the open state, according to the illumination level or gray scale desired of that pixel. In another embodiment of time division gray scale, the frame time is split into, for instance, 15 equal time-duration sub-frames according to the illumination levels appropriate to a 4-bit binary gray scale. The controller 156 then sets a distinct image into each of the 15 sub-frames. The brighter pixels of the image are left in the open state for most or all of the 15 sub-frames, and the darker pixels are set in the open state for only a fraction of the sub-frames. In another embodiment of time-division gray scale, the controller circuit 156 alters the duration of a series of sub-frames in proportion to the bit-level significance of a coded gray scale word representing an illumination value. That is, the time durations of the sub-frames can be varied according to the binary series 1,2,4,8 ... The shutters 108 for each pixel are then set to either the open or closed state in a particular sub-frame according to the bit value at a corresponding position within the binary word for its intended gray level.

A number of hybrid techniques are available for forming gray scale which combine the time division techniques described above with the use of either multiple shutters 108 per pixel or via the independent control of backlight intensity. These techniques are described further below.

Addressing the control matrix, i.e., supplying control information to the array of pixels, is, in one implementation, accomplished by a sequential addressing of individual lines, sometimes referred to as the scan lines or rows of the matrix. By applying V_{we} to the write-enable interconnect 110 for a given scan line and selectively applying data voltage pulses V_{d} to the data interconnects 112 for each column, the control matrix can control the movement of each shutter 108 in the write-enabled row. By repeating these steps for each row of pixels in the display apparatus 100, the control matrix can complete the set of movement instructions to each pixel in the display apparatus 100.

In one alternative implementation, the control matrix applies V*_{we}* to the write-enable interconnects 110 of multiple rows of pixels simultaneously, for example, to take advantage of similarities between movement instructions for pixels in different rows of pixels, thereby decreasing the amount of time needed to provide movement instructions to all pixels in the display apparatus 100. In another alternative implementation, the rows are addressed in a non-sequential , e.g., in a pseudo-randomized order, in order to minimize visual artifacts that are sometimes produced, especially in conjunction with the use of a coded time division gray scale.

In alternative embodiments, the array of pixels and the control matrices that control the pixels incorporated into the array may be arranged in configurations other than rectangular rows and columns. For example, the pixels can be arranged in hexagonal arrays or curvilinear rows and columns. In general, as used herein, the term scan-line shall refer to any plurality of pixels that share a write-enabling interconnect.

### Shutter Assemblies

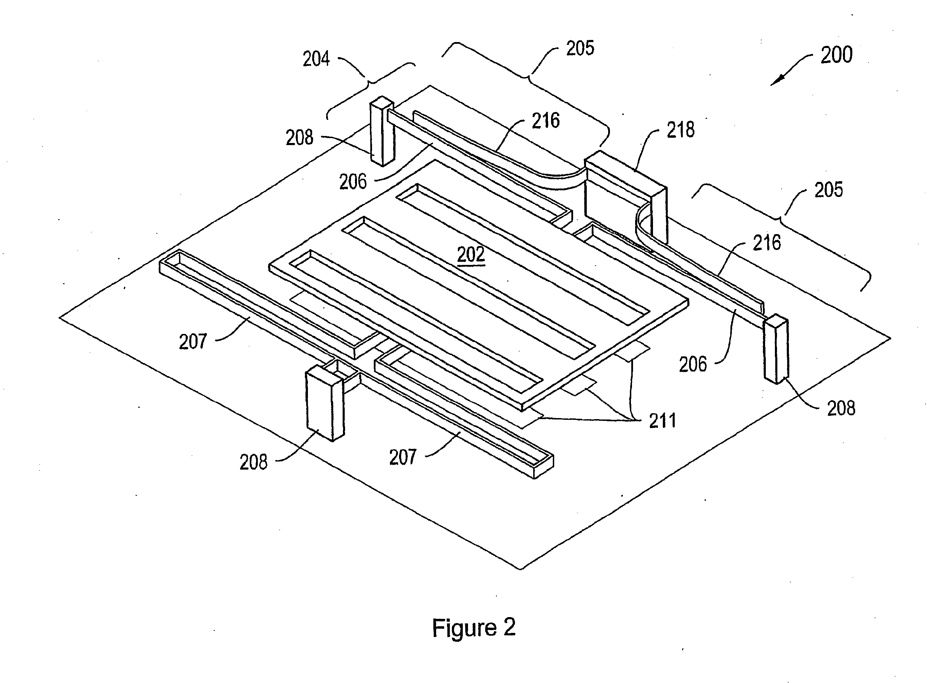

Figure 2 is diagram of an illustrative shutter assembly 200 suitable for incorporation into the display apparatus 100 of Figure 1. The shutter assembly 200 includes a shutter 202 coupled to an actuator 204. The actuator 204 is formed from two separate compliant electrode beam actuators 205. The shutter 202 couples on one side to the actuators 205. The actuators 205 move the shutter transversely over a surface in a plane of motion which is substantially parallel to the surface. The opposite side of the shutter couples to a spring 207 which provides a restoring force opposing the forces exerted by the actuator 204.

Each actuator 205 includes a compliant load beam 206 connecting the shutter 202 to a load anchor 208. The load anchors 208 along with the compliant load beams 206 serve as mechanical supports, keeping the shutter 202 suspended proximate to the surface. The surface includes one or more apertures 211 for admitting the passage of light. The load anchors 208 physically connect the compliant load beams 206 and the shutter 202 to the surface and electrically connect the load beams 206 to a bias voltage, in some instances, ground.

Each actuator 204 also includes a compliant drive beam 216 positioned adjacent to each load beam 206. The drive beams 216 couple at one end to a drive beam anchor 218 shared between the drive beams 216. The other end of each drive beam 216 is free to move. Each drive beam 216 is curved such that it is closest to the load beam 206 near the free end of the drive beam 216 and the anchored end of the load beam 206.

In operation, a display apparatus incorporating the shutter assembly 200 applies an electric potential to the drive beams 216 via the drive beam anchor 218. A second electric potential may be applied to the load beams 206. The resulting potential difference between the drive beams 216 and the load beams 206 pulls the free ends of the drive beams 216 towards the anchored ends of the load beams 206, and pulls the shutter ends of the load beams 206 toward the anchored ends of the drive beams 216, thereby driving the shutter 202 transversely towards the drive anchor 218. The compliant members 206 act as springs, such that when the voltage across the beams 206 and 216 potential is removed, the load beams 206 push the shutter 202 back into its initial position, releasing the stress stored in the load beams 206.

A shutter assembly, such as shutter assembly 200, that incorporates a passive restoring force mechanism is generally referred to herein as an elastic shutter assembly. A number of elastic restoring mechanisms can be built into or in conjunction with electrostatic actuators, the compliant beams illustrated in shutter assembly 200 providing just one example. Elastic shutter assemblies can be constructed such that in an unactivated, or relaxed state, the shutters are either opened or closed. For illustrative purposes, it is assumed below that the elastic shutter assemblies described herein are constructed to be closed in their relaxed state.

Depending on the curvature of the drive beams 216 and load beams 206, the shutter assembly may either be controlled in a analog or digital fashion. When the beams have a strongly non-linear or divergent curvature (beams diverging with more than a second order curvature) the application of an analog actuation voltage across drive beams 216 and the load beams 206 results in a predetermined incremental displacement of the shutter 202. Thus, the magnitude of shutter 202 displacement can be varied by applying different magnitude voltages across the drive beams 216 and the load beams 206. Shutter assemblies 200 including more curved beams are therefore used to implement analog gray scale processes.

For shutter assemblies with less curved beams (beams diverging with second order curvature or less), the application of a voltage across the drive beams 216 and the load beams 206 results in shutter displacement if the voltage is greater than a threshold voltage (Vₐₜ). Application of a voltage equaling or exceeding Vₐₜ results in the maximum shutter displacement. That is, if the shutter 202 is closed absent the application of a voltage equaling or exceeding the threshold, application of any voltage equaling or exceeding Vₐₜ fully opens the shutter. Such shutter assemblies are utilized for implementing time division and/or digital area division gray scale processes in various embodiments of the display apparatus 100.

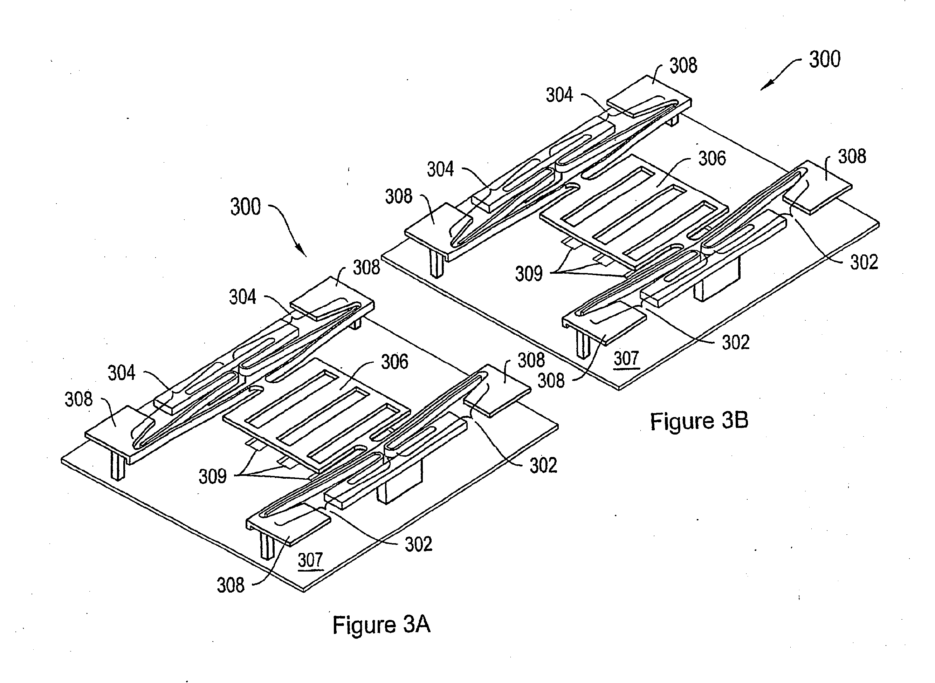

Figures 3A and 3b are isometric views of a second shutter assembly 300 suitable for use in the display apparatus 100. Figure 3A is a view of the second shutter assembly 300 in an open state. Figure 3B is a view of the second shutter assembly 300 in a closed state. In contrast to the shutter assembly 200, shutter assembly 300 includes actuators 302 and 304 on either side of a shutter 306. Each actuator 302 and 304is independently controlled. A first actuator, a shutter-open actuator 302, serves to open the shutter 306. A second actuator, the shutter-close actuator 304, serves to close the shutter 306. Both actuators 302 and 304 are preferably compliant beam electrode actuators. The actuators 302 and 304 open and close the shutter 306 by driving the shutter 306 substantially in a plane parallel to a surface 307 over which the shutter is suspended. The shutter 306 is suspended over the surface at via anchors 308 attached to the actuators 302 and 304. The inclusion of supports attached to both ends of the shutter 306 along its axis of movement reduces out of plane motion of the shutter 306 and confines the motion substantially to the desired plane of motion. The surface 307 includes at least one aperture 309 for admitting the passage of light through the surface 307.

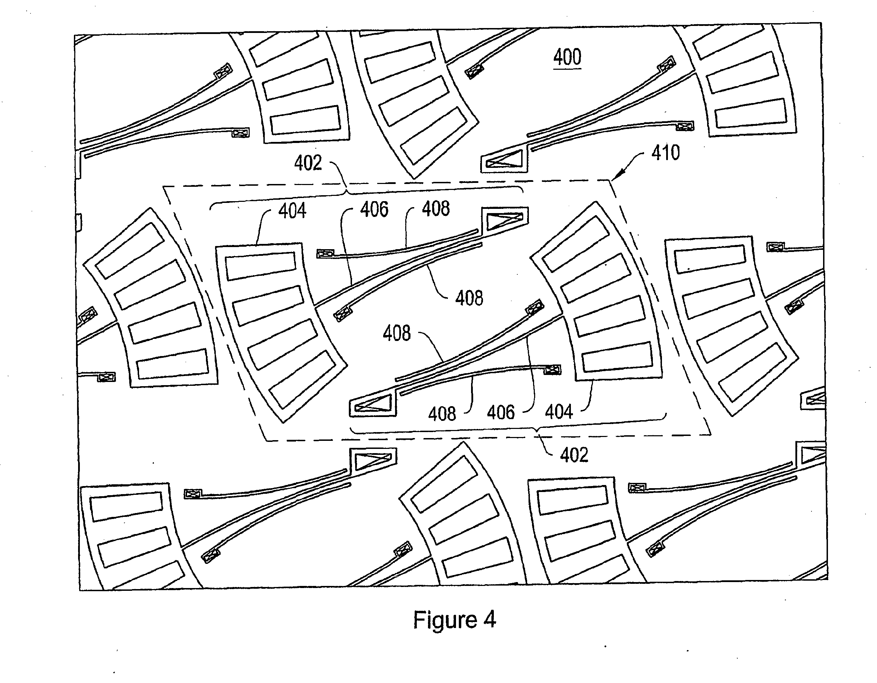

Figure 4 is a top view of an array 400 of shutter assemblies 402 suitable for inclusion in the display apparatus 100. Each shutter assembly 402 includes a shutter 404, a load beam 406, and two drive beams 408. As with the shutter assemblies 200 and 300 described above, the shutter assemblies 402 modulate light by transversely driving their corresponding shutters 404 such that the shutters 404 selectively interfere with light passing through apertures in a surface over which the shutters 404 are driven.

To drive one of the shutters in one of the shutter assemblies, a voltage is applied across the load beam 406 and one of the drive beams 408. To generate the voltage, a first electric potential is applied to the selected drive beam and a second electric potential is applied to the load beam 406 and to the shutter 404. The first and second electric potentials may be of the same polarity or they may be of opposite polarities. They also may have the same magnitude or they may have different magnitudes. Either potential may also be set to ground. In order for the shutter assembly to actuate (i.e., for the shutter to change its position) the difference between the first and second potentials must equal or exceed an actuation threshold voltage Vₐₜ.

In most embodiments, Vₐₜ is reached by applying voltages of substantially different magnitudes to the selected drive beam and the load beam. For example, assuming Vₐₜ is 40V, the display apparatus 100 may apply 30V to the drive beam and -10V to the load beam, resulting in a potential difference of 40V. For purposes of controlling power dissipation, however, it is also important to consider and control the absolute voltage applied to each electrode with respect to the ground or package potential of the display. The power required to apply electric potentials to an array of actuators is proportional to the capacitance seen by the voltage source (P=1/2 fCV²), where f is the frequency of the drive signal, V is the voltage of the source and C is the total capacitance seen by the source. The total capacitance has several additive components, including the capacitance that exists between the load beam and drive beam, the source-drain capacitance of transistors along an interconnect line between the voltage source and the actuator (particularly for those transistors whose gates are closed), the capacitance between the interconnect line and its surroundings, including neighboring shutter assemblies and/or crossover lines, and the capacitance between the load or drive beams and their surroundings, including neighboring shutter assemblies or the display package. Since the load beam 406 is electrically coupled to the shutter 404, the capacitance of the load beam 406 includes the capacitance of the shutter 404. Since the shutter comprises typically a large fraction of area of the pixel, the capacitance between the load beam and its surroundings can represent a significant fraction of the total capacitance seen by the voltage source. Furthermore, because of the difference in area of the combined load beam 406 and shutter 404 and the area of the drive beam 408 is significant, the capacitance between the load beam and its surroundings is typically much larger than that between the drive beam and its surroundings. As a result, the CV² power loss experienced by voltage sources connected to either the drive or the load beams will be significantly different even if the range of their voltage excursions were to be the same. For this reason, it is generally advantageous to connect the higher capacitance end of the actuator, i.e., the load beam, to a voltage source that either does not change in voltage significantly with respect to ground or package potential, or to a voltage source that does not change voltage with the highest frequencies required by the drive system.. For example, if a 40 volt difference is required between the load beam 406 and the drive beam 408 to actuate the actuator, it will be advantageous if the voltage difference between the drive beam and the ground or case potential represents at least half if not most of the 40 volts.

The dashed line overlaid on the shutter assembly array 400 depicts the bounds of a single pixel 410. The pixel 410 includes two shutter assemblies 402, each of which may be independently controlled. By having two shutter assemblies 402 per pixel 410, a display apparatus incorporating the shutter assembly array 400 can provide three levels of gray scale per pixel using area division gray scale. More particularly, the pixel could be driven into the following states: both shutter assemblies closed; one shutter assembly opened and one shutter assembly closed: or both shutter assemblies open. Thus, the resulting image pixel can be off, at half brightness, or at full brightness. By having each shutter assembly 402 in the pixel 410 have different sized apertures, a display apparatus could provide yet another level of gray scale using only area division gray scale. The shutter assemblies 200, 300 and 402 of Figures 2, 3 and 4 can be made bi-stable. That is, the shutters can exist in at least two equilibrium positions (e.g. open or closed) with little or no power required to hold them in either position. More particularly, the shutter assembly 300 can be mechanically bi-stable. Once the shutter of the shutter assembly 300 is set in position, no electrical energy or holding voltage is required to maintain that position. The mechanical stresses on the physical elements of the shutter assembly 300 can hold the shutter in place.

The shutter assemblies 200, 300, and 402 can also be made electrically bi-stable. In an electrically bi-stable shutter assembly, there exists a range of voltages below the actuation voltage of the shutter assembly, which if applied to a closed actuator (with the shutter being either open or closed), hold the actuator closed and the shutter in position, even if an opposing force is exerted on the shutter. The opposing force may be exerted by a spring attached to an opposite end of the shutter, such as spring 207 in shutter assembly 200, or the opposing force may be exerted by an opposing actuator. The minimum voltage needed to maintain a shutter's position against such an opposing force is referred to as a maintenance voltage Vₘ.

Electrical bi-stability arises from the fact that the electrostatic force across an actuator is a strong function of position as well as voltage. The beams of the actuators in the shutter assemblies 200, 300, and 402 act as capacitor plates. The force between capacitor plates is proportional to 1/d² where d is the local separation distance between capacitor plates. In a closed actuator, the local separation between actuator beams is very small. Thus, the application of a small voltage can result in a relatively strong force between the actuator beams. As a result, a relatively small voltage, such as Vₘ, can keep the actuator closed, even if other elements exert an opposing force on the actuator.

In shutter assemblies, such as 300, that provide for two separately controllable actuators (for the purpose of opening and closing the shutter respectively), the equilibrium position of the shutter will be determined by the combined effect of the voltage differences across each of the actuators. In other words, the electrical potentials of all three terminals (the shutter open drive beam, the shutter close drive beam, and the shutter/load beams), as well as shutter position, must be considered to determine the equilibrium forces on the shutter.

For an electrically bi-stable system, a set of logic rules can describe the stable states, and can be used to develop reliable addressing or digital control schemes for the shutter. These logic rules are as follows:

Let Vₛ be the electrical potential on the shutter or load beam. Let Vₒ be the electrical potential on the shutter-open drive beam. Let V_{c} be the electrical potential on the shutter-close drive beam. Let the expression Nₒ-Vₛ/ refer to the absolute value of the voltage difference between the shutter and the shutter-open drive beam. Let Vₘ be the maintenance voltage. Let Vₐₜ be the actuation threshold voltage, i.e., the voltage necessary to actuate an actuator absent the application of Vₘ to an opposing drive beam. Let Vₘₐₓ be the maximum allowable potential for Vₒ and V_{c}. Let Vₘ < Vₐₜ<Vₘₐₓ. Then, assuming Vₒ and V_{c} remain below Vₘₐₓ:
1. If /Vₒ-Vₛ/<Vₘ and /V_{c}-Vₛ/<Vₘ
   Then the shutter will relax to the equilibrium position of its mechanical spring.
2. If /Vₒ-Vₛ/ > Vₘ and /V_{c}-Vₛ/ > Vₘ
   Then the shutter will not move, i.e. it will hold in either the open or the closed state, whichever position was established by the last actuation event.
3. If Nₒ-V_{s/} > Vₐₜ and /V_{c}-Vₛ/ < Vₘ
   Then the shutter will move into the open position.
4. If /Vₒ-Vₛ/<Vₘ and /V_{c}-Vₛ/ > Vₐₜ
   Then the shutter will move into the closed position.

Following rule 1, with voltage differences on each actuator near to zero, the shutter will relax. In many shutter assemblies the mechanically relaxed position is only partially open or closed, and so this voltage condition is preferably avoided in an addressing scheme.

The condition of rule 2 makes it possible to include a global actuation function into an addressing scheme. By maintaining a shutter voltage which provides beam voltage differences that are at least the maintenance voltage, the absolute values of the shutter open and shutter closed potentials can be altered or switched in the midst of an addressing sequence over wide voltage ranges (even where voltage differences exceed Vₐₜ) with no danger of unintentional shutter motion.

The condition of rules 3 and 4 are those that are generally targeted during the addressing sequence to ensure the bi-stable actuation of the shutter.

The maintenance voltage difference, Vₘ, can be designed or expressed as a certain fraction of the actuation threshold voltage, Vₐₜ. For systems designed for a useful degree of bi-stability the maintenance voltage can exist in a range between 20% and 80% of Vₐₜ. This helps ensure that charge leakage or parasitic voltage fluctuations in the system do not result in a deviation of a set holding voltage out of its maintenance rang e - a deviation which could result in the unintentional actuation of a shutter. In some systems an exceptional degree of bi-stability or hysteresis can be provided, with Vₘ existing over a range of 2% to 98% of Vₐₜ. In these systems, however, care must be taken to ensure that an electrode voltage condition of V < Vₘ can be reliably obtained within the addressing and actuation time available.

### Control Matrices and Methods of Operation Thereof

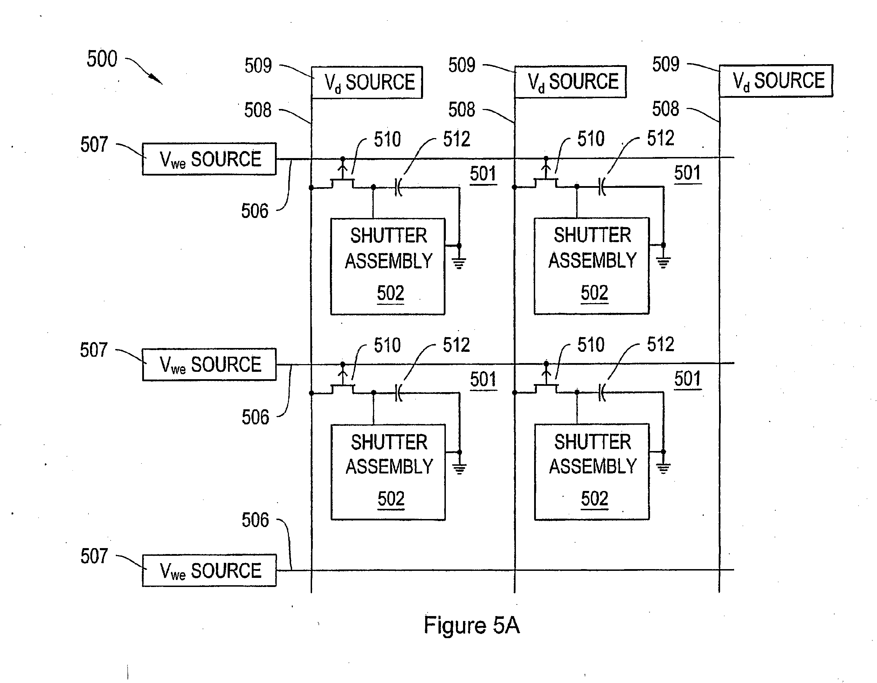

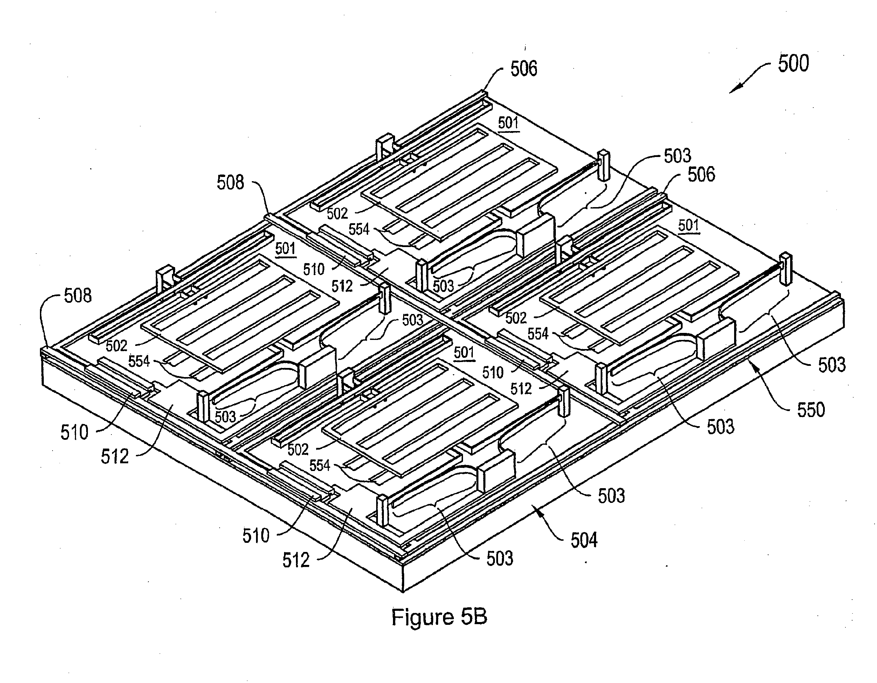

Figure 5A is a conceptual diagram of a control matrix 500 suitable for inclusion in the display apparatus 100 for addressing an array of pixels. Figure 5B is an isometric view of a portion of an array of pixels including the control matrix 500. Each pixel 501 includes an elastic shutter assembly 502, such as shutter assembly 200, controlled by an actuator 503.

The control matrix 500 is fabricated as a diffused or thin-film-deposited electrical circuit on the surface of a substrate 504 on which the shutter assemblies 502 are formed. The control matrix 500 includes a scan-line interconnect 506 for each row of pixels 501 in the control matrix 500 and a data-interconnect 508 for each column of pixels 501 in the control matrix 500. Each scan-line interconnect 506 electrically connects a write-enabling voltage source 507 to the pixels 501 in a corresponding row of pixels 501. Each data interconnect 508 electrically connects an data voltage source, ("Vd source") 509 to the pixels 501 in a corresponding column of pixels. In control matrix 500, the data voltage V_{d} provides the majority of the energy necessary for actuation. Thus, the data voltage source 509 also serves as an actuation voltage source.

For each pixel 501 or for each shutter assembly in the array, the control matrix 500 includes a transistor 510 and a capacitor 512. The gate of each transistor is electrically connected to the scan-line interconnect 506 of the row in the array in which the pixel 501 is located. The source of each transistor 510 is electrically connected to its corresponding data interconnect 508.. The shutter assembly 502 includes an actuator with two electrodes. The two electrodes have significantly different capacitances with respect to the surroundings. The transistor connects the data interconnect 508 to the actuator electrode having the lower capacitance. More particularly the drain of each transistor 510 is electrically connected in parallel to one electrode of the corresponding capacitor 512 and to the lower capacitance electrode of the actuator. The other electrode of the capacitor 512 and the higher capacitance electrode of the actuator in shutter assembly 502 are connected to a common or ground potential.In operation, to form an image, the control matrix 500 write-enables each row in the array in sequence by applying V_{we} to each scan-line interconnect 506 in turn. For a write-enabled row, the application of V_{we} to the gates of the transistors 510 of the pixels 501 in the row allows the flow of current through the data interconnects 508 through the transistors to apply a potential to the actuator of the shutter assembly 502. While the row is write-enabled, data voltages V_{d} are selectively applied to the data interconnects 508. In implementations providing analog gray scale, the data voltage applied to each data interconnect 508 is varied in relation to the desired brightness of the pixel 501 located at the intersection of the write-enabled scan-line interconnect 506 and the data interconnect 508. In implementations providing digital control schemes, the data voltage is selected to be either a relatively low magnitude voltage (i.e., a voltage near ground) or to meet or exceed Vₐₜ (the actuation threshold voltage). In response to the application of Vₐₜ to a data interconnect 508, the actuator in the corresponding shutter assembly 502 actuates, opening the shutter in that shutter assembly 502. The voltage applied to the data interconnect 508 remains stored in the capacitor 512 of the pixel even after the control matrix 500 ceases to apply V_{we} to a row. It is not necessary, therefore, to wait and hold the voltage V_{we} on a row for times long enough for the shutter assembly 502 to actuate; such actuation can proceed after the write-enabling voltage has been removed from the row. The voltage in the capacitors 510 in a row remain substantially stored until an entire video frame is written, and in some implementations until new data is written to the row.

The control matrix 500 can be manufactured through use of the following sequence of processing steps:
First an aperture layer 550 is formed on a substrate 504. If the substrate 504 is opaque, such as silicon, then the substrate 504 serves as the aperture layer 550, and aperture holes 554 are formed in the substrate 504 by etching an array of holes through the substrate 504. If the substrate 504 is transparent, such as glass, then the aperture layer 550 may be formed from the deposition of a light blocking layer on the substrate 504 and etching of the light blocking layer into an array of holes. The aperture holes 554 can be generally circular, elliptical, polygonal, serpentine, or irregular in shape. If the light blocking layer is also made of a reflective material, such as a metal, then the aperture layer 550 can act as a mirror surface which recycles non-transmitted light back into an attached backlight for increased optical efficiency. Reflective metal films appropriate for providing light recycling can be formed by a number of vapor deposition techniques including sputtering, evaporation, ion plating, laser ablation, or chemical vapor deposition. Metals that are effective for this reflective application include, without limitation, Al, Cr, Au, Ag, Cu, Ni, Ta, Ti, Nd, Nb, Si, Mo and/or alloys thereof. Thicknesses in the range of 30 nm to 1000 nm are sufficient.
Second, an intermetal dielectric layer is deposited in blanket fashion over the top of the aperture layer metal 550.
Third, a first conducting layer is deposited and patterned on the substrate. This conductive layer can be patterned into the conductive traces of the scan-line interconnect 506. Any of the metals listed above, or conducting oxides such as indium tin oxide, can have sufficiently low resistivity for this application. A portion of the scan line interconnect 506 in each pixel is positioned to so as to form the gate of a transistor 510.
Fourth, another intermetal dielectric layer is deposited in blanket fashion over the top of the first layer of conductive interconnects, including that portion that forms the gate of the transistor 510. Inteimetal dielectrics sufficient for this purpose include SiO₂, S₁₃N₄, and Al₂O₃ with thicknesses in the range of 30 nm to 1000 nm.
Fifth, a layer of amorphous silicon is deposited on top of the intermetal dielectric and then patterned to form the source, drain and channel regions of a thin film transistor active layer. Alternatively this semiconducting material can be polycrystalline silicon.
Sixth, a second conducting layer is deposited and patterned on top of the amorphous silicon. This conductive layer can be patterned into the conductive traces of the data interconnect 508. The same metals and/or conducting oxides can be used as listed above. Portions of the second conducting layer can also be used to form contacts to the source and drain regions of the transistor 510.
Capacitor structures such as capacitor 512 can be built as plates formed in the first and second conducting layers with the intervening dielectric material.
Seventh, a passivating dielectric is deposited over the top of the second conducting layer.
Eighth, a sacrificial mechanical layer is deposited over the top of the passivation layer. Vias are opened into both the sacrificial layer and the passivation layer such that subsequent MEMS shutter layers can make electrical contact and mechanical attachment to the conducting layers below.
Ninth, a MEMS shutter layer is deposited and patterned on top of the sacrificial layer. The MEMS shutter layer is patterned with shutters 502 as well as actuators 503 and is anchored to the substrate 504 through vias that are patterned into the sacrificial layer. The pattern of the shutter 502 is aligned to the pattern of the aperture holes 554 that were formed in the first aperture layer 550. The MEMS shutter layer may be composed of a deposited metal, such as Au, Cr or Ni, or a deposited semiconductor, such as polycrystalline, silicon or amorphous silicon, with thicknesses in the range of 300 nanometers to 10 microns.
Tenth, the sacrificial layer is removed such that components of the MEMS shutter layer become free to move in response to voltages that are applied across the actuators 503.
Eleventh, the sidewalls of the actuator 503 electrodes are coated with a dielectric material to prevent shorting between electrodes with opposing voltages.

Many variations on the above process are possible. For instance the reflective aperture layer 550 of step 1 can be combined into the first conducting layer. Gaps are patterned into this conducting layer to provide for electrically conductive traces within the layer, while most of the pixel area remains covered with a reflective metal. In another embodiment, the transistor 510 source and drain terminals can be placed on the first conducting layer while the gate terminals are formed in the second conducting layer. In another embodiment the semiconducting amorphous or polycrystalline silicon is placed directly below each of the first and second conducting layers. In this embodiment vias can be patterned into the intermetal dielectric so that metal contacts can be made to the underlying semiconducting layer.

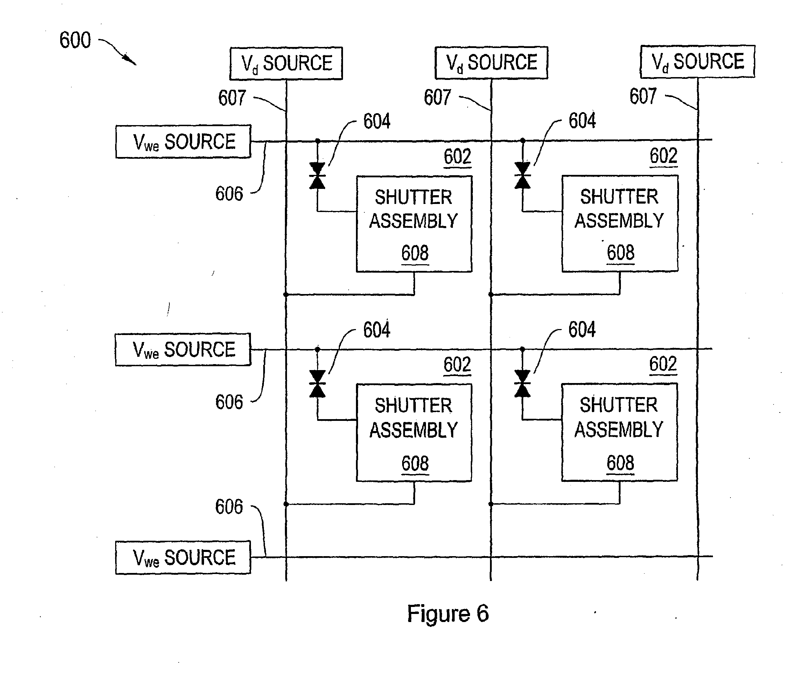

Figure 6 is a diagram of a second control matrix 600 suitable for inclusion in the display apparatus 100 for addressing an array of pixels 602. The pixels 602 in the control matrix 600 forgo the use of a transistor and capacitor, as are included in control matrix 500, in favor of a metal-insulator-metal ("MIM") diode 604. The control matrix 600 includes a scan-line interconnect 606 for each row of pixels 602 in the control matrix 600 and a data interconnect 607 for each column of pixels in the control matrix 600. Each scan-line interconnect 606 electrically connects to one terminal of the MIM diode 604 of each pixel 602 in its corresponding row of pixels 602. The other terminal of the MIM diode 604 in a pixel 602 electrically connects to one of the two electrodes of a shutter assembly 608, such as shutter assembly 200, in the pixel 602.

In operation the MIM diode 604 acts as a non-linear switch element which prevents current from flowing to the shutter assembly 609 unless the voltage presented between the scan line interconnect 606 and the data line interconnect 607 exceeds a threshold voltage V_{diode}. Therefore, if voltage pulses provided by the data line interconnect 607 do not exceed V_{diode}, such data pulses will not effect that actuation of shutter assemblies 608 connected along the data line. If, however, a write-enabling voltage V_{we}, is applied to a scan line interconnect 606 such that a voltage difference in excess of V_{diode} appears between the scan line interconnect 606 and any of the several data line interconnects 607 that cross the scan line interconnect 606, then the shutters at the intersection of the that scan line interconnect 606 and those data line interconnects 607 will receive their charge and can be actuated. In implementations providing analog gray scale, the data voltage applied to each data interconnect 607 is varied in relation to the desired brightness of the pixel 602 located at the intersection of the write-enabled scan-line interconnect 606 and the data interconnect 607. In implementations providing a digital control schemes, the data voltage is selected to be either close to V_{we} (i.e., such that little or no current flows through the diode 604) or high enough such that V_{we} - V_{diode} will meet or exceed Vₐₜ (the actuation threshold voltage).

In other implementations the MIM diode 604 can be placed between the shutter assembly 608 and the data line interconnect 607. The method of operation is the same as described above. In other implementations, two MIM diodes are employed, each connected to a separate and adjacent scan line. One electrode of the shutter assembly is connected to each of the MIM diodes on the side opposite of their respective scan lines such that the voltage appearing on the shutter electrode is almost ½ of the voltage difference between the two scan lines. In this fashion it is easier to fix the potential of one of the electrodes of the actuator to a known zero or common potential.

The two electrodes of the shutter assembly 608 in the pixel 602 have significantly different capacitances with respect to the ground or case potential. Of these two electrodes, the higher capacitance electrode is preferably connected to the scan line interconnect 606 (optionally, as shown, with a diode connected between shutter 608 and the scan line interconnect 606), since the scan line typically requires smaller voltage changes (with respect to ground) than are typically required of the data line interconnect 607. The data interconnect 607 electrically connects to the lower-capacitance electrode of the shutter assembly 608.

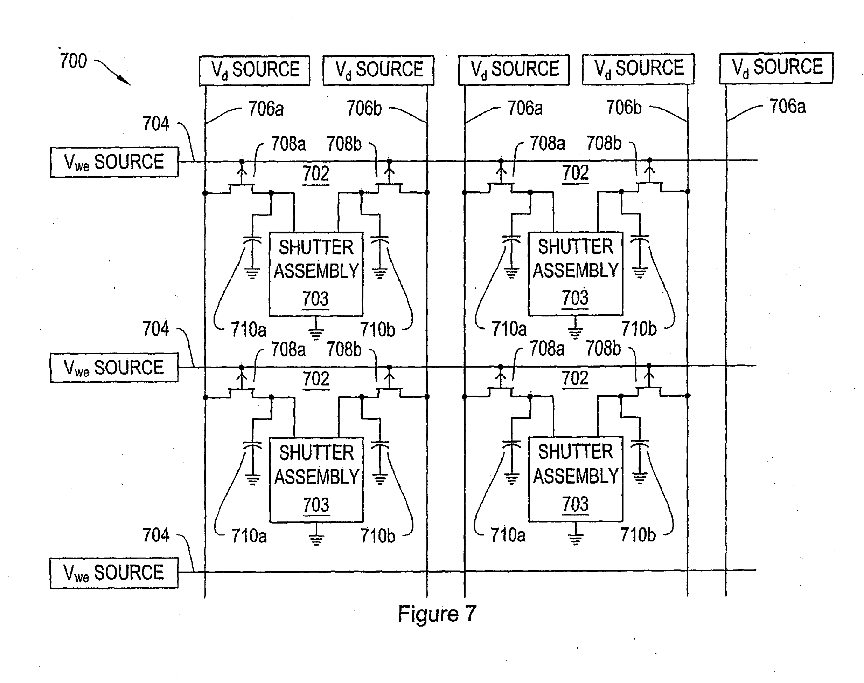

Figure 7 is a diagram of a third control matrix 700 for controlling pixels 702 incorporating shutter assemblies 703 with both open and close actuators, such as shutter assemblies 300 and 402. The control matrix 700 includes scan-line interconnect 704 per row of pixels 702 in the control matrix 700 and two data interconnects 706a and 706b addressing each column of pixels 702 in the control matrix 700. One of the data interconnects is a shutter-open interconnect 706a and the other data interconnect is a shutter-close interconnect 706b.

For a given pixel 702 in the control matrix 700, the pixel 702 includes two transistor-capacitor pairs, one pair for each data-interconnect 706a and 706b addressing the pixel. The gates of both transistors in the pixel 702 electrically couple to the scan-line interconnect 704 corresponding to the row of the control matrix 700 in which the pixel 702 is located. The source of one of the transistors, the shutter-open transistor 708a, electrically connects to the shutter-open data-interconnect 706a of the column in which the pixel 702 is located. The drain of the shutter-open transistor 708a electrically connects, in parallel, to one electrode of one of the capacitors, the shutter-open capacitor 710a, and to one electrode of the shutter-open actuator of the shutter assembly 703 of the pixel. The other electrode of the shutter-open capacitor 710a electrically connects to ground or to a bias interconnect set to a common voltage among the pixels 702.

Similarly, the source of the other transistor in the pixel 702, the shutter-close transistor 708b, electrically connects to the shutter-close data interconnect 706b of the column in which the pixel 702 is located. The drain of the shutter-close transistor 708b electrically connects, in parallel, to the other of the capacitors in the pixel, the shutter-close capacitor 710b, and to one of the electrodes of the shutter-close actuator of the shutter assembly 703.

Both the shutter-open actuator and the shutter-close actuator of the shutter assembly 703 include two electrodes. One electrode in each actuator has a significantly higher capacitance than the other. The drains of the shutter-open and the shutter-close transistors electrically connect to the lower-capacitance electrodes of their corresponding actuators. The ground or bias interconnect, if any, electrically connects to the higher-capacitance electrode.

The control matrix of Figure 7 employs n-channel transistors. Other embodiments are possible that employ p-channel MOS transistors. In other implementations, the transistors 708a and 708b can be replaced by MIM diodes or other non-linear circuit elements or switches. In other implementations the capacitors 710a and 710b can be removed altogether, their function replaced by the effective capacitance of the shutter-open and shutter-closed actuators.

In the case where multiple shutters are to be actuated within each pixel, a separate pair of shutter-open data interconnects and shutter-closed data interconnects, along with associated transistors and capacitors, can be provided for each shutter within the pixel.

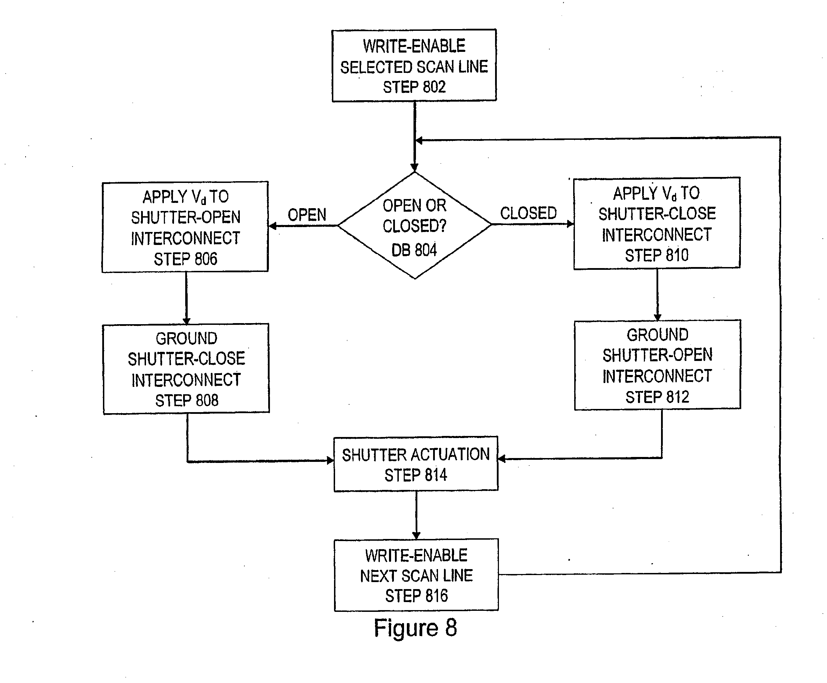

Figures 8 is flow chart of a method 800 of addressing the pixels 702 controlled by the control matrix 700 of Figure 7 to form an image frame. The steps carried out to address a single image frame is referred to collectively as a "frame addressing cycle." The method begins by write-enabling the first scan line in the display (step 802). To do so, the control matrix 700 applies V_{we}, (e.g., +45V for nMOS transistors or -45V for pMOS transistors), to the scan line interconnect 704 in the control matrix 700 corresponding to the first row in the control matrix and grounds the other scan-line interconnects 704.

The control matrix 700 then writes data to each pixel 702 in the write-enabled scan line (decision block 804 to step 812). The data corresponds to the desired states of the shutter assemblies 703 in those pixels 702. For ease of understanding, the data writing process (decision block 804 to step 812) is described below in relation to a single pixel 702 in a selected column in the write-enabled scan line. At the same time data is written to this single pixel 702, the control matrix 700 also writes data in the same fashion to the remaining pixels 702 in the write-enabled scan line.

To write data to a pixel 702 at the intersection of a selected column of the control matrix 700 and the write-enabled scan line first, at decision block 804, it is determined if the shutter assembly 703 in question is to be open in the next image frame or closed. If the shutter assembly 703 is to be open, the control matrix 700 applies a data voltage, V_{d}, to the shutter-open interconnect 706a of the selected column (step 806). V_{d} is selected to raise the voltage across the electrodes of the shutter-open actuator in the shutter assembly 703 to equal or exceed the voltage necessary for actuation, Vₐₜ. At about the same time that the control matrix 700 applies V_{d} to the shutter-open interconnect 706a of the selected column (step 806), the control matrix 700 grounds the shutter-close interconnect 706b of the column (step 808).

If, at decision block 804, it is determined that the shutter assembly 703 is to be closed, the control matrix 700 applies the data voltage V_{d} to the shutter-close interconnect 706b (step 810) and grounds the shutter-open interconnect 706a of the column (step 812). Once the voltage across the electrodes of the desired actuator builds up to Vₐₜ, the actuator, if not previously in the desired position, actuates (step 814), moving the shutter in the shutter assembly 703 to the desired position.

After the data is written to the pixels 702 in the scan line in steps 806-812, the control matrix 700 grounds the scan-line interconnect 704 (step 814) and write-enables the next scan line (step 816). The process repeats until all pixels 702 in the control matrix 700 are addressed. In one implementation, before addressing the first scan line in the control matrix 700, a backlight to which the control matrix is affixed is turned off. Then, after all scan lines in the control matrix 700 have been addressed, the backlight is turned back on. Synchronizing the switching of the backlight off and on with the beginning and end of a period during which a frame is addressed improves the color purity of the resultant image since then the backlight is on only when all pixels are already set to their correct image state.

An actuation event is determined by noting the voltage differences that appear across the shutter-open actuator and the shutter closed actuator. For consistent actuation, generally one of these voltage differences will be kept close to zero, or at least below a certain maintenance voltage Vₘ, while the absolute value of the other voltage difference will exceed the actuation voltage. Consistent with the actuation conditions described with respect to Figures 2, 3, and 4, the polarities of applied voltages, such as V_{d} , can be either negative or positive, and the voltage applied to the common potential (indicated as "ground" in Figure 7 or at step 812), can be any voltage either positive or negative.

In some implementations, it is advantageous to periodically or occasionally reverse the sign of the voltages that appear across the actuators of shutter assembly 703 without otherwise altering the method 800 of addressing the pixels. In one case, polarity reversal can be accomplished by maintaining the common electrode of all shutters 703 at a potential close to zero while reversing the polarity of the data voltage, V_{d}. In another case polarity reversal can be accomplished by setting the common voltage to V_{common}, where V_{common} is equal to or greater than Vₐₜ, and then providing a voltage source such that the data voltage either alternates between V_{common} and 2* Vₐₜ or between zero and V_{common}.

Similar advantageous use of polarity reversals and the use of non-zero common voltages can be applied to the control matrices 500 and 600.

The flow chart of method 800 is drawn for the case where only digital information is written into an image frame, i.e. where the shutters are intended to be either open or closed. A similar method of image frame addressing can be employed for the provision of gray scale images built upon loading analog data through data interconnects 706a and 706b. In this case, intermediate voltages are intended to produce only partial openings of the shutters 703. The voltages applied across the shutter-open actuators will tend to move the shutters in directions opposite to the motion induced by voltages across the shutter-closed actuators. There will exist, however, pairs of complementary voltages that, when applied simultaneously across these two actuators, will result in controlled and pre-determined states of partial shutter opening.

The complementary nature of the voltages supplied to either the shutter-open interconnect 706a or the shutter-closed interconnect 706b can be used to advantage if the voltage source electronics are also designed with capability for charge recycling. Taking as an example method 800, which is designed for the loading of digital information to the image frame: voltages loaded into the interconnects at steps 806 or 810 are complementary. That is, if V_{d} is loaded into one of the interconnects, then the other interconnect is usually grounded. Changing the state of the shutter assembly 703 (e.g. from closed to open) is conceptually, then, a matter of transferring the charge stored on one actuator over to its opposing actuator. If the energy lost on each of these transitions is Q*V_{d}, where Q is the charge stored on an actuator, then considerable power savings can be derived if the stored charge is not simply dissipated as waste energy in the voltage source electronics at each transition but is instead recycled for use on the other actuator. While complete charge recycling is difficult, methods for partial recycling are available. For example, the frame addressing method 800 can provide a step where the data line interconnects 706a and 706b are shorted together within the voltage source electronics for a brief period between steps 802 and 804. For the brief period in which these interconnects are shorted they will share the stored charge, so at least a fraction of the previous charge becomes available on whichever of the data line interconnects is to be brought back into its fully charged state.

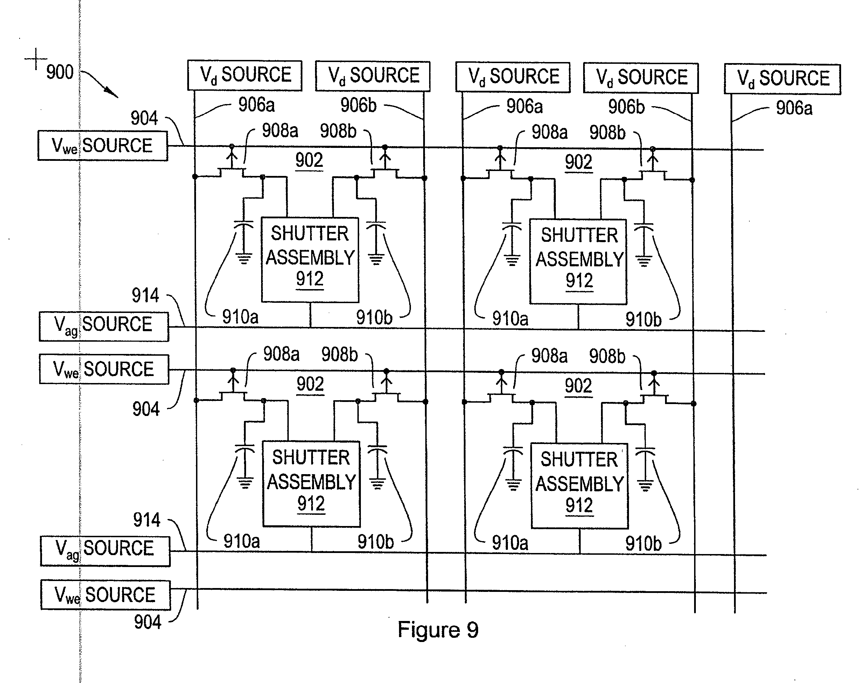

Figure 9 is another illustrative control matrix 900 suitable for addressing an array of pixels in display device 100. The control matrix 900 is similar to the control matrix 700. That is, the control matrix 900 includes a scan-line interconnect 904 for each row of pixels in the control matrix 900 and two data interconnects, a shutter-open interconnect 906a and a shutter-close interconnect 906b, for each column of pixels 902 in the control matrix. In addition, each pixel in the control matrix 900 includes a shutter open-transistor (or optionally a diode or varistor) 908a, a shutter-close transistor (or optionally a diode or varistor) 908b, a shutter-open capacitor 910a, a shutter-close actuator 910b, and a shutter assembly 912. The shutter assembly is either mechanically and/or electrically bi-stable. The control matrix 900, however, includes an additional controllable interconnect, a global actuation interconnect 914. The global actuation interconnect 914 substantially simultaneously provides about the same voltage (a "common voltage") to pixels 902 in at least two rows and two columns of the control matrix 900. In one implementation, the global actuation interconnect 914 provides a common voltage to all pixels 902 in the control matrix 900. The higher capacitance electrode of the actuators of the shutter assemblies 912 in each pixel 902 in the control matrix 900 electrically connect to the global actuation interconnect 914 instead of to ground.

The inclusion of the global actuation interconnect 914 enables the near simultaneous actuation of pixels 902 in multiple rows of the control matrix 900. As a result, all actuators that actuate to set a given image frame (e.g., all shutters that move) can be actuated at the same time, as opposed to a row by row actuation method as described in method 800. The use of a global actuation process temporally decouples the writing of data to a pixel 902 from the actuation the shutter assembly 912 in the pixel 902.

The global actuation feature incorporated into the control matrix 900 takes advantage of the bi-stability of the shutter assemblies 912 in the control matrix 900. Actuating an electrically bi-stable shutter assembly requires that two conditions be satisfied simultaneously, that the absolute value of voltage across one electrode exceeds Vₐₜ, while the absolute value of the voltage across the other electrode is less than a maintenance voltage Vₘ. Thus, for control matrix 900, when a voltage in excess of Vₘ is applied to one actuator of a shutter assembly 912, applying Vₐₜ to the opposing shutter assembly is insufficient to cause the actuator to actuate.

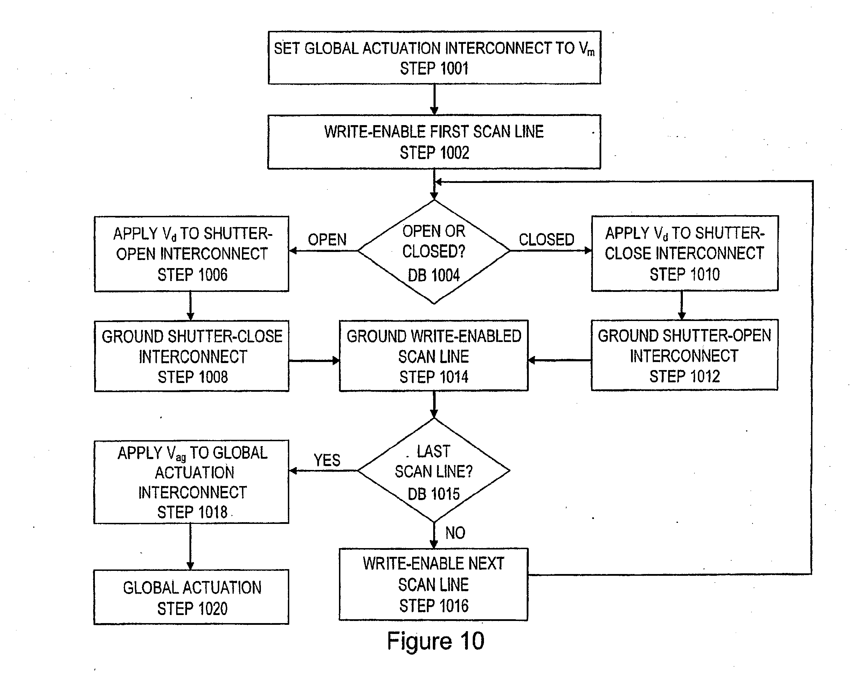

For example, assume that the shutter-open actuator of an electrically bi-stable shutter assembly has a Vₐₜ of 40V. At the same time, the application of 10V maintenance voltage across the electrodes of the shutter-close actuator may keep the shutter of the shutter assembly in a closed position even when 60V is applied across the electrodes of the shutter-open actuator. If a -10V bias potential is applied between the higher-capacitance electrodes of all shutter assemblies and ground via the global common interconnect, while the ground potential is applied to one of the actuation electrodes, then a data voltage of +40V can be applied to the lower-capacitance electrodes of selected actuators in the shutter assemblies, thereby yielding a +50V potential difference across those actuators, without causing the actuators to actuate. Then, by grounding the global common interconnect, the voltage across the electrodes of the selected actuators is reduced to +40V while the voltage across the opposing actuator is removed. As +40V still equals the actuation voltage of the actuator and no maintenance voltage is keeping the opposing actuator in position, the selected actuators all move in concert. Another example is described in further detail below in relation to Figure 10.

Figure 10 is flow chart of a method 1000 of addressing an image frame using the control matrix 900 of Figure 9. The method begins by setting the global common interconnect 914 to a maintenance voltage Vₘ, e.g., ½ Vₐₜ (step 1001) with respect to ground. Then, the control matrix 900 write-enables the first scan line in the display (step 1002). To do so, the control matrix 900 applies V_{we}, e.g., +45V, to a first scan-line interconnect 904 in the control matrix 900 and grounds the other scan-line interconnects 904.

The control matrix 900 then writes data to each pixel 902 in the write-enabled scan line corresponding to the desired states of those pixels in the next image frame (decision block 1004 to step 1012). The data writing process is described below in relation to a single pixel 902 in a selected column in the write-enabled scan line. At the same time that data is written to this single pixel 902, the control matrix 900 also writes data in the same fashion to the remaining pixels 902 in the write-enabled scan line.

To write data to a pixel 902, at decision block 1004, it is determined if the shutter of the shutter assembly 912 in the pixel 902 is to be in the open position in the next image frame or in the closed position. If the shutter is to be in the open position, the control matrix 900 applies a data voltage, V_{d}, to the shutter-open interconnect of the selected column (step 1006). V_{d} is selected such that before the application of a global actuation voltage, V_{ag}, to the global common interconnect 914, the voltage across the shutter-open actuator in the pixel 902 remains insufficient to overcome the bias applied to the shutter-close actuator, but such that after the application of V_{ag} to the global common interconnect 914, the voltage across the electrodes of the shutter-open actuator is sufficient for the shutter-open actuator to actuate. For example, if Vₐₜ equals 40V, Vₘ equals 20V, and V_{ag} equals ground, then V_{d} is selected to be greater than or equal to 40V, but less than the potential that would overcome Vₘ. At the same time that the control matrix 900 applies V_{d} to the shutter-open interconnect 906a of the selected column (step 1006), the control matrix 900 grounds the shutter-close interconnect 906b of the column (step 1008).

If at decision block 1004, it is determined that the shutter is to be in the off position, the control matrix 900 applies the data voltage V_{d} to the shutter-close interconnect 906b (step 1010) and grounds the shutter-open interconnect 906a of the column (step 1012).

After the control matrix 900 writes data to the pixels 902 in the write-enabled scan line in steps 1006-1012, the control matrix 900 grounds the currently write-enabled scan-line interconnect 904 (step 1014) and write-enables the next scan line (step 1016). The process repeats until all pixels 902 in the control matrix 900 are addressed (see decision block 1015). After all pixels in the control matrix 900 are addressed (see decision block 1015), the control matrix 900 applies the global common voltage V_{ag} to the global common interconnect (step 1018), thereby resulting in a near simultaneous global actuation of the shutter assemblies 912 in the control matrix 900. Thus, for such implementations, the global common interconnect serves as a global actuation interconnect.

As with the method 800, the method 1000 may also include the synchronization of a backlight with shutter actuation. However, by using the global actuation process described above, the backlight can be kept on for a larger percentage of the time a display is in operation, therefore yielding a brighter display for the same level of driving power in a backlight. In one embodiment, a backlight is synchronized such that it is off when ever the shutters in one row of a control matrix are set for one image frame while shutters in other rows of the control matrix are set for a different image frame. In control matrices that do not employ global actuation, for every frame of video, the backlight is turned off during the entire data writing process (approximately 500 microseconds to 5 milliseconds), as each row of pixels actuates as it is addressed. In contrast, in control matrices using global actuation, the backlight can remain on while the data writing process takes place because no pixels change state until after all the data has been written. The backlight is only turned off (if at all), during the much shorter time beginning after the last scan line is written to, and ending a sufficient time after the global actuation voltage is applied for the pixels to have changed states (approximately 10 microseconds to 500 microseconds).

An actuation event in the method 1000 is determined by noting the voltage differences that appear across the shutter-open actuator and the shutter closed actuator. Consistent with the actuation conditions described with respect to Figures 2, 3, and 4, the polarities of applied voltages, such as V_{d} , can be either negative or positive, and the voltage applied to the global common interconnect can be any voltage either positive or negative.

In other implementations it is possible to apply the method 1000 of Figure 10 to a selected portion of a whole array of pixels, since it may be advantageous to update different areas or groupings of rows and columns in series. In this case a number of different global actuation interconnects 914 could be routed to selected portions of the array for selectively updating and actuating different portions of the array.

In some implementations it is advantageous to periodically or occasionally reverse the sign of the voltages that appear across the actuators of shutter assembly 912 without otherwise altering the method 1000 of addressing the pixels. In one such case polarity reversal can be accomplished by reversing the signs of most of the potentials employed in Method 1000, with the exception of the write-enable voltage. In another cases voltages similar to those used in Method 1000 can be applied but with a complementary logic. Table 1 shows the differences between the nominal voltage assignments as described above for method 1000 and the voltages which could be applied in order to achieve polarity reversal on the electrodes of the shutter assemblies. In the first case, called Polarity Reversal Method 1, the voltages which appear across actuator electrodes are merely reversed in sign. Instead of applying V_{d} to the shutter-open electrode, for instance, -V_{d} would be applied. For the case where nMOS transistors are employed for the transistors 908a and 908b, however, a voltage shift should be employed (both gate voltages shifting down by an amount V_{d}). These gate voltage shifts ensure that the nMOS transistors operate correctly with the new voltages on the data interconnects.

**Table 1**

| Action: **"Close the Shutter"** | **Method 1000** | **Polarity Reversal Method 1** | **Polarity Reveral Method 2** |
|---|---|---|---|
| Non-Enabled Row Voltage | ground | -V_{d} | ground |
| Write-Enable Voltage | V_{we} | -V_{d}+V_{we} | V_{we} |
| Voltage on shutter-closed interconnect | V_{d} | -V_{d} | ground |
| Voltage on shutter-open interconnect | ground | ground | V_{d} |
| Maintenance Voltage | Vₘ | -Vₘ | Vₘ |
| Global Actuation Voltage | V_{ag} (near ground) | -V_{ag} (near ground) | V_{d} |

Table 1 also shows a second method, Polarity Reversal Method 2, which allows the use of similar voltages (without having to reverse signs on any interconnect drivers), but still achieves polarity reversal across all actuators. This is accomplished by driving the global actuation interconnect to the higher voltage, V_{d}, instead of toward ground as in Method 1000 in order to move selected shutters. The sequence of voltage changes in Polarity Reversal Method 2 is similar to that of Method 1000, except that a complementary logic is now employed at step 1004 when assigning voltages to the actuators of each pixel. In this Method 2, if the shutter is to be closed, then the shutter-open interconnect would be brought up to the potential V_{d}, while the shutter-closed interconnect would be grounded. In this example, after the global actuation interconnect is brought from its maintenance potential Vₘ up to the actuation potential V_{d}, the potential across the shutter-open actuator would be near to zero (certainly less than Vₘ), while the potential across the shutter-closed actuator would be -V_{d}, sufficient to actuate the shutter to the closed position and with a polarity that is the reverse of what was applied in Method 1000. Similarly if, at step 1004, the shutter is to be opened then the shutter-closed interconnect would be brought up to the potential Vd while the shutter-open interconnect is grounded.

The control matrix 900 can alternate between the voltages used in Method 1000 and that used with the above Polarity Reversal Methods in every frame or on some other periodic basis. Over time, the net potentials applied across the actuators on shutter assemblies 1408 by the charge interconnect 1406 and the global actuation interconnect 1416 average out to about 0V.

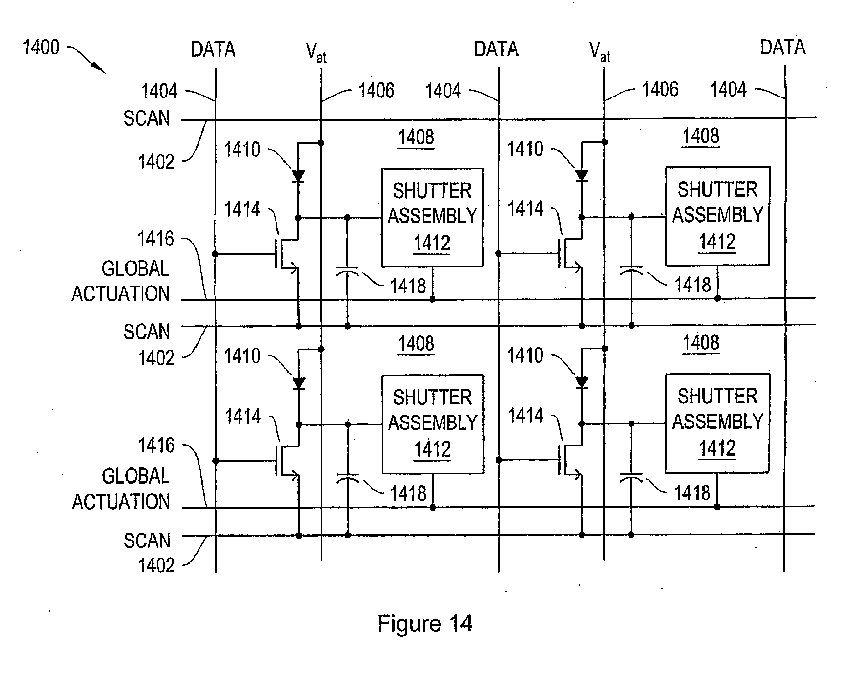

Actuation methods, similar to method 1000, can also be applied to single-sided or elastic shutter assemblies, such as with shutter assemblies 502 in control matrix 500. Such single-sided applications will be illustrated in conjunction with Figure 14 below.

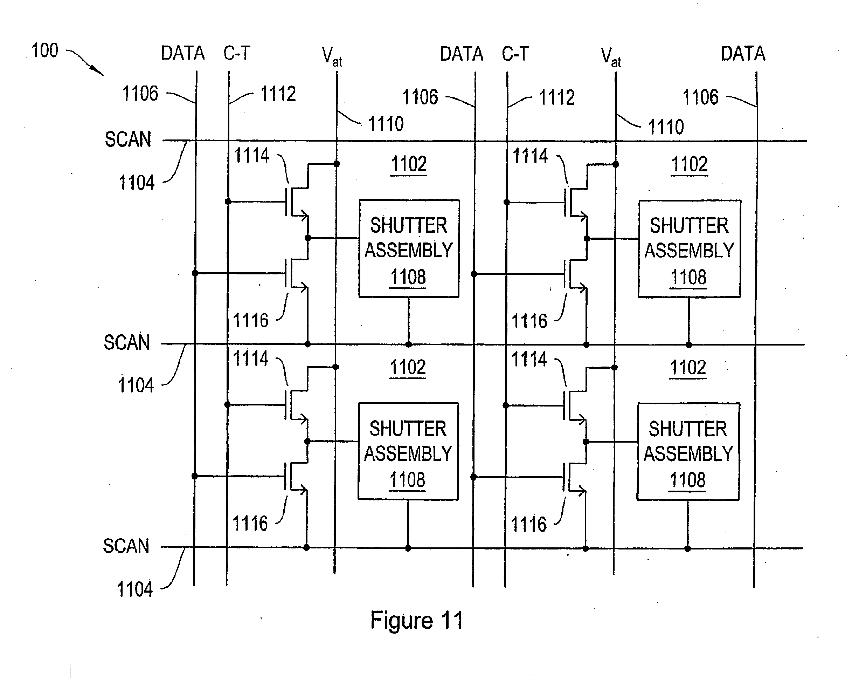

Figure 11 is a diagram of another control matrix 1100 suitable for inclusion in the display apparatus 100. As with control matrices 700 and 900, the control matrix 1100 includes a series of scan-line interconnects 1104, with one scan-line interconnect 1104 corresponding to each row of pixels 1102 in the control matrix 1100. The control matrix 1100 includes a single data interconnect 1106 for each column of pixels 1102 in the control matrix. As such, the control matrix 1100 is suitable for controlling elastic shutter assemblies 1108, such as shutter assembly 200. As with actuator in shutter assembly 200, the actuators in the shutter assemblies 1108 in the control matrix 1100 have one higher-capacitance electrode and one lower-capacitance electrode.

In addition to the scan-line and data-interconnects 1104 and 1106, the control matrix 1100 includes a charge interconnect 1110 (also labeled as V(at)) and a charge trigger interconnect 1112 (also labeled as C-T). The charge interconnect 11100 and the charge trigger interconnect 1112 may be shared among all pixels 1102 in the control matrix 1100, or some subset thereof. For example, each column of pixels 1100 may share a common charge interconnect 1110 and a common charge trigger interconnect 1112. The following description assumes the incorporation of a globally shared charge interconnect 1110 and a globally common charge trigger interconnect 1112.

Each pixel 1102 in the control matrix 1100 includes two transistors, a charge trigger switch transistor 1114 and a discharge switch transistor 1116. The gate of the charge trigger switch transistor 1114 is electrically connected to the charge trigger interconnect 1112 of the control matrix 1100. The drain of the charge trigger switch transistor 1114 is electrically connected to the charge interconnect 1110. The charge interconnect 1110 receives a DC voltage sufficient to actuate the actuators of the shutter assembly 1108 in each pixel 1102, absent the application of any bias voltage to the scan line interconnect 1104. The source of the charge trigger switch transistor 1114 is electrically connected to the lower capacitance electrode of the actuator in the shutter assembly 1108 in the pixel 1102 and to the drain of the discharge switch transistor 1116. The gate of the discharge switch transistor 1116 is electrically connected to the data interconnect 1106 of the column of the control matrix 1100 in which the pixel 1102 is located. The source of the discharge switch transistor 1116 is electrically connected to the scan-line interconnect 1104 of the row of the control matrix 1100 in which the pixel 1102 is located. The higher-capacitance electrode of the actuator in the shutter assembly 1108 is also electrically connected to the scan-line interconnect 1104 of row corresponding to the pixel. Alternately, the higher capacitance electrode can be connected to a separate ground or common electrode.

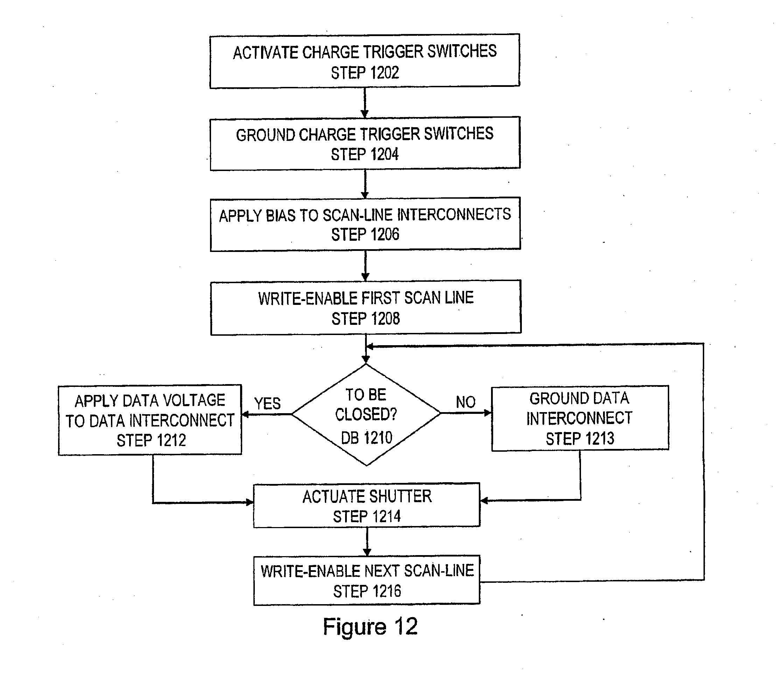

Figure 12 is a flow chart of a method 1200 of addressing the pixels incorporated into a control matrix, such as control matrix 1100, according to an illustrative embodiment of the invention. At the beginning of a frame addressing cycle, control matrix 1100 actuates all unactuated actuators of the shutter assemblies 1108 incorporated into the control matrix 1100, such that all shutter assemblies 1108 are set to the same position (open or closed)(steps 1202-1204). To do so, the control matrix 1100 applies a charge trigger voltage, e.g., 45V, to the charge trigger interconnect 1112, activating the charge trigger switch transistors 1114 of the pixels (step 1202). The electrodes of the actuators incorporated into the shutter assemblies 1108 of the pixels 1108 serve as capacitors for storing the voltage Vₐₜ supplied over the charge interconnect 1110, e.g, 40V. The control matrix 1100 continues to apply the charge trigger voltage (step 1202) for a period of time sufficient for all actuators to actuate, and then the control matrix 1100 grounds the charge trigger switch transistor 1114 (step 1204). The control matrix 1100 applies a bias voltage V_{b}, e.g., 10V with respect to ground, to all scan-line interconnects 1104 in the control matrix 1100 (step 1206).

The control matrix 1100 then proceeds with the addressing of each pixel 1102 in the control matrix, one row at a time (steps 1208-1212). To address a particular row, the control matrix 1100 write-enables a first scan line by grounding the corresponding scan-line interconnect 1104 (step 1208). Then, at decision block 1210, the control matrix 1100 determines for each pixel 1102 in the write-enabled row whether the pixel 1102 needs to be switched out of its initial frame position. For example, if at step 1202, all shutters are opened, then at decision block 1210, it is determined whether each pixel 1102 in the write-enabled row is to be closed. If a pixel 1102 is to be closed, the control matrix 1100 applies a data voltage, for example 5V, to the data interconnect 1106 corresponding to the column in which that pixel 1102 is located (step 1212). As the scan-line interconnect 1104 for the write-enabled row is grounded (step 1208), the application of the data voltage V_{d} to the data interconnect 1106 of the column results in a potential difference between the gate and the source of the discharge switch transistor 1116 of the correct sign and magnitude to open the channel of the transistor 1116. Once the channel of transistor 1116 is opened the charge stored in the shutter assembly actuator can be discharged to ground through the scan line interconnect 1104. As the voltage stored in the actuator of the shutter assembly 1108 dissipates, the restoring force or spring in the shutter assembly 1108 forces the shutter into its relaxed position, closing the shutter. If at decision block 1210, it is determined that no state change is necessary for a pixel 1102, the corresponding data interconnect 1106 is grounded. Although the relaxed position in this example is defined as the shutter-closed position, alternative shutter assemblies can be provided in which the relaxed state is a shutter-open position. In these alternative cases, the application of data voltage V_{d}, at step 1212, would result in the opening of the shutter.

In other implementations it is possible to apply the method 1200 of Figure 12 to a selected portion of the whole array of pixels, since it may be advantageous to update different areas or groupings of rows and columns in series. In this case a number of different charge trigger interconnects 1112 could be routed to selected portions of the array for selectively updating and actuating different portions of the array.

As described above, to address the pixels 1102 in the control matrix 1100, the data voltage V_{d} can be significantly less than the actuation voltage Vₐₜ (e.g., 5V vs. 40V). Since the actuation voltage Vₐₜ is applied once a frame, whereas the data voltage V_{d} may be applied to each data interconnect 1106 as may times per frame as there are rows in the control matrix 1100, control matrices such as control matrix 1100 may save a substantial amount of power in comparison to control matrices which require a data voltage to be high enough to also serve as the actuation voltage.

For pixels 1102 in non-write-enabled rows, the bias voltage V_{b} applied to their corresponding scan-line interconnects 1104 keeps the potential at their discharge transistor 1116 sources greater than the potentials at their discharge transistor 1116 gate terminals, even when a data voltage V_{d} is applied to the data interconnect 1106 of their corresponding columns. It will be understood that the embodiment of Figure 11 assumes the use of n-channel MOS transistors. Other embodiments are possible that employ p-channel transistors, in which case the relative signs of the bias potentials V_{b} and V_{d} would be reversed.

In other embodiments the discharge switch transistor 1116 can be replaced by a set of two or more transistors, for instance if the control matrix 1100 were to be built using standard CMOS technology the discharge switch transistor could be comprised of a complementary pair of nMOS and pMOS transistors.

The method 1200 assumes digital information is written into an image frame, i.e. where the shutters are intended to be either open or closed. Using the circuit of control matrix 1100, however, it is also possible to write analog information into the shutter assemblies 1108. In this case, the grounding of the scan line interconnects is provided for only a short and fixed amount of time and only partial voltages are applied through the data line interconnects 1106. The application of partial voltages to the discharge switch transistor 1116, when operated in a linear amplification mode, allows for only the partial discharge of the electrode of the shutter assembly 1108 and therefore a partial opening of the shutter.

The control matrix 1100 selectively applies the data voltage to the remaining columns of the control matrix 1100 at the same time. After all pixels have achieved their intended states (step 1214), the control matrix 1100 reapplies V_{b} to the selected scan-line interconnect and selects a subsequent scan-line interconnect (step 1216). After all scan-lines have been addressed, the process begins again. As with the previously described control matrices, the activity of an attached backlight can be synchronized with the addressing of each frame.

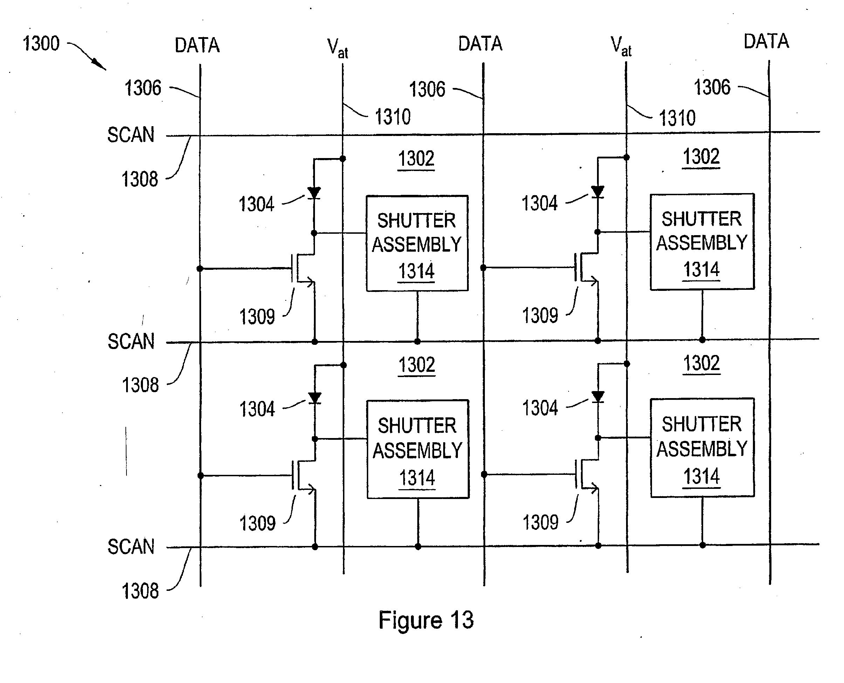

Figure 13 is a diagram of another control matrix 1300 suitable for inclusion in the display apparatus 100, according to an illustrative embodiment of the invention. The control matrix 1300 is similar to control matrix 1100, though pixels 1302 in the control matrix 1300 include charge diodes 1304 as opposed to charge trigger switch transistors 1114, and the control matrix 1300 lacks a charge trigger interconnect 1112. More particularly, the control matrix 1300 includes one data interconnect 1306 for each column in the control matrix 1300 and one scan-line interconnect 1308 for each row in the control matrix 1300, and a discharge transistor 1309. The control matrix 1300 also includes a charge interconnect 1310 (also labeled as V(at)) similar to that incorporated into control matrix 1100.

The control matrix 1300 includes a actuation voltage source electrically connected to the charge interconnect 1310. The actuation voltage source supplies pulses of voltage at the beginning of each frame addressing cycle, allowing current to flow into the shutter assemblies 1314 of the pixels 1302 in the control matrix 1300 and thereby actuating any unactuated actuators in the shutter assemblies 1314. As a result, after the voltage pulse, all of the pixels 1302 in the control matrix 1300 are in the same state, open or closed. After the voltage pulse, when the potential of the charge interconnect 1310 has been reset to zero, the charge diode 1304 prevents the voltage stored in the shutter assemblies 1314 to be dissipated via the charge interconnect 1310. The control matrix 1300 can be controlled using a method similar to the pixel addressing method 1200. Instead of applying a voltage to the charge trigger interconnect 1112 at step 1202, the actuation voltage source supplies a voltage pulse having a duration and magnitude sufficient to open any closed shutter assemblies.

It is preferable that the higher-capacitance electrode of shutter assemblies 1108 and 1314 be connected to the scan line interconnects 1104 and 1308, while the lower-capacitance electrode be connected through transistor 1114 or through diode 1304 to the charge interconnects 1112 or 1310. The voltage changes driven onto the shutter electrodes through the charge interconnects will generally be higher in magnitude than those experienced through the scan line interconnects.

Figure 14 is a diagram of a control matrix 1400 suitable for inclusion in the display apparatus 100. The control matrix 1400 includes the components of control matrix 1300, i.e., scan-line interconnects 1402, data-interconnects 1404, and a charge interconnect 1406. The pixels 1408 in the control matrix 1400 include a charge diode 1410, a shutter assembly 1412, and discharge transistor 1414. Control matrix 1400 also includes a global actuation interconnect 1416 for providing global actuation of the pixels 1408 in the control matrix 1400, using a method similar to that described in relation to Figures 9 and 10. The control matrix also includes an optional capacitor 1418, which is connected in parallel with the source and drain of the discharge transistor 1414. The capacitor helps maintain a stable voltage at one electrode of shutter assembly 1412 despite voltage changes which might be applied on the other electrode through the global actuation interconnect 1416 The interconnect 1416 is shared among pixels 1408 in multiple rows and multiple columns in the array.

The global actuation interconnect, if used in a mode similar to polarity reversal method 2 of Table 1, may be employed to ensure a 0V DC average mode of operation in addition to providing an actuation threshold voltage. To achieve 0V DC averaging, the control matrix alternates between control logics. In the first control logic, similar to that employed in the pixel addressing method 1000 and 1200, at the beginning of a frame addressing cycle, the control matrix 1400 opens the shutter assemblies 1412 of all pixels in the control matrix 1400 by storing Vₐₜ across the electrodes of the shutter assembly 1412 actuator. The control matrix 1400 then applies a bias voltage to lock the shutter assemblies 1412 in the open state.. Control matrix 1400 applies a bias voltage, e.g., ½ Vₐₜ, which is greater than Vₘ, via the global actuation interconnect 1416. Then, to change the state of a shutter assembly 1412, when the row of pixels 1408 in which the shutter assembly1412 is located is write-enabled, the control matrix 1400 discharges the stored Vₐₜ in the shutter assembly 1412. The maintenance voltage keeps the shutter assembly 1412 open until the global actuation interconnect 1416 is grounded.

In the second control logic, which is similar to the polarity reversal method 2 of Table 1, instead of the control matrix changing the voltage applied to the global actuation interconnect 1416 from ½ Vₐₜ to ground, the control matrix changes the voltage applied to the global actuation interconnect 1416 from ½ Vₐₜ to Vₐₜ. Thus, to release a shutter in a shutter assembly 1412 to its relaxed state, the voltage applied via the charge diode 1410 must be maintained, as opposed to discharged. Therefore, in the second control logic, the control matrix 1400 discharges the stored Vₐₜ from shutter assemblies that are to remain open, as opposed to those that are closed. The control matrix 1400 can alternate between the control logics every frame or on some other periodic basis. Over time, the net potentials applied across the actuators of the shutter assemblies 1408 by the charge interconnect 1406 and the global actuation interconnect 1416 average out to 0V.

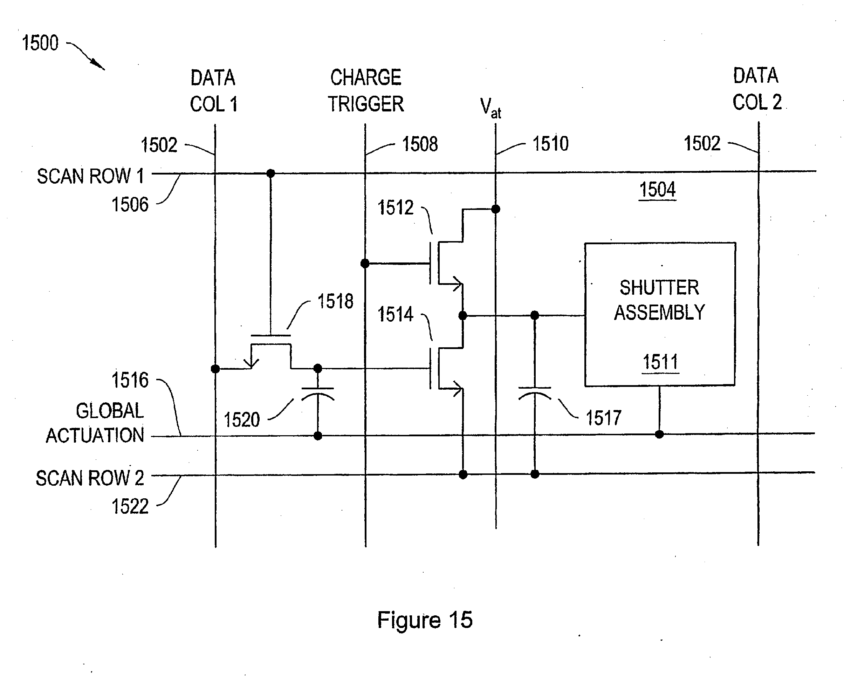

Figure 15 is a diagram of still another suitable control matrix 1500 for inclusion in the display apparatus 100, according to an illustrative embodiment of the invention. The control matrix 1500 is similar to the control matrix 1100 of Figure11. Control matrix 1500 includes a data interconnect 1502 for each column of pixels 1504 in the control matrix 1500 and a scan-line interconnect 1506 for each row of pixels 1504 in the control matrix 1500. The control matrix 1500 includes a common charge trigger interconnect 1508 and a common charge interconnect 1510. The pixels 1504 in the control matrix 1500 each include an elastic shutter assembly 1511, a charge trigger switch transistor 1512 and a discharge switch transistor 1514, as described in Figure 11. Control matrix 1500 also incorporates a global actuation interconnect 1516 and its corresponding functionality described in Figure 9 in relation to control matrix 900. Control matrix 1500 also incorporates an optional voltage stabilizing capacitor 1517 which is connected in parallel with the source and drain of discharge switch transistor 1514.

Each pixel 1504 of control matrix 1500, also includes a third transistor, a write-enable transistor 1518 , and a data store capacitor 1520. The scan-line interconnect 1506 for a row of pixels 1504 connects to the gates of the write-enable transistor 1518 incorporated into each pixel 1504 in the row. The data interconnects 1502 for the columns of the control matrix 1500 electrically connect to the source terminals of the write-enable transistors 1518 of the pixels 1504 in the column. The drain of the write-enable transistors 1518 in each pixel 1504 electrically connect in parallel to the data store capacitor 1520 and the gate terminal of the discharge trigger transistor 1514 of the respective pixels 1504.

The operation of the control matrix 1500 includes elements in common with each of the methods 1000 and 1200. At the beginning of an frame addressing cycle, a voltage is applied to the charge trigger interconnect 1508 and the charge interconnect 1510 of the control matrix 1500 to build up a potential, Vₐₜ, on one shutter assembly 1511 actuator electrode of each pixel 1504 in the control matrix 1500 to open any closed shutter assemblies 1511. These steps are similar to those performed in steps 1202 and 1204 of Figure 12. Each row is then write-enabled in sequence, except instead of performing the write-enable as a grounding of corresponding scan-line interconnects as was done with respect to Figure 11, 13, and 14 , the control matrix 1500 applies a write-enabling voltage V_{we} to the scan-line interconnect 1506 corresponding to each row. While a particular row of pixels 1504 is write-enabled, the control matrix 1500 applies a data voltage to each data interconnect 1508 of the control matrix 1500 corresponding to a column that incorporates a pixel 1502 in the write-enabled row that is to be closed. The application of V_{we} to the scan-line interconnect 1506 for the write-enabled row turns on the write-enable transistors 1518 of the pixels 1504 in the corresponding scan line. The voltages applied to the data interconnects 1502 are thereby allowed to be stored on the data store capacitors 1520 of the respective pixels 1504.

If the voltage stored on the data store capacitor 1520 of a pixel 1504 is sufficiently greater than ground, e.g., 5V, the discharge switch transistor 1514 is activated, allowing the charge applied to the corresponding shutter assembly 1511 via the charge trigger switch transistor 1514 to discharge. The discharge of the larger voltage, Vₐₜ, stored in the shutter assembly 1511, however, can take more time than is needed to store the relatively small data voltage on the data store capacitor 1520. By storing the data voltage on the data store capacitor 1520, the discharge and the mechanical actuation process can continue even after the control matrix 1500 grounds the scan-line interconnect 1506 , thereby isolating the charge stored on the capacitor 1520 from its corresponding data interconnect 1502. In contrast to the discharge process presented by the control matrices in Figures 11, 13, and 14, therefore, the control matrix 1500 regulates the discharge switch 1514 (for controlling application of the actuation voltage Vₐₜ on shutter assembly 1511) by means of data voltage which is stored on the capacitor 1520, instead of requiring real time communication with signals on the data interconnect 1502.

In alternative implementations, the storage capacitor 1520 and write-enable transistor 1518 can be replaced with alternative data memory circuits, such as a DRAM or SRAM circuits known in the art.

In contrast to the circuits shown in Figures 11, 13, and 14, the charge on the electrodes of shutter assembly 1511, when discharged, does not flow to ground by means of the scan line interconnect that corresponds to pixel 1504. Instead the source of the discharge switch transistor 1514 is connected to the scan line interconnect 1522 of the pixel in the row below it. When not write-enabled the scan line interconnects 1522 in control matrix 1500 are held at or near to the ground potential; they can thereby function as effective sinks for discharge currents in neighboring rows.
The control matrix 1500 also includes the capability for global actuation, the process or method of which is similar to that described in Figure 10.. The shutters in discharged pixels 1504 are kept in position due to the application of a maintenance voltage Vₘ, e.g., ½ Vₐₜ, to the global actuation interconnect 1516. After all rows have been addressed, the control matrix 1500 grounds the global actuation interconnect 1516, thereby releasing the shutters of all discharged shutter assemblies 1511 substantially in unison.

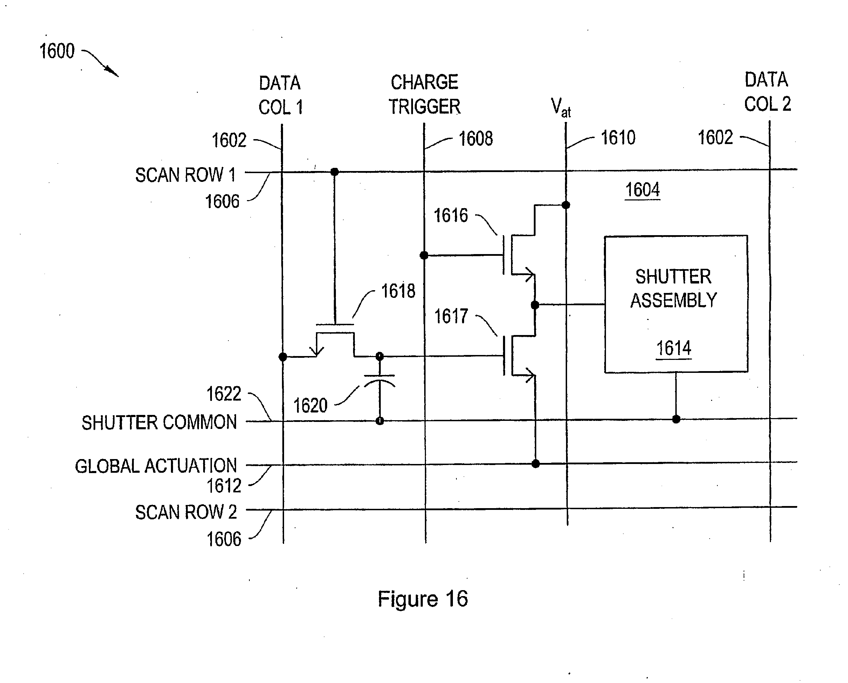

Figure 16 is a diagram of still another suitable control matrix 1600 for inclusion in the display apparatus 100, according to an illustrative embodiment of the invention. The control matrix 1600 is similar to the control matrix 1500 of Figure 15. Control matrix 1600 includes a data interconnect 1602 for each column of pixels 1604 in the control matrix 1600, a scan-line interconnect 1606 for each row of pixels 1604 in the control matrix 1600. The control matrix 1600 includes a common charge trigger interconnect 1608, a common charge interconnect 1610, and a global actuation interconnect 1612. The pixels 1604 in the control matrix 1600 each include an elastic shutter assembly 1614, a charge trigger switch transistor 1616, a discharge switch transistor 1617, a write-enable transistor 1618, and a data store capacitor 1620 as described in Figure 15. The control matrix 1600 also includes a shutter common interconnect 1622 which is distinct from the global actuation interconnect 1612. These interconnects 1612 and 1622 are shared among pixels 1604 in multiple rows and multiple columns in the array.

In operation the control matrix 1600 performs the same functions as those of control matrix 1500, but by different means or methods. Most particularly, the method for accomplishing global actuation in control matrix 1600 is unique from that performed in control matrices 900, 1400, or 1500. In the previous methods, the global actuation interconnect was connected to one electrode of the shutter assembly, and applying a maintenance voltage Vₘ to it prevented shutter actuation. In control matrix 1600, however, the global actuation interconnect 1612 is connected to the source of the discharge switch transistor 1617. Maintaining the global actuation interconnect 1612 at a potential significantly above that of the shutter common interconnect 1622 prevents the turn-on of any of the discharge switch transistors 1617, regardless of what charge is stored on capacitor 1620. Global actuation in control matrix 1600 is achieved by bringing the potential on the global actuation interconnect 1612 to the same potential as the shutter common interconnect 1622, making it possible for those discharge switch transistors 1617s to turn-on in accordance to the whether a data voltage has been stored on capacitor 1620 or not. Control matrix 1600, therefore, does not depend on electrical bi-stability in the shutter assembly 1614 in order to achieve global actuation.

Applying partial voltages to the data store capacitor 1620 allows partial turn-on of the discharge switch transistor 1617 during the time that the global actuation interconnect 1612 is brought to its actuation potential. In this fashion, an analog voltage is created on the shutter assembly 1614, for providing analog gray scale.

In the control matrix 1600, in contrast to control matrix 1500, the higher-capacitance electrode of the actuators in the shutter assemblies 1614 electrically connect to the shutter common interconnect 1622, instead of the global actuation interconnect 1612. In operation, the control matrix alternates between two control logics as described in relation to control matrix 1400 of Figure 14. For control matrix 1600, however, when the control matrix switches between the control logics, the control matrix 1600 switches the voltage applied to the shutter common interconnect 1622 to either ground or Vₐₜ, depending on the selected control logic, instead of switching the global actuation voltage applied to the global actuation interconnect, as is done by control matrix 1400.

As in the control matrix 1300 of Figure 13, a simple diode and/or an MIM diode can be substituted for the charge trigger transistor 1616 to perform the switching or charge loading function for each pixel in the array.

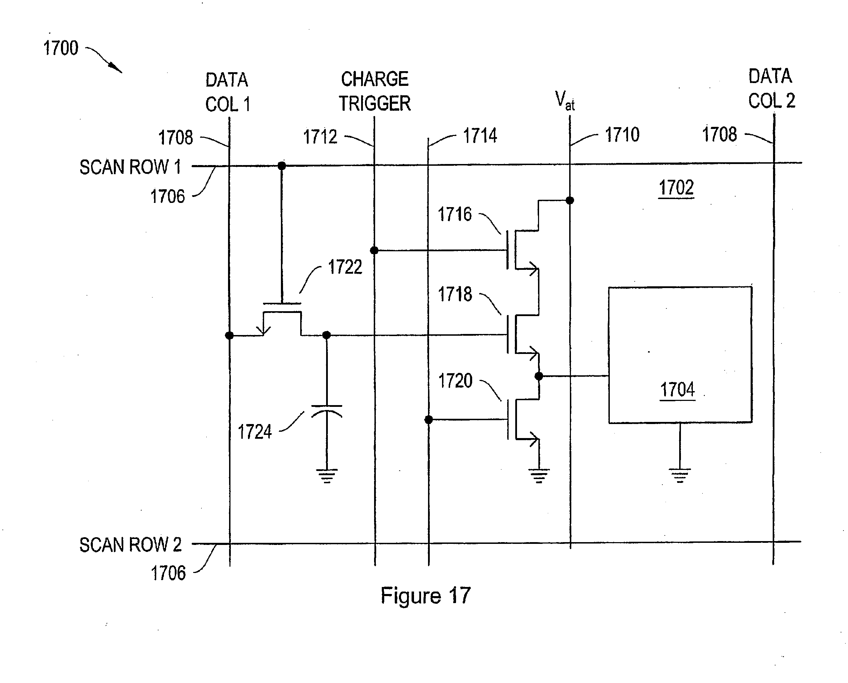

Figure 17 is still a further suitable control matrix 1700 for inclusion in the display apparatus 100, according to an illustrative embodiment of the invention. Control matrix 1700 controls an array of pixels 1702 that include elastic shutter assemblies 1704. The control matrix 1700 preferably includes shutter assemblies that are not bi-stable, so that the shutter assemblies 1704 are better controlled in an analog fashion. That is, the application of a particular voltage to the actuator of one of the shutter assemblies 1704 results in a known incremental shutter displacement.

Control matrix 1700 includes one scan-line interconnect 1706 for each row of pixels 1702 in the control matrix 1700 and one data interconnect 1708 for each column of pixels 1702 in the control matrix 1700. The control matrix 1700 also includes a charge interconnect 1710, a charge trigger interconnect 1712, and a discharge trigger interconnect 1714. These interconnects 1710, 1712, and 1714 are shared amongst all or a subset of the pixels 1702 in the control matrix 1700. Each pixel 1702 in the control matrix 1700 includes four transistors, a charge trigger transistor 1716, a grayscale transistor 1718, a discharge transistor 1720, and a write-enable transistor 1722. The gate of the charge trigger transistor 1716 electrically connects to the charge trigger interconnect 1712. Its drain electrically connects to the charge interconnect 1710, and its source electrically connects to the grayscale transistor 1718. The gate of the grayscale transistor 1718 electrically connects, in parallel, to a data store capacitor 1724 and the write-enable transistor 1722. The source of the grayscale transistor 1718 electrically connects to the discharge transistor 1720. The gate of the discharge transistor 1720 electrically connects to the discharge interconnect 1714, and its source is grounded. Referring back to the write-enabling transistor 1722, its gate electrically connects to its corresponding scan-line interconnect 1706, and its drain electrically connects to its corresponding data interconnect 1708.

The control matrix 1700 can be utilized to provide analog gray scale to the display apparatus 100. In operation, at the beginning of a frame addressing cycle, the control matrix 1700 applies a voltage to the discharge trigger interconnect 1714, turning on the discharge transistor 1720. Any voltage stored in the actuators of the shutter assemblies 1704 in the pixels 1702 is discharged, releasing the shutters in the shutter assemblies 1704 to their rest positions. The control matrix 1700 then grounds the discharge trigger interconnect 1714. Subsequently, the control matrix 1700, in sequence applies a write-enabling voltage V_{we} to each scan-line interconnect 1706, turning on the write-enabling transistors 1722 of the pixels 1702 in each corresponding row of the control matrix 1700. As the write-enabling transistor 1722 for a given row is turned on, the control matrix 1700 applies voltage pulses to each of the data-interconnects 1708 to indicate the desired brightness of each pixel 1702 in the write-enabled row of pixels 1702. After the addressing sequence is complete, the control matrix then applies a voltage to the charge trigger interconnect 1712 which turns on the charge trigger transistor 1716 so that all electrodes can be charged and all pixels actuated simultaneously.

Brightness of a pixel 1702 is determined by the duration or the magnitude of the voltage pulse applied to its corresponding data interconnect 1708. While the voltage pulse is applied to the data interconnect 1708 of the pixel, current flows through the write-enabling transistor 1722, building up a potential on the data store capacitor 1724. The voltage on the capacitor 1724 is used to control the opening of the conducting channel in the grayscale transistor 1718. This channel remains open so long as the gate-to-source voltage exceeds a certain threshold voltage. Eventually, during the charging cycle, the potential on the electrode of shutter assembly 1704 will rise to match the potential stored on the capacitor 1724, at which point the grayscale transistor will turn off. In this fashion the actuation voltage stored on the shutter assembly can be made to vary in proportion to the analog voltage stored on capacitor 1724. The resulting electrode voltage causes an incremental displacement of the shutter in the shutter assembly 1704 proportional to the resultant voltage. The shutter remains displaced from its rest position until the discharge trigger interconnect 1714 is powered again at the end of the frame addressing cycle.

As in the control matrix 1300 of Figure 13, a simple diode and/or an MIM diode can be substituted for the charge trigger transistor 1716 to perform the switching or charge loading function for each pixel in the array.

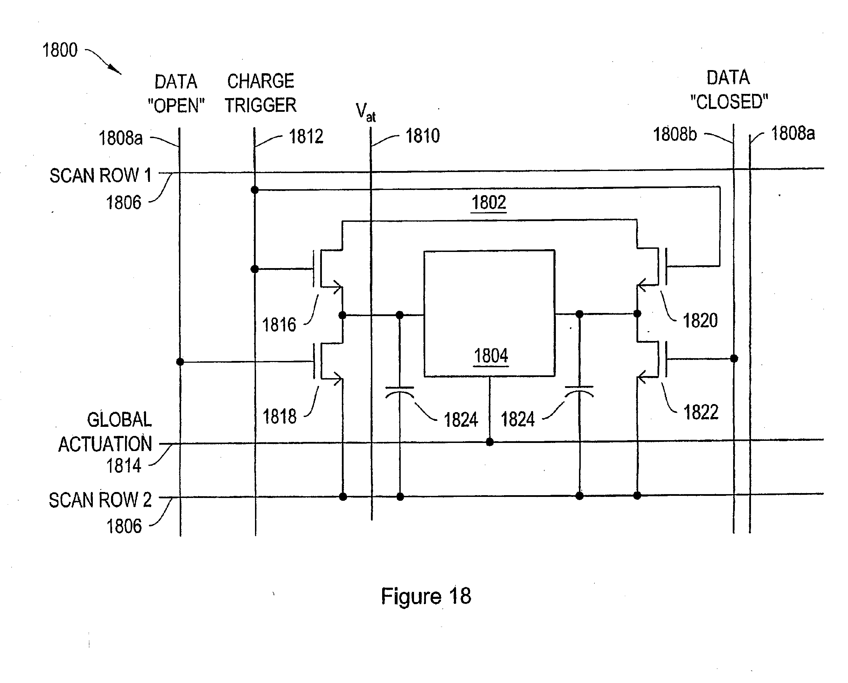

Figure 18 is yet another suitable control matrix 1800 for inclusion in the display apparatus 100, according to an illustrative embodiment of the invention. Control matrix 1800 controls an array of pixels 1802 that include dual-actuator shutter assemblies 1804 (i.e., shutter assemblies with both shutter-open and shutter-close actuators). The actuators in the shutter assemblies 1804 can be made either electrically bi-stable or mechanically bi-stable.

The control matrix 1800 includes a scan-line interconnect 1806 for each row of pixels 1802 in the control matrix 1800. The control matrix 1800 also includes two data interconnects, a shutter-open interconnect 1808a and a shutter-close interconnect 1808b, for each column of pixels 1802 in the control matrix 1800. The control matrix 1800 further includes a charge interconnect 1810, a charge trigger interconnect 1812, and a global actuation interconnect 1814. These interconnects 1810, 1812, and 1814 are shared among pixels 1802 in multiple rows and multiple columns in the array. In one implementation (the one described in more detail below), the interconnects 1810, 1812, and 1814 are shared among all pixels 1802 in the control matrix 1800.

Each pixel 1802 in the control matrix includes a shutter-open charge transistor 1816, a shutter-open discharge transistor 1818, a shutter-close charge transistor 1820, and a shutter-close discharge transistor 1822. The control matrix also incorporates two voltage stabilizing capacitors 1824, which are connected, one each, in parallel with the source and drain of the discharge transistors 1818 and 1822. At the beginning of each frame addressing cycle, the control matrix 1800 applies a maintenance voltage, Vₘ, e.g., 1/2 the voltage needed to actuate the shutter assemblies, Vₐₜ, to the global actuation interconnect 1814. The maintenance voltage locks the shutter assemblies 1804 into their current states until a global actuation is initiated at the end of the frame addressing cycle. The control matrix 1800 then applies a voltage to the charge trigger interconnect 1812, turning on the shutter-open and shutter-close transistors 1816 and 1820 of the pixels 1802 in the control matrix 1800. The charge interconnect 1810, in one implementation, carries a DC voltage equal to or greater than Vₐₜ, e.g., 40V.

As each row of pixels 1802 in the control matrix 1800 is addressed, the control matrix 1800 write-enables a row of pixels 1802 by grounding its corresponding scan-line interconnect 1806. The control matrix 1800 then applies a data voltage, V_{d}, e.g., 5V, to either the shutter-open interconnect 1808a or the shutter-close interconnect 1808b corresponding to each column of pixels 1802 in the control matrix 1800. If V_{d} is applied to the shutter-closed interconnect 1808b of a column, the voltage stored on the shutter-close actuator of the corresponding shutter assembly 1804 is discharged via the shutter-close discharge transistor 1822. Similarly if V_{d} is applied to the shutter-open interconnect 1808a of a column, the voltage stored on the shutter-open actuator of the corresponding shutter assembly 1804 is discharged via the shutter-open discharge transistor 1818. Generally, to ensure proper actuation, only one of the actuators, either the shutter-closed actuator or the shutter-open actuator, is allowed to be discharged for any given shutter assembly in the array.

After all rows of pixels 1802 are addressed, the control matrix 1800 globally actuates the pixels 1802 by changing the potential on the global actuation interconnect 1814 from Vₘ to ground. The change in voltage releases the actuators from their locked in state to switch to their next state, if needed. If the global actuation interconnect were to be replaced with a constant voltage ground or common interconnect, i.e. if the global actuation method is not utilized with the control matrix 1800, then the voltage stabilizing capacitors 1824 may not be necessary.

As in the control matrix 1400 of Figure 14, a simple diode and/or an MIM diode can be substituted for both the shutter-open charge transistor 1816 and the shutter-close charge transistor 1820.

Alternatively, it is possible to take advantage of the bi-stable nature of shutter assembly 1804 and substitute a resistor for both the shutter-open charge transistor 1816 and the shutter-close charge transistor 1820. When operated with a resistor, one relies on the fact that the RC charging time constant associated with the resistor and the capacitance of the actuator in the shutter assembly 1804 can be much greater in magnitude than the time necessary for discharging the actuator through either the shutter-open discharge transistor 1818 or the shutter-close discharge transistor 1822. In the time interval between when the actuator of the shutter assembly 1804 is discharged through one of the discharge transistors and when the actuator is re-charged through the resistor and the charge interconnect 1810, the correct voltage differences can be established across the actuators of the shutter assembly 1804 and the shutter assembly can be caused to actuate. After each of the open and closed actuators of the shutter assembly 1804 have been re-charged through the resistor, the shutter assembly 1804 will not re-actuate since either or both of the actuators now effectively holds the appropriate maintenance voltage, i.e., a voltage greater than Vₘ.

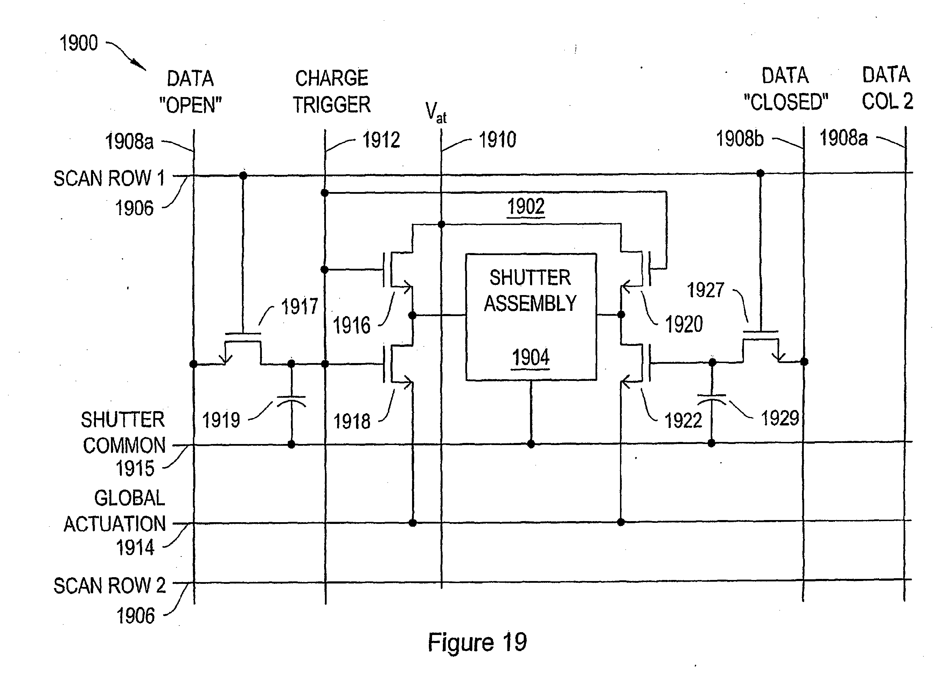

Figure 19 is yet another suitable control matrix 1900 for inclusion in the display apparatus 100, according to an illustrative embodiment of the invention. Control matrix 1900 controls an array of pixels 1902 that include dual-actuator shutter assemblies 1904 (i.e., shutter assemblies with both shutter-open and shutter-close actuators). The actuators in the shutter assemblies 1904 can be made either electrically bi-stable or mechanically bi-stable.

The control matrix 1900 includes a scan-line interconnect 1906 for each row of pixels 1902 in the control matrix 1900. The control matrix 1900 also includes two data interconnects, a shutter-open interconnect 1908a and a shutter-close interconnect 1908b, for each column of pixels 1902 in the control matrix 1900. The control matrix 1900 further includes a charge interconnect 1910, a charge trigger interconnect 1912, and a global actuation interconnect 1914, and a shutter common interconnect 1915. These interconnects 1910, 1912, 1914 and 1915 are shared among pixels 1902 in multiple rows and multiple columns in the array. In one implementation (the one described in more detail below), the interconnects 1910, 1912, 1914 and 1915 are shared among all pixels 1902 in the control matrix 1900.

Each pixel 1902 in the control matrix includes a shutter-open charge transistor 1916, a shutter-open discharge transistor 1918, a shutter-open write-enable transistor 1917, and a data store capacitor 1919 as described in Figure 16 and 18. Each pixel 1902 in the control matrix includes a shutter-close charge transistor 1920, and a shutter-close discharge transistor 1922, a shutter-close write-enable transistor 1927, and a data store capacitor 1929.

At the beginning of each frame addressing cycle the control matrix 1900 applies a voltage to the charge trigger interconnect 1912, turning on the shutter-open and shutter-close transistors 1916 and 1920 of the pixels 1902 in the control matrix 1900. The charge interconnect 1910, in one implementation, carries a DC voltage equal to or greater than Vₐₜ, e.g., 40V.

Each row is then write-enabled in sequence, as was described with respect to control matrix 1500 of Figure 15. While a particular row of pixels 1902 is write-enabled, the control matrix 1900 applies a data voltage to either the shutter-open interconnect 1908a or the shutter-close interconnect 1908b corresponding to each column of pixels 1902 in the control matrix 1900. The application of V_{we} to the scan-line interconnect 1906 for the write-enabled row turns on both of the write-enable transistors 1917 and 1927 of the pixels 1902 in the corresponding scan line. The voltages applied to the data interconnects 1908a and 1908b are thereby allowed to be stored on the data store capacitors 1919 and 1929 of the respective pixels 1902. Generally, to ensure proper actuation, only one of the actuators, either the shutter-closed actuator or the shutter-open actuator, is allowed to be discharged for any given shutter assembly in the array.

In control matrix 1900 the global actuation interconnect 1914 is connected to the source of the both the shutter-open discharge switch transistor 1918 and the shutter-close discharge transistor 1922. Maintaining the global actuation interconnect 1914 at a potential significantly above that of the shutter common interconnect 1915 prevents the turn-on of any of the discharge switch transistors 1918 or 1922, regardless of what charge is stored on the capacitors 1919 and 1929. Global actuation in control matrix 1900 is achieved by bringing the potential on the global actuation interconnect 1914 to the same potential as the shutter common interconnect 1915, making it possible for the discharge switch transistors 1918 or 1922 to turn-on in accordance to the whether a data voltage has been stored on ether capacitor 1919 or 1920. Control matrix 1900, therefore, does not depend on electrical bi-stability in the shutter assembly 1904 in order to achieve global actuation.

Applying partial voltages to the data store capacitors 1919 and 1921 allows partial turn-on of the discharge switch transistors 1918 and 1922 during the time that the global actuation interconnect 1914 is brought to its actuation potential. In this fashion, an analog voltage is created on the shutter assembly 1904, for providing analog gray scale.

In operation, the control matrix alternates between two control logics as described in relation to control matrix 1600 of Figure 16.

As in the control matrix 1300 of Figure 13, simple MIM diodes or varistors can be substituted for the charge trigger transistor 1616 to perform the switching or charge loading function for each pixel in the array. Also, as in control matrix 1800 of Figure 18 it is possible to substitute a resistor for both the shutter-open charge transistor 1916 and the shutter-close charge transistor 1920.

Generally speaking any of the control matrices 1100, 1300, 1400, 1500, or 1700, which were illustrated through the use of single-actuated or elastic shutter assemblies, can be adapted advantageously for use with a dual-actuated shutter assemblies such as 1904 by reproducing the control circuit in mirror fashion for each of the open and closed actuators. As shown in method 800 of Figure 8, the data supplied to the data-open interconnects and the data-closed interconnects will often be complementary, i.e. If a logical "1" is supplied to the data-open interconnect then a logical "0" will typically be supplied to the data closed interconnect. In additional alternative implementations, the control matrices can be modified to replace the transistors with varistors.

In alternative implementations, the control matrix keeps track of the prior position of each pixel and only applies positions to the data interconnects corresponding to a pixel if the state of the pixel for the next image frame is different than the prior position. In another alternative embodiment, the pixels include mechanically bi-stable shutter assemblies instead of just electrically bi-stable shutter assemblies. In such an embodiment, the charge trigger transistors can be replaced with resistors and the charge trigger interconnect can be omitted from the control matrix, as described above in relation to Figure 18. The dual control logic used by control matrix 1400 may also be utilized in other implementations of control matrix 1800.

### Gray Scale Techniques

### Field Sequential Color

The display apparatus 100 provides high-quality video images using relatively low power. The optical throughput efficiency of a shutter-based light valve can be an order of magnitude higher than afforded by liquid crystal displays, because there is no need for polarizers or color filters in the production of the image.

Without the use of color filters, one method for producing video images in a shutter-based display is the use of field-sequential color. Color filters reduce the optical efficiency by >60% through absorption in the filters. Displays utilizing field sequential color instead use a backlight which produces pure red, green and blue light in an ordered sequence. A separate image is generated for each color. When the separate color images are alternated at frequencies in excess of 50 Hz, the human eye averages the images to produce the perception of a single image with a broad and continuous range of colors. Efficient backlights can now be produced that allow fast switching between pure colors from either light-emitting diode (LED) sources or electro-luminescent sources.

The control matrices illustrated in Figures 5, 6, 7, 9, 11, 13-19 provide means for generating color-specific images (color sub-frame images), with accurate gray-tones, and the means for switching between color images in rapid fashion.

Formation of accurate images with field-sequential color can be improved by synchronization between the backlight and the pixel addressing process, especially since it requires a finite period of time to switch or reset each pixel between the required states of each color sub-frame. Depending on the control matrix used to address and actuate the pixels, if the option of global actuation is not employed, then the image controller may need to pause at each row or scan line of the display long enough for the mechanical switching or actuation to complete in each row. If the backlight were to broadly illuminate the whole display in a single color while the display controller was switching states, row by row, between 2 color images, then the resulting contrast would be confused.

Consider two examples illustrating the blanking times that can be employed with the backlight during resetting of an image between colors in a synchronized display. If the shutters require 20 microseconds to actuate or move between open and closed states, if the shutters are actuated in a row-by-row fashion, and if there are 100 rows, then it would require 2 milliseconds to complete the addressing. The synchronized backlight might then be turned-off during those 2 milliseconds. Note that if the display runs at a 60 Hz frame rate with 3 colors per frame, then there is only 5.6 msec allowed per color sub-frame and, in this example, the backlight would be off 36% of the time.

Alternately, when using a global actuation scheme for switching between color sub-frames, the same resetting of the image would require only 20 microseconds for the simultaneous movement of all shutters between images. The requirements for shutter speed are now substantially relaxed. If, during the color reset, the backlight were to be off for as much as 100 microseconds, the percentage of illumination time at 60 Hz frame rate is now better than 98%. Assuming a 100 microsecond image refresh time, it is now possible to increase the frame rate to 120 Hz with no substantial loss in illumination time. Using a frame rate of 120 Hz substantially reduces image artifacts induced by field sequential color, such as color breakup in fast moving video images.

### Gray Scale

The number of unique colors available in the display is dependant in part on the levels of gray scale that are available within each of the three color images. Four principle methods of producing gray scale and combinations thereof are applicable to the transverse shutter displays.

### Analog Gray Scale

The first method of producing gray scale is an analog method, by which the shutters are caused to only partially obstruct an aperture in proportion to the application of a partial actuation voltage. Transverse shutters can be designed such that the percent of transmitted light is proportional to an actuation voltage, for instance through control of the shape of the actuation electrodes as described above in relation to Figure 2.

For analog gray scale, the display apparatus is equipped with a digital to analog converter such that the voltage delivered to the pixels is proportional to the intended gray scale level. The proportional voltage on each actuator is maintained throughout the period of an image frame such that the proportional shutter position is maintained throughout the illumination period. The optional use of a capacitor placed in parallel with the actuators in Figures 2 and 17 helps to ensure that, even though some charge may leak from the pixel during the time of illumination, the voltage does not change appreciably so as to alter the shutter position during the period of illumination.

The analog gray scale has the advantage of requiring only 1 shutter in motion per pixel and the setting of only 1 image frame during the period of each color illumination. The data rates and addressing speeds for analog gray scale are therefore the least demanding amongst all alternative methods of gray scale.

### Time Division Gray Scale

With proper design of the transverse shutter, a low voltage switching can be achieved which is fast. Transversely driven shutter assemblies, such as those for example depicted in Figure 2, can be built having actuation times in the range of 3 microseconds to 100 microseconds. Such rapid actuation makes possible the implementation of time division gray scale, wherein the contrast is achieved by controlling the relative on-times or duty cycles of the actuated shutters. A time division gray scale can be implemented using digital gray scale coding, in that control matrices incorporating bi-stable shutter assemblies recognize two states of shutter actuation, on or off. Gray scale is achieved by controlling the length of time a shutter is open.

The switching times can be appreciated by assuming the case of a 60 Hz frame rate with field sequential color. Each color sub-frame is allotted 5.6 msec. If the available time interval were to be divided into 63 segments (6-bit gray scale per color), then the smallest increment of on-time for each image, known as the least significant bit time (LSB), would be 88 microseconds. If an image for the LSB time-bit were to be constructed and displayed using a global actuation scheme, then the actuation of all shutters would need to be completed in significantly less than the 88 microsecond LSB time. If the display is addressed in a row-by-row basis then the time available for reset at each row is considerably less. For a display with 100 rows, the available actuation time can be less than 0.5 microseconds per row. A number of controller algorithms are possible for relaxing the time intervals required for addressing shutters in a row-by-row scheme (see for example N.A. Clark et. al., Ferroelectrics, v.46, p. 97 (2000).), but in any case the time required for shutter actuation in the 6-bit gray scale example is considerably less than 20 microseconds.

Achieving multiple bits of gray scale through the use of time division multiplexing requires significant power in the addressing circuitry, since the energy lost in the actuation cycle is ½ CV² for each pixel through each refresh or addressing cycle in the control scheme (C is the capacitance of the pixel plus control electrodes and V is the actuation voltage). The circuit diagrams of Figures 11 and 13-19 reduce power requirements by decoupling and reducing the addressing voltages (the voltages required on the scan lines and data lines) from the actuation voltages (the voltages required to move a shutter).

### Area Division Gray Scale

Another method that can reduce the addressing speed and power requirements of the time division gray scale is to allow for multiple shutters and actuators per pixel. A 6 bit binary time-division scheme (63 required time slots) can be reduced to a 5 bit time scheme (31 required time slots) by adding the availability of an additional gray scale bit in the spatial or area domain. The additional spatial bit can be accomplished with 2 shutters and apertures per pixel, especially if the shutters / apertures have unequal area. Similarly, if 4 shutters (with unequal areas) are available per pixel then the number of required time bits can be reduced to 3 with the result still being an effective 64 levels of gray scale per color.

### Illumination Gray Scale

Another method that can relax the speed and/or real estate requirements for the above gray scale techniques is use of an illumination gray scale. The contrast achieved through the illumination of the color image can be adjusted or given finer gray levels by means of altered intensity from the backlight. If the backlight is capable of fast response (as in the case of LED backlights), then contrast can be achieved by either altering the brightness of the backlight or the duration of its illumination.

Let us consider one example, wherein it is assumed that the control matrix utilizes a global actuation scheme and that time division gray scale is accomplished through construction and display of distinct time-bit images illuminated for differing lengths of time. Take for example a 4-bit binary time coding scheme accomplished by dividing the color frame into 15 time slots. The image that is constructed for the shortest (LSB) time should be held for 1/15 of the available frame time. In order to expand to a 5-bit coding scheme one could, in the time domain, divide the color frame into 31 time slots, requiring twice the addressing speed. Alternately, one could assign only 16 time slots and assign to one of these time slots an image that is illuminated at only ½ the brightness or by a backlight that is flashed for an on period of only 1/31 of the frame time. As many as 3 additional bits of gray scale can be added on top of a 4 bit time-division coding scheme by adding these short time-duration images accompanied by partial illumination. If the partial illumination bits are assigned to the smallest of the time slices, then a negligible loss of average projected brightness will result.

### Hybrid gray scale schemes

The four principle means of gray scale are analog gray scale, time division gray scale, area division gray scale, and illumination gray scale. It should be understood that useful control schemes can be constructed by combinations of any of the above methods, for instance by combining the use of time division, area division and the use of partial illumination. Further divisions of gray scale are also available through interpolation techniques, also known as dither. Time domain dither includes the insertion of LSB time bits only in an alternating series of color frames. Spatial domain dither, also known as half-toning, involves the control or opening of a specified fraction of neighboring pixels to produce localized areas with only partial brightness.

More particularly, the systems and methods described herein include, among other things portable handheld devices and methods for making portable handheld devices that include low power and brightly lit display panels with sufficient resolution to provide a visual user interface with visually distinct images capable of being viewed under multiple ambient lighting conditions. More particularly, the systems and methods described herein include, in certain embodiments, portable handheld devices that include displays comprising a MEMS display panel that has a light modulating layer. The light modulating layer includes pixel elements organized to provide operational viewing resolution for screens of any size, including screens as small as 0.635 cm by 0.635 cm and smaller depending upon the application. In particular, in one embodiment, the light modulating layer includes a display formed of a display panel that has a plurality of transversely moveable shutters arranged into a matrix of pixel elements. The matrix is approximately 2.54 cm in width by 2.54 cm in length, with 120 columns and 120 rows, thereby providing approximately 14,400 pixels evenly distributed within the 2.54 cm by 2.54 cm display panel. Optionally, and as will be described in further detail, herein, a back light may be provided that provides a light source that directs light through the light modulating layer so that the transversely moving shutters can modulate the generated light to create an image on the display panel. A MEMS display controller may couple to the MEMS display panel to drive the display to create images. Optionally, the MEMS display controller provides multiple operation modes to drive the MEMS display in a mode suited to the application and conditions. The high optical power efficiency of the MEMS display panel can be leveraged by the MEMS display controller which, in one embodiment, dynamically sets the operating mode of the display panel as a function of available power and the demands of the application. The efficient power use and control of the devices described herein allow for additional functionality, such as WI-FI and full color video, which otherwise may draw more power than the on board power source can provide for any practical amount of time. These and other embodiments will be described in more detail with reference to the figures set forth herein.

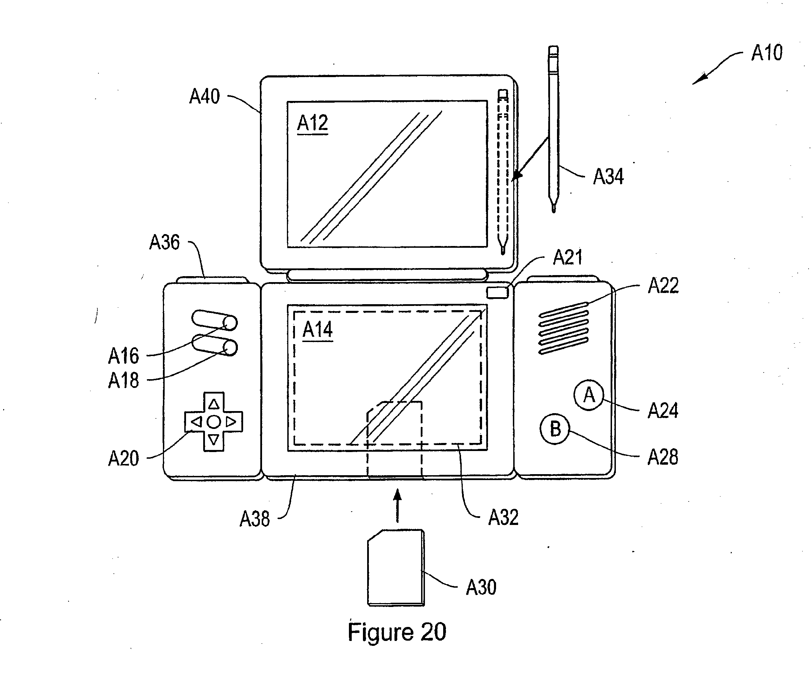

More specifically, Figure 20 depicts a portable handheld device A10 that includes a display A12, an optional second display A14, a display brightness control A16, a display contrast control A18, a user interface input device A20, a light level detector A21, an audio output A22, an input control A24, a second input control A28, a removable memory device A30, an optional touch screen A32 disposed over the optional display A14, an optional stylus A34, a main housing A38 an optional light level detector and a display cover housing A40. Additionally, the system may include a power plug and docking interface and interface to external peripherals through, for instances, an audio jack or USB bus or related device.

A portable hand held device may be any device that a user can conveniently carry by hand, and has an internal power supply allowing the device to be moved from one place to another. The size of a portable hand held device will vary according to its intended purpose and features and larger devices may have handles or grips and smaller devices may have wrist straps, armbands or clips for allowing the device to be more easily carried.

The display A12 comprises a MEMS display panel described in more detail below, and housed within the cover housing A40. The display A12 is recessed within the upper face of the main body of the cover housing A40 and has dimensions of approximately 6.35 cm in length and 4.7625 cm in width including a diagonal screen dimension of about 7.62 cm. In the depicted embodiment the display A12 fits within the cover housing A40 and the cover housing A40 includes a front plate having an aperture dimensioned for providing visual access to the display A12 and having a back plate that covers the entire rear section of the display A12. The display panel A12 may sit on a rim formed around the peripheral edge of the aperture located within the back plate of the cover housing A40. An optional seal, typically a rubber gasket or plastic gasket, may be placed around that peripheral edge so that the display panel A12 is laid against the gasket and sealed in place allowing a certain amount of resilience. This seal aids in absorbing shock if the device A10 were dropped or otherwise mishandled. Typically the cover housing A40 is made of a plastic such as polystyrene, poly-vinyl chloride, or some other suitable material. Alternatively, the housing A40 may be made of metal, or any combination of plastic and metal materials. In either case the material selected will provide a housing that is sufficiently robust to protect the display panel A12 for long-term use. The housing A40 is typically about 20cm in length and 10 cm wide with the cover housing A40 folded over the main housing A38. Device A10 illustrated in Figure 20 has a form factor suitable for being held in one or both hands of the user during operation. This allows the device to be easily carried and in some embodiments allows one hand to hold the device while the second hand is free for, among other things, using the optional stylus A34 to input data through the optional touch screen A32.

The optional display A14 may be a second display incorporated into the portable hand held device A 10 and may be used for both displaying information and, in the depicted embodiment, inputting information. To this end, the device A10 may include an optional touch screen A32 that is laid over the display panel A14. The touch screen A32 may be the type of touch screen commonly employed in computer systems for allowing a user to use touch or force to identify a location on the touch screen A32 that may be used to identify an icon or other data being displayed on display A 14.

The portable device A 10 further includes user interface elements such as the input device A20 depicted in Figure 20 and the input devices A24 and A28 as well as the audio output device A22. In the depicted embodiment the input device A20 is a cross shaped directional control button that may be used for game play, or for other forms of data input. The input devices A24 and A28 are user pressable buttons that may be used to input data to the device A10. The audio output device A22 depicted in Figure 20 may be speaker of the type capable of providing audio signals, such as sound and music, to a user to provide feedback to the user. In either case, the input devices and the output devices including the cross shaped directional control button A36 and the audio output device A22 may be used by portable device A10 to allow a user to enter data and receive data. The interface devices allow the user to interact with information being presented on either one of the displays A12 or A14. Optionally and traditionally, the cross shaped input device A20 may be used to manipulate a cursor that would be present on either one or both of the displays A12 and A14.

The power source may be a battery, fuel cell, capacitor or any other device that provides a source of power. Typically the power source is a rechargeable battery and a power regulator circuit couples to the battery to provide the voltage levels needed to run the logic chips, lamps and the display panels, as well as any other on board devices, such as WI-FI transceivers, cell phone chip sets, tuners, speakers and other accessories. By using a MEMS display with transverse shutters providing low loss of optical power and by controlling the operating mode of the display, more power may be allocated for these accessories.

The light level detector A21 may be a light sensor that detects the level of ambient light. The light level detector A21 generates a level signal that the device may use for adjusting the brightness of the display. Thus, if the light level detector A21 detects low levels of ambient light, such as the level of light in a dimly lit room, the device A10 may operate the display panels A12 and A14 with low brightness. Alternatively, if the level detector A21 detects high levels of ambient light, such as the light levels present outside on a sunny day, the device A10 may dynamically change the operating mode of displays A12 and A14 to higher brightness setting capable of being seen by a user in this ambient lighting environment.

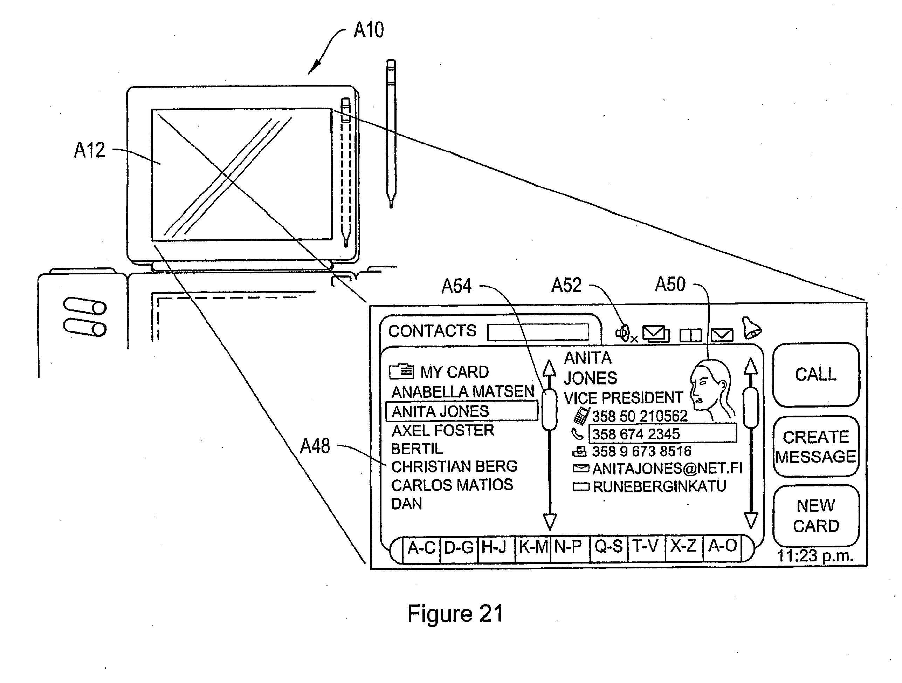

Turning to Figure 21, there is shown in more detail the type of image that may be presented on either of display A12 for providing information to the user. In particular, Figure 21 depicts the displays A12 or A14 which again may be 7.62 cm in diagonal. Figure 21 shows a plurality of different data types including images, text, and graphic symbols, as well as presenting a substantial amount of text information for a 7.62 cm diagonal screen. In particular, Figure 21 depicts that the display A12 can project text information such as the text A48, graphic symbols such as the depicted user widgets A52 and A54, and images such as the depicted image A50.

In the depicted embodiment, the display A12 is a high resolution pixelated screen about 6.35 cm wide and 4.7625 cm in length and having approximately 256 rows of pixels and 192 columns of pixels with about 49,152 pixels in total. The display A12 may be a color display that presents about 262,144 colors, although in other embodiments the display may have more or less colors and the amount of colors provided by the screen may be varied according to the application as will be described below. The displays may also be monochromatic, typically black and white, or have a mode of operating that generates monochromatic images. In any case, as depicted in Figure 21, the handheld device uses the display to present information to the user that can include text information, such as contact information, telephone numbers, dates and notes. Additionally, the display A12 may present image data, such as the image A50, that may be a bit map file, a jpeg file, or any other suitable image file type. Additionally, the systems and methods described herein may present video data, such as mpeg and wmv files.

The graphic controls A52 and A54 are typically graphic images generated by the handheld device A 10 to offer to the user visually presented user interface controls. For example, the graphic control A52 is presented as a status flag representative of whether the handheld device has an audio output function that is muted. The user can view the graphic control A52 to learn the mute status of the related audio output device, and upon changing the mute status, the handheld device A10 can alter the graphic image A52 to a graphic symbol that represents the changed status of the mute function. Similarly, the graphic control A54 represents a slide control that can cause the information presented on the display, or at least a portion of that information, to scroll up and/or down depending upon the direction in which the control A54 is moved. The display A12 also presents information that includes content information, such as the user's data stored in the device's memory.

Thus, the display A12 is a part of the user interface of the portable device A10 and it acts as an output device for visually perceptible data and as a device for directing the user to input data. In the depicted embodiment of Figure 21, the handheld device display A12 is used for presenting data related to a contact database. However, in other embodiments, the handheld device may be a cell phone, a smart phone, a media player, a game console, a global navigation satellite system (GNSS) receiver, a television, digital camera, handheld video camera, laptop computer or other device. In each of these embodiments, the handheld device employs the display A12 to deliver information to the user.

The display A12 includes a display panel that has a plurality of transversely movable shutters capable of modulating light to form an image on the display, such as the image depicted in Figure 21.

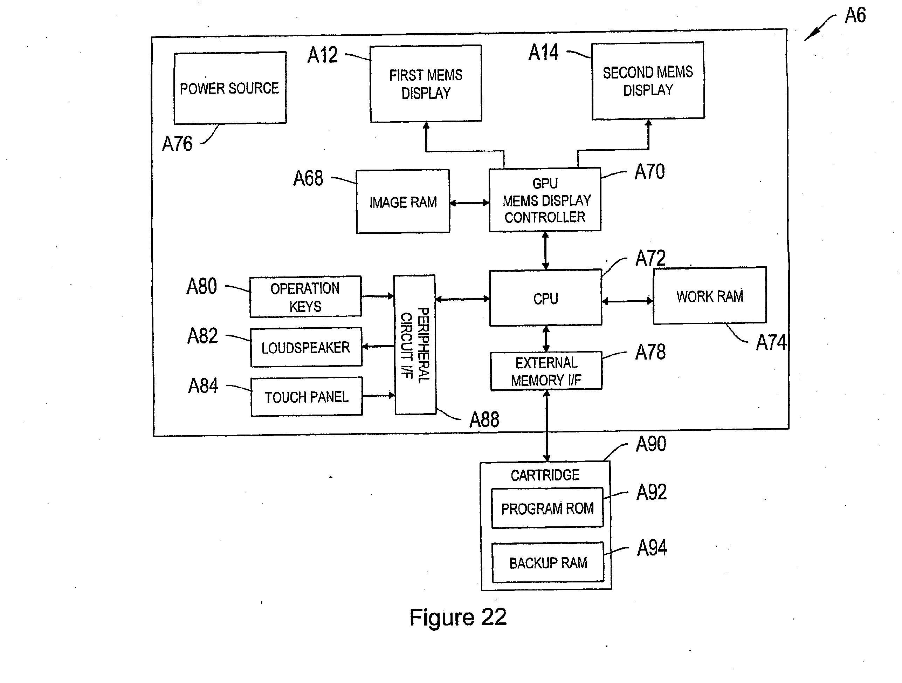

Turning to Figure 22, a functional block diagram is presented that shows a portable handheld device A60 that includes the first MEMS display A12 and the second MEMS display A14, a graphic processing unit and MEMS display controller A70, an image RAM A68, a central processing unit (CPU) A72, work RAM A74, a power source A76, an external memory interface A78, operational keys A80, a loud speaker A82, a touch panel A84, and a peripheral circuit interface A88. Additionally, Figure 22 shows that the device A60 can interface with the removable cartridge A90 that can include a program ROM as well as back up RAM, or that can be a memory stick.

The MEMS display panels A12 and A14 are coupled to the game processor unit and the MEMS display controller A70 (MEMS display controller). The MEMS display controller A70 depicted in Figure 22 couples to the CPU A72 and operates, at least in part, under the control of the CPU A72. The MEMS display controller A70 couples via a bi-directional bus to the image RAM A68 which stores image and/or video data that may be displayed on either of the MEMS displays A12 or A14. In the embodiment depicted in Figure 22, the CPU A72 couples to a plurality of user interface devices via the peripheral circuit interface A88. The peripheral circuit interface A88 couples to the operation keys A80, which may be the interface devices A20, A24 and A28 depicted in Figure 20. The peripheral interface A88 may also couple to a loudspeaker, which may be similar to the audio output device A22 also shown in Figure 20. An optional touch panel A84, which may be the touch panel A32 of Figure 20, couples to the CPU A72 through the peripheral interface A88. In the depicted embodiment, the portable handheld device includes an interface A78 for an external memory device A90. The external memory device may include program instructions for directing the operation of the device and may include memory, such as the depicted program ROM and backup RAM A94. In either case, the external memory A90 may couple to the CPU via the external memory interface A78. Optionally, the system may include other elements, such as Wi-Fi transceivers, blue tooth transceivers, television and/or radio tuners and other such elements. These elements may be integrated into the device A10 and disposed within the housing A38 or may be peripheral devices that couple to the device through the interface A78, or through another interface provided for that purpose.

The CPU A72 may be a microprocessor unit such as the ARM 7, that is capable of polling the interface devices A78 and A88 to collect user input and to provide user feedback during operation. The CPU A72 is a programmable device that executes program instructions that for example may include instructions for executing a video game on the handheld device A10, using the MEMS display A12 as an output device for video information. To this end, the CPU A72 can monitor the user input devices A80 to collect information about the user's play decisions and use the play information to determine what images to present to the user via either or both of the MEMS displays A12 and A14.

To present visual information to the user, the CPU A72 can couple to the MEMS display controller A70, that may be in one embodiment, a field programmable gate array (FPGA) of the type for providing programmable logic. The MEMS display controller A70, in response to an instruction from the CPU A72, employs the RAM A68 to generate a game image to output to the first MEMS display A 12 and the second MEMS display A 14, and causes the generated game image to be displayed on one or both of the MEMS displays A12 and A14.

In the depicted embodiment, the MEMS display controller A70 is a graphics processor and a MEMS display controller integrated into a single programmable device, typically a field programmable gate array (FPGA). The graphic processor unit (GPU) may be a conventional GPU of the type capable of manipulating graphic images such as sprites and organizing or selecting image data within or from the RAM A68 for it to be displayed by the MEMS display controller A70 on one of or both of the MEMS displays A12 and A14.

The MEMS display controller A70 depicted in Figure 22 is also implemented, at least in part, within the FPGA A70, but it will be apparent to those of skill in the art that the GPU and MEMS display controller may be implemented in separate programmable devices and further that any suitable type of circuit and controller may be employed and that a FPGA is merely one common embodiment of a system for implementing complex logic within a portable electronic device.

The depicted MEMS display controller A70 has multiple modes of operation for controlling each of the MEMS displays A12 and A14. As it will be described in more detail, the portable handheld devices include display panels that are formed having a MEMS layer including a plurality of transversely movable shutters. The transversely movable shutters are capable of modulating light for the purpose of generating an image on the MEMS display. The traversely moveable shutters employed in the display panel efficiently move from at least a first position to a second position doing so at rates that enable video images on either of the MEMS display. Additionally, in certain embodiments the MEMS display panel is capable of displaying monochromatic data, typically black and white, for applications such as wrist watches, e-books, graphic still images, text, and other similar applications. The MEMS display controller A70 depicted in Figure 22 includes a mode of operation for efficiently driving the MEMS display panels A 12 and A 14 to present an image using a mode of operation selected by the MEMS display controller A70 to reduce power expenditures from the power source A76 within the handheld device A10.

The MEMS display controller A70, may provide for dynamic control of the MEMS display panel, and in one embodiment, provides control, including adaptive control, over color depth by controlling the number of bits used to set color, such as 2 bits (monochromatic), 4 bits, 6 bits or more, depending upon the application and the conditions. The MEMS display controller A70 can, in these embodiments, set the color resolution for the power to be drawn, which can lead to substantial power savings. For example, the MEMS display controller A70 may determine that monochromatic diplays are needed for a particular application, such as showing the digits of a phone number being dialed. In this mode, the MEMS display controller A70 may select two bit operation mode, that uses monochromatic imaging to display the number being dialed. However, if the application, such as a running web browser, requires color images, the MEMS display controller A70 may use 6 bit color to present the images. Optionally, the MEMS display controller A70 may process the image data stored in the image memory to determine the required depth of color and, based on that determination, adjust the number of bits used to generate the images. The MEMS display controller A70 can use time multiplexed grey scale, and use a command sequence to set color bit depth, setting color bit depth dynamically and adaptively.

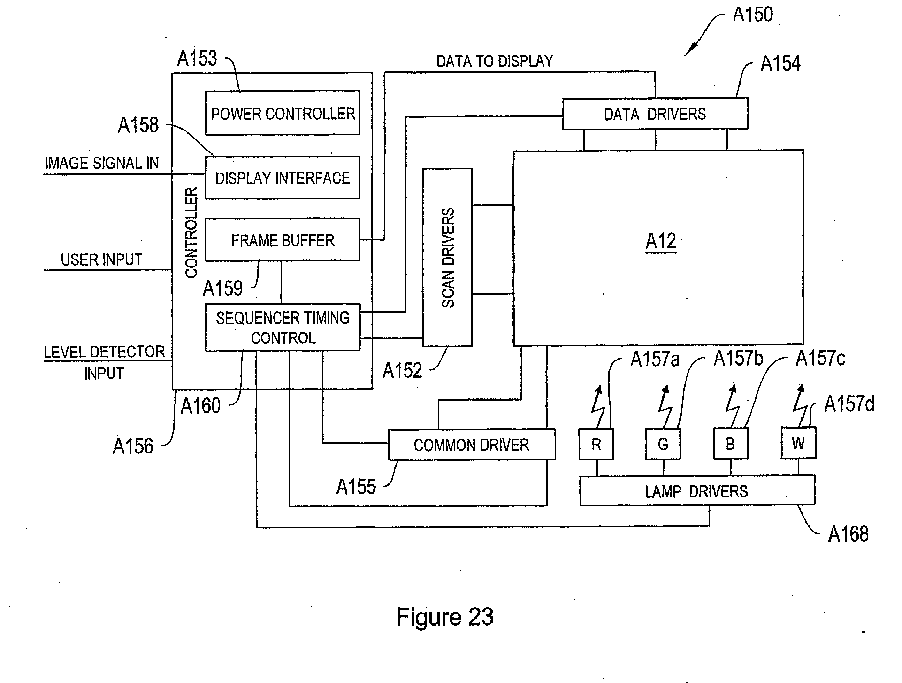

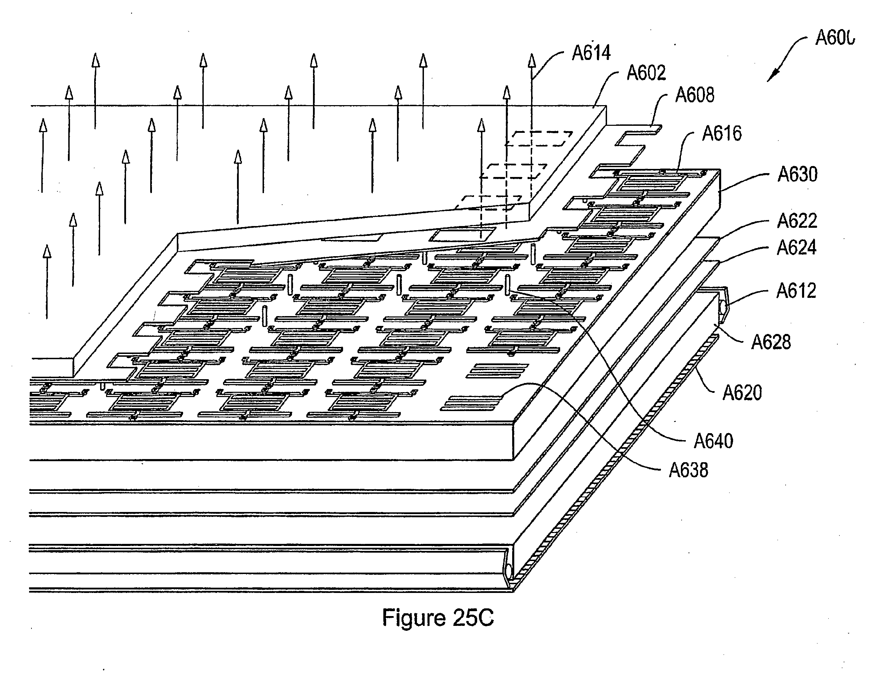

Figure 23 is a block diagram of one embodiment of a MEMS display controller. The depicted MEMS display controller can drive and control a MEMS display panel, such as panel A 12 or A 14. As noted above, the portable handheld devices described herein employ a MEMS display panel that includes a plurality of transversely moveable shutters that modulate light to generate an image for the user. One embodiment of such a MEMS display is depicted in more detail in Figure 25C, which presents an exploded view of an example MEMS display panel A600.

In particular, Figure 25C depicts a MEMS display panel A600 that includes a cover plate A602, a black matrix A608, a plurality of shutter assemblies A616 arranged into a matrix having rows and columns, a transparent substrate A630, an enhancer film A622, a diffuser layer A624, a light conducting medium A628, a scattering and reflective layer A620 and a plurality of support posts A640.

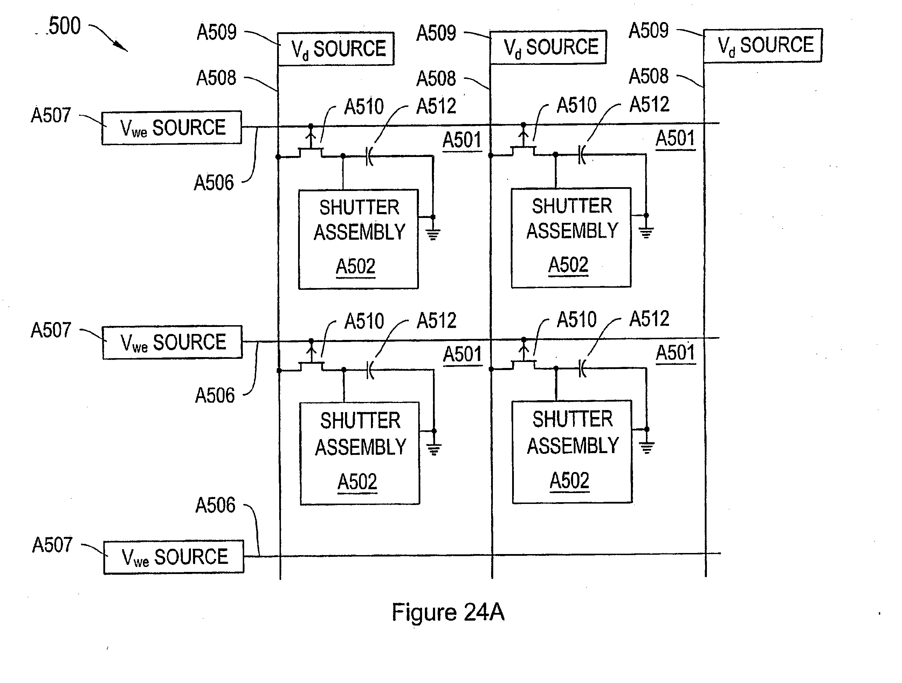

The depicted shutter assemblies A616 comprise a transversely moveable shutter and an electrostatic drive member. The shutter assemblies A616 are formed on the depicted MEMS layer that is formed on the transparent substrate A630. A plurality of conducting elements are also formed into the MEMS layer to provide a control matrix that can interface the shutters A616 with the MEMS display controller A70. An example of a control matrix is presented in Figure 24A, however, the MEMS display controller can work with any suitable control matrix.

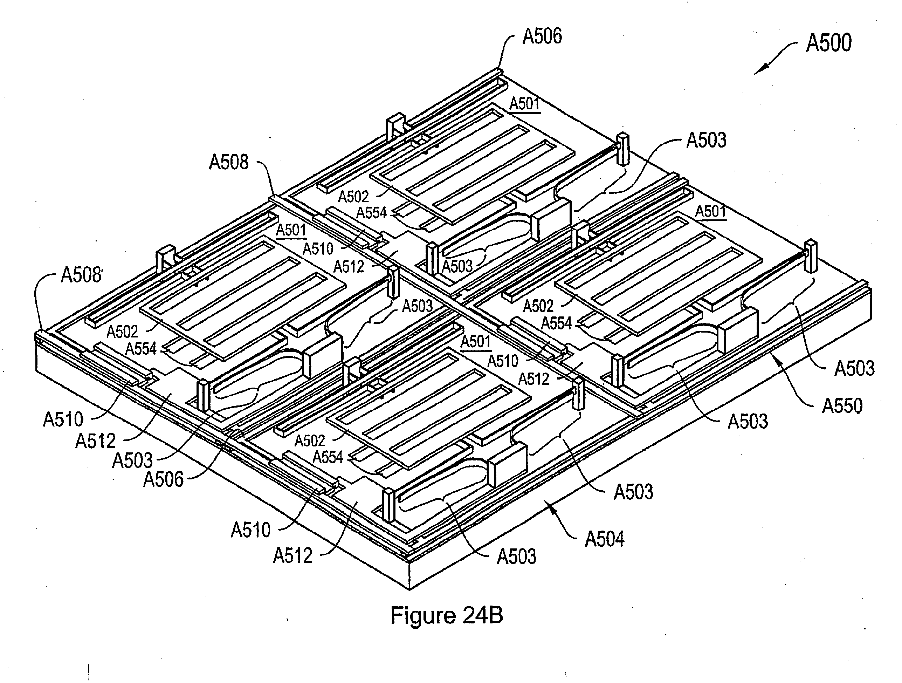

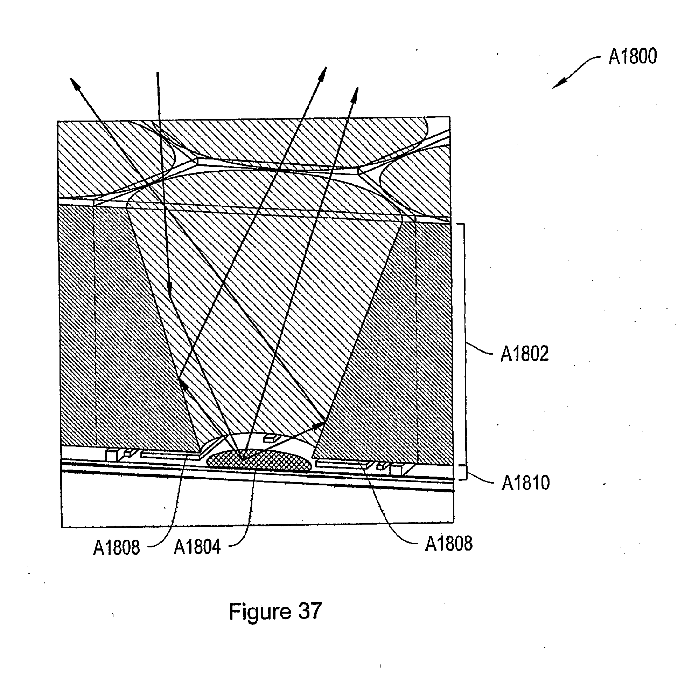

In the embodiment depicted in Figure 25C, the shutters more transversely, preferably in a plane, so that the shutter moves over its respective aperture A638, or at least part of the aperture A638, to modulate light being generated by the lamp (light source) A612 which is directed upwardly through the aperture A638 at least in part by the reflective/scattering surface A620. This is shown by light rays A614 propagating up through the cover plate A602. In this embodiment, the transversely moving shutters, which are described in more detail with reference to Figure 24B, modulate light by moving transversely over the aperture A638 substantially in plane, effectively slicing through any fluid that surrounds the shutter. This slicing motion is understood to be efficient and to provide video rate switching speeds. The MEMS displays described herein are illustrative of the type of MEMS display panels that may be used with the portable hand held devices. However, these illustrated embodiments are not exhaustive and the MEMS display panels may be modified as appropriate for the intended use and for example may include front lights, color filters, shutters that modulate reflected ambient light to provide reflective or trans/reflective MEMS display panel. One example of such a reflective display is presented in Figure 37. Specifically, Figure 37 depcits a reflective MEMS display panel A1800 that includes lens array A1802 disposed on a shutter assembly A1810 that has a shutter A1808 that transversely moves over a reflective surface A1804 to modulate incident ambient light. Thus, the displays may vary depending on the application, they may be of different shapes and sizes, the may be QVGA or some toher size and the size, pixel count and pixel density may vary according to the application.

The control matrix connected to the MEMS layer and to the shutter assemblies A616 controls the movement of the shutters. The control matrix includes a series of electrical interconnects (not shown), including a write-enable interconnect also referred to as a "scan-line interconnect," for each row of pixels, one data interconnect for each column of pixels, and one common interconnect providing a common voltage to all pixels, or at least pixels from both multiple columns and multiples rows in the display panel A600. In response to the application of an appropriate voltage (the "write-enabling voltage, V_{we}"), the write-enable interconnect for a given row of pixels prepares the pixels in the row to accept new shutter movement instructions from the MEMS display controller. The data interconnects communicate the new movement instructions in the form of data voltage pulses. The data voltage pulses applied to the data interconnects, in some implementations, directly contribute to an electrostatic movement of the shutters. In other implementations, the data voltage pulses control switches, e.g., transistors or other non-linear circuit elements that control the application of separate actuation voltages, which are typically higher in magnitude than the data voltages, to the shutter assemblies A616. The application of these actuation voltages then results in the electrostatic movement of the shutters. To this end, a common driver A 155 may be used to drive the movement of the shutters after the data voltages have been applied. The depicted common driver A155 can control one or more common signals, that is signals electrically delivered to all or a group of the shutter assemblies. These common signals can include the common write enable, common high voltage for shutter actuation, common ground. Optionally, the common driver may drive multiple line such as for example multiple common grounds that are electrically coupled to different areas of the MEMS display panel A14. It will be understood that the drivers in Figure 23 are depicted as functional blocks, but in practice, these drivers can be implemented as multiple circuit elements and discreet components and that the actual structure will vary according to the application being addressed.

The MEMS display controller depicted in Figure 23 includes a controller A156, a display interface A158, frame buffer A159, sequencer/timing control A160, data drivers A154, scan drivers A152, lamp drivers A168, a power controller A153 and also shown are four lamps, A157a-d that operate under independent control as light sources for the MEMS display panel A12. The lamps A157a-d have different colors (red, green, blue and white) for providing color images/video and monochromatic images/video. The lamps A157a-d are shown as separate elements, but commonly these lamps are integrated with the housing of the display panel. The MEMS display controller A150 may be comprised of programmable logic elements, such as FPGAs, and discreet circuit components. In one embodiment, the controller A156 is an FPGA device programmed to implement the power controller A153, Display Interface A158, frame buffer A159 and sequencer/timing control A160. The scan driver A152, data driver A154 and lamp driver A168 may be discreet circuit components, such as custom integrated circuits, commercially available drivers and/or discreet transistors.

The plurality of scan drivers A 152 (also referred to as "write enabling voltage sources") and plurality of data drivers A 154 (also referred to as "data voltage sources") are electrically coupled to the control matrix of display A12. The scan drivers A152 apply write enabling voltages to scan-line interconnects, such as scan line interconnects A506 depicted in Figure 24A. The data drivers A154 apply data voltages to the data interconnects A508. In some embodiments of the MEMS display controller, the data drivers A154 are configured to provide analog data voltages to the shutter assemblies, especially where the gray scale of the image is to be derived in an analog fashion. In analog operation the shutter assemblies A616 are designed such that when a range of intermediate voltages is applied through the data interconnects A508 there results a range of intermediate open states in the shutters and therefore a range of intermediate illumination states or gray scales in the image.

In other cases the data drivers A154 are configured to apply only a reduced set of 2, 3, or 4 digital voltage levels to the control matrix. These voltage levels are designed to set, in digital fashion, either an open state, a closed state or an intermediate state to each of the shutters.

The scan drivers A152 and the data drivers A154 are connected to digital controller circuit A156 (also referred to as the "controller A156"). The controller includes a display interface A158 which processes incoming image signals into a digital image format appropriate to the spatial addressing and the gray scale capabilities and mode of operation of the display A 12. The pixel location and gray scale data of each image is stored in a frame buffer A159 so that the data can be fed out as needed to the data drivers A 154. The data is sent to the data drivers A 154 in serial or parallel transmission, organized in predetermined sequences grouped by rows and by image frames. The data drivers A154 can include series to parallel data converters, level shifting, and for some applications digital to analog voltage converters.

All of the drivers (e.g., scan drivers A152, data drivers A154, actuation driver A153 and global actuation driver A155 (not shown)) for different display functions are time-synchronized by a timing-control A160 in the controller A156. Timing commands coordinate the independent, dependent or synchronized illumination of red, green, blue and white lamps A157a-d and via lamp drivers A168, the write-enabling and sequencing of specific rows of the array of pixels, the output of voltages from the data drivers A154, and for the output of voltages that provide for shutter actuation.

The controller A156 may include program logic to implement a color image generator that determines the sequencing or addressing scheme by which each of the shutters in the array can be re-set as appropriate to a new image. New images can be set at periodic intervals. For instance, for video displays, the color images or frames of the video are refreshed at frequencies ranging from 10 to 1000 Hertz although the frequency can vary based on the application. In some embodiments the setting of an image frame is synchronized with the illumination of a backlight such that alternate image frames are illuminated with an alternating series of colors, such as red, green, blue, and white. The image frames for each respective color is referred to as a color sub-frame. The FPGA can have program logic to implement a light controller to carry out the sequential activation of the LEDs. In this method, referred to as the field sequential color method, if the color sub-frames are alternated at frequencies in excess of 20 Hz and preferably 180Hz, the user perceives an average of the alternating frame images and sees an image having a broad and continuous range of colors. The duration of the color subframe can vary depending upon the application, and by varying the duration of the frametime image parameters such as brightness, the color saturation and depth may be controlled and the power used may be controlled as well. For example, the controller A 156 can adjust the color depth of images being displayed to control power being used by the display, with the color depth selected as a function of the image being displayed. In a cell phone application, the controller A156 can identify an image signal incoming to the controller A156 representative of text. For example, when the user uses the keypad interface, the program logic can determine that a phone number is being entered and is to be displayed as an image. In this state, the controller A156 enters a monochromatic mode of operation. The controller A156 activates the drivers to set up the shutters to display a monochromatic image of the phone number and activates the light source in a low frequency or steady state mode as sequencing through multiple alternate image formats for different color components is not required in monochromatic mode. This reduces power use avoiding spending power on driving the shutters to alternate image formats and avoids driving the LEDs at a switching rate or with a frame timing that uses power. A similar mode of operation may be adapted by reducing the color depth when possible and therefore reducing the number of times the shutters need to be driven to set up alternate images and allowing a longer timeframe for driving the LEDs. The color image generation may be carried out by the controller A156, or separate logic devices may be used for the color image generator.

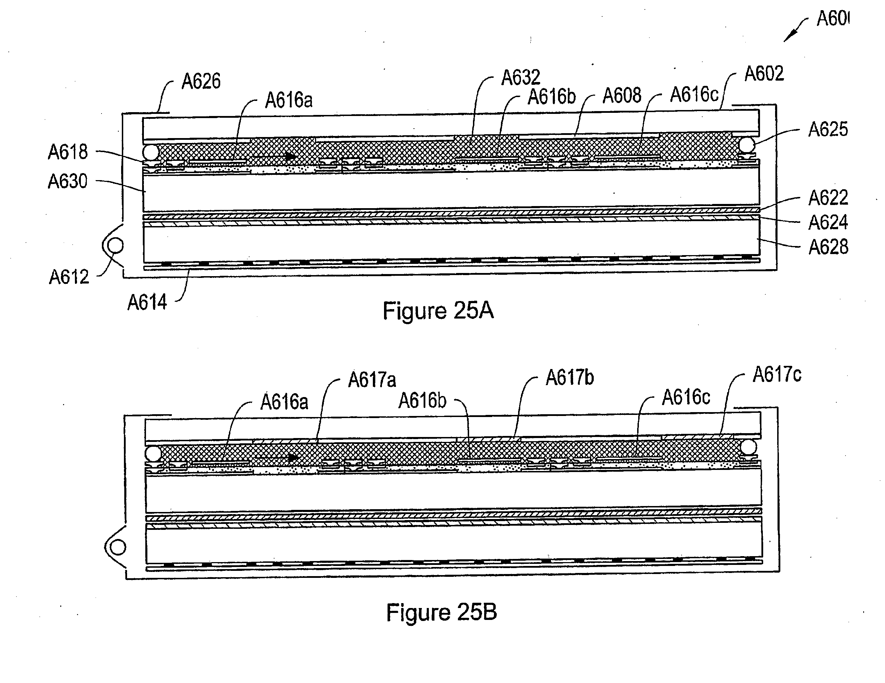

In an alternative embodiment, the MEMS display A12 includes at least one color filter layer and typically the color filter layer places colored filters in the path of light being modulated by a group of respective shutters. To this end, the MEMS display may have a color filter layer, such as the color filter layer depicted in Figure 25B which shows a color filter layer disposed between the cover plate A602 and the shutters A616. In particular, the color filter layer is integrated into the black matrix A608 and provides a red filter segment A617a over shutter assembly A616a, a blue filter segment A617b over shutter assembly A616b, and a green filter segment A617c over shutter assembly A616c. The three shutter assemblies A616a-A616c can be operated by the MEMS display controller A70 separately and is a coordinated movement process that sets up the image over the three shutter assemblies A616a-c, one shutter being used for each color component of the image. The three shutter assemblies work together to provide a pixel for the display. To this end the MEMS display controller A70 can generate a red image, a blue image and a green image, each of which is stored in the frame buffer A159 and sent out to the scan driver A152 and data drivers A154. In this embodiment, only the white lamp A157d is needed and color arises from the color filter layer. In other embodiment, other filter colors and filter arrangements may be used.

If the display apparatus is designed for the digital switching of shutters between open and closed states, the controller A156 can control the addressing sequence and/or the time intervals between image frames to produce images with appropriate gray scale. The process of generating varying levels of grayscale by controlling the amount of time a shutter is open in a particular frame is referred to as time division gray scale. In one embodiment of time division gray scale, the controller A156 determines the time period or the fraction of time within each frame that a shutter is allowed to remain in the open state, according to the illumination level or gray scale desired of that pixel. In another embodiment of time division gray scale, the frame time is split into, for instance, 15 equal time-duration sub-frames according to the illumination levels appropriate to a 4-bit binary gray scale. The controller A156 then sets a distinct image into each of the 15 sub-frames. The brighter pixels of the image are left in the open state for most or all of the 15 sub-frames, and the darker pixels are set in the open state for only a fraction of the sub-frames. In another embodiment of time-division gray scale, the controller circuit A156 alters the duration of a series of sub-frames in proportion to the bit-level significance of a coded gray scale word representing an illumination value. That is, the time durations of the sub-frames can be varied according to the binary series 1,2,4,8 ... The shutters A108 for each pixel are then set to either the open or closed state in a particular sub-frame according to the bit value at a corresponding position within the binary word for its intended gray level.

A number of hybrid techniques are available for forming gray scale which combine the time division techniques described above with the use of either multiple shutters per pixel or via the independent control of backlight intensity. These techniques are described further below.

Addressing the control matrix, i.e., supplying control information to the array of pixels, is, in one implementation, accomplished by a sequential addressing of individual lines, sometimes referred to as the scan lines or rows of the matrix. By applying Vwe to the write-enable interconnect for a given scan line and selectively applying data voltage pulses Vd to the data interconnects A508 for each column, the control matrix can control the movement of each shutter in the write-enabled row. By repeating these steps for each row of pixels in the MEMS display A 12, the control matrix can complete the set of movement instructions to each pixel in the MEMS display A12.

In one alternative implementation, the control matrix applies Vwe to the write-enable interconnects of multiple rows of pixels simultaneously, for example, to take advantage of similarities between movement instructions for pixels in different rows of pixels, thereby decreasing the amount of time needed to provide movement instructions to all pixels in the MEMS display A12. In another alternative implementation, the rows are addressed in a non-sequential, e.g., in a pseudo-randomized order, to minimize visual artifacts that are sometimes produced, especially in conjunction with the use of a coded time division gray scale.

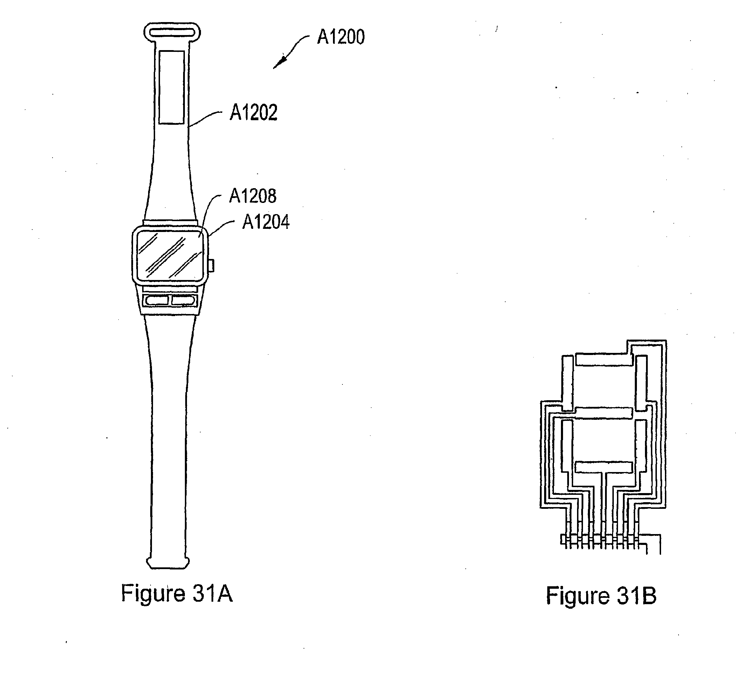

In alternative embodiments, the array of pixels and the control matrices that control the pixels incorporated into the array may be arranged in configurations other than rectangular rows and columns. For example, the pixels can be arranged in hexagonal arrays or curvilinear rows and columns and as segmented displays as depicted in Figure 31B. In general, as used herein, the term scan-line shall refer to any plurality of pixels that share a write-enabling interconnect.

### Control Matrices and Methods of Operation Thereof

Figure 24A is a conceptual diagram of a control matrix A500 suitable for inclusion in the display panel A12 for addressing an array of pixels. Figure 24B is an isometric view of a portion of an array of pixels including the control matrix A500. Each pixel A501 includes an elastic shutter assembly A502 controlled by an actuator A503.

The control matrix A500 is fabricated as a diffused or thin-film-deposited electrical circuit on the surface of a substrate A504 on which the shutter assemblies A502 are formed. The control matrix A500 includes a scan-line interconnect A506 for each row of pixels A501 in the control matrix A500 and a data-interconnect A508 for each column of pixels A501 in the control matrix A500. Each scan-line interconnect A506 electrically connects a write-enabling voltage source A507 to the pixels A501 in a corresponding row of pixels A501. Each data interconnect A508 electrically connects a data voltage source, ("Vd source") A509 to the pixels A501 in a corresponding column of pixels. In control matrix A500, the data voltage Vd provides the majority of the energy necessary for actuation. Thus, the data voltage source A509 also serves as an actuation voltage source. In alternate embodiments the actuation voltage, Vd, can be a common interconnections to the cells of the display.

For each pixel A501 or for each shutter assembly in the array, the control matrix A500 includes a transistor A510 and an optional capacitor A512. The gate of each transistor is electrically connected to the scan-line interconnect A506 of the row in the array in which the pixel A501 is located. The source of each transistor A510 is electrically connected to its corresponding data interconnect A508. The shutter assembly A502 includes an actuator with two electrodes. The two electrodes have significantly different capacitances with respect to the surroundings. The transistor connects the data interconnect A508 to the actuator electrode having the lower capacitance. More particularly the drain of each transistor A510 is electrically connected in parallel to one electrode of the corresponding capacitor A512 and to the lower capacitance electrode of the actuator. The other electrode of the capacitor A512 and the higher capacitance electrode of the actuator in shutter assembly A502 are connected to a common or ground potential. In operation, to form an image, the MEMS controller A70 drives the control matrix A500 to write-enable each row in the array in sequence by applying Vwe to each scan-line interconnect A506 in turn. For a write-enabled row, the application of Vwe to the gates of the transistors A510 of the pixels A501 in the row allows the flow of current through the data interconnects A508 through the transistors to apply a potential to the actuator of the shutter assembly A502. While the row is write-enabled, data voltages Vd are selectively applied to the data interconnects A508. In implementations providing analog gray scale, the data voltage applied to each data interconnect A508 is varied in relation to the desired brightness of the pixel A501 located at the intersection of the write-enabled scan-line interconnect A506 and the data interconnect A508. In implementations providing digital control schemes, the data voltage is selected to be either a relatively low magnitude voltage (i.e., a voltage near ground) or to meet or exceed Vat (the actuation threshold voltage). In response to the application of Vat to a data interconnect A508, the actuator in the corresponding shutter assembly A502 actuates, opening the shutter in that shutter assembly A502. The voltage applied to the data interconnect A508 remains stored in the capacitor A512 of the pixel even after the control matrix A500 ceases to apply Vwe to a row. It is not necessary, therefore, to wait and hold the voltage Vwe on a row for times long enough for the shutter assembly A502 to actuate; such actuation can proceed after the write-enabling voltage has been removed from the row. The voltage in the capacitors A510 in a row remain substantially stored until an entire video frame is written, and in some implementations until new data is written to the row.

The control matrix A500 can be manufactured through use of the following sequence of processing steps:
First an aperture layer A550 is formed on a substrate A504. If the substrate A504 is opaque, such as silicon, then the substrate A504 serves as the aperture layer A550, and aperture holes A554 are formed in the substrate A504 by etching an array of holes through the substrate A504. If the substrate A504 is transparent, such as glass, then the aperture layer A550 may be formed from the deposition of a light blocking layer on the substrate A504 and etching of the light blocking layer into an array of holes. The aperture holes A554 can be generally circular, elliptical, polygonal, serpentine, or irregular in shape. If the light blocking layer is also made of a reflective material, such as a metal, then the aperture layer A550 can act as a mirror surface which recycles non-transmitted light back into an attached backlight for increased optical efficiency. Reflective metal films appropriate for providing light recycling can be formed by a number of vapor deposition techniques including sputtering, evaporation, ion plating, laser ablation, or chemical vapor deposition. Metals that are effective for this reflective application include, without limitation, Al, Cr, Au, Ag, Cu, Ni, Ta, Ti, Nd, Nb, Si, Mo, Rh and/or alloys thereof. Thicknesses in the range of 30 nm to 1000 nm are sufficient.
Second, an intermetal dielectric layer is deposited in blanket fashion over the top of the aperture layer metal A550.
Third, a first conducting layer is deposited and patterned on the substrate. This conductive layer can be patterned into the conductive traces of the scan-line interconnect A506. Any of the metals listed above, or conducting oxides such as indium tin oxide, can have sufficiently low resistivity for this application. A portion of the scan line interconnect A506 in each pixel is positioned to so as to form the gate of a transistor A510.
Fourth, another intermetal dielectric layer is deposited in blanket fashion over the top of the first layer of conductive interconnects, including that portion that forms the gate of the transistor A510. Intermetal dielectrics sufficient for this purpose include SiO2, Si3N4, and Al2O3 with thicknesses in the range of 30 nm to 1000 nm.
Fifth, a layer of amorphous silicon is deposited on top of the intermetal dielectric and then patterned to form the source, drain and channel regions of a thin film transistor active layer. Alternatively this semiconducting material can be polycrystalline silicon.
Sixth, a second conducting layer is deposited and patterned on top of the amorphous silicon. This conductive layer can be patterned into the conductive traces of the data interconnect A508. The same metals and/or conducting oxides can be used as listed above. Portions of the second conducting layer can also be used to form contacts to the source and drain regions of the transistor A510.
Capacitor structures such as capacitor A512 can be built as plates formed in the first and second conducting layers with the intervening dielectric material.
Seventh, a passivating dielectric is deposited over the top of the second conducting layer.
Eighth, a sacrificial mechanical layer is deposited over the top of the passivation layer. Vias are opened into both the sacrificial layer and the passivation layer such that subsequent MEMS shutter layers can make electrical contact and mechanical attachment to the conducting layers below.
Ninth, a MEMS shutter layer is deposited and patterned on top of the sacrificial layer. The MEMS shutter layer is patterned with shutters A502 as well as actuators A503 and is anchored to the substrate A504 through vias that are patterned into the sacrificial layer. The pattern of the shutter A502 is aligned to the pattern of the aperture holes A554 that were formed in the first aperture layer A550. The MEMS shutter layer may be composed of a deposited metal, such as Au, Cr or Ni, or a deposited semiconductor, such as polycrystalline silicon or amorphous silicon, with thicknesses in the range of 300 nanometers to 10 microns. Optionally, the shutter may be a composite shutter comprising a layer of a metal between two other layers, such as two layers of amorphous silicon.
Tenth, the sacrificial layer is removed such that components of the MEMS shutter layer become free to move in response to voltages that are applied across the actuators A503.
Eleventh, the sidewalls of the actuator A503 electrodes are coated with a dielectric material to prevent shorting between electrodes with opposing voltages.

Many variations on the above process are possible. For instance the reflective aperture layer A550 of step 1 can be combined into the first conducting layer. Gaps are patterned into this conducting layer to provide for electrically conductive traces within the layer, while most of the pixel area remains covered with a reflective metal. In another embodiment, the transistor A510 source and drain terminals can be placed on the first conducting layer while the gate terminals are formed in the second conducting layer. In another embodiment the semiconducting amorphous or polycrystalline silicon is placed directly below each of the first and second conducting layers. In this embodiment vias can be patterned into the intermetal dielectric so that metal contacts can be made to the underlying semiconducting layer. Further, the devices described herein can work with many different control matrices, including active and/or passive matrices.

As described in relation to Figure 24B, the actuators included in the shutter assembly may be designed to be mechanically bi-stable. Alternatively, the actuators can be designed to have only one stable position. That is, absent the application of some form of actuation force, such actuators return to a predetermined position, either open or closed. In such implementations, the shutter assembly includes a single actuation electrode, which, when energized, causes the actuator to push or pull the shutter out of its stable position. The MEMS display controller A70 can drive the shutters individually, in groups or universally. To this end, in one embodiment, the MEMS display controller A70 includes program logic to provide a sync controller that generates a sync pulse to move all or at least a group of shutters in the display to a selected condition or state. A timer implemented in the FPGA can set timing intervals for driving the sync pulse, as well as for driving other timed operations, such as but not limited to, timeframes for field sequential color operations, which can set up signals for driving the lamps and the shutters. Additionally, the FPGA timer can monitor the user input devices to change the state of the display, typically to a lower power state, if a predetermined time interval such as 30 seconds, has passed since the user activated an input device.

### Display Panels

Figure 25A is a cross-sectional view of one embodiment of a shutter-based light modulation panel A600 suitable for use with handheld portable devices described herein. The display panel A600 includes an optical cavity disposed beneath the light modulating layer A618, a light source A612, a light modulation layer A618, and a cover plate A602. The optical cavity includes a rear-facing reflective surface in the light modulation array A618, a light guide A628, a front-facing rear-reflective surface A614, a diffuser A624, and a brightness enhancing film A622.

The space between the light modulation array A618 and the cover plate A602 is filled with a lubricant A632. The cover plate A602 is attached to the shutter assembly with an epoxy A625, such as EPO-TEK B9021-1, sold by Epoxy Technology, Inc. The epoxy also serves to seal in the lubricant A624.

A sheet metal or molded plastic assembly bracket A626 holds the cover plate A602, the light modulation layer A618, and the optical cavity together around the edges. The assembly bracket A626 is fastened with screws or indent tabs to add rigidity to the combined device. In some implementations, the light source A612 is formed in place by an epoxy potting compound.

The display panel A600 may be seated into a housing, typically seating the plastic assembly bracket against one or more panel supports within the housing. In one embodiment, the panel support may be a molded plastic sidewall that is dimensioned to support the peripheral edge of the display panel A600. A resilient gasket may be placed over the molded sidewall to provide shock protection and the panel may be bonded to the gasket.

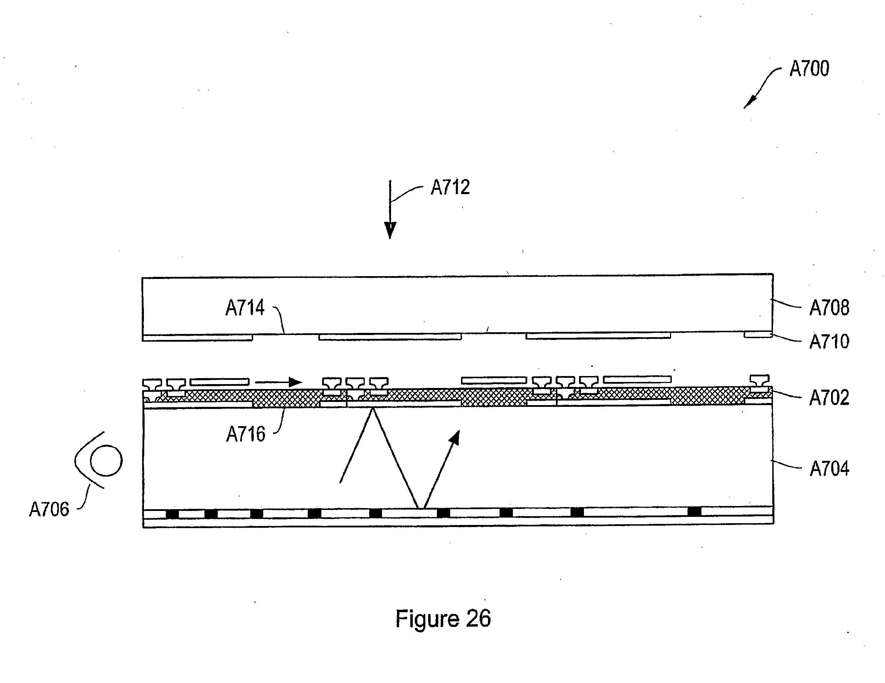

Figure 26 is a cross sectional view of a shutter-based spatial light modulator A700. The shutter-based spatial light modulator A700 includes a light modulation array A702, an optical cavity A704, and a light source A706. In addition, the spatial light modulator includes a cover plate A708.

The cover plate A708 serves several functions, including protecting the light modulation array A702 from mechanical and environmental damage. The cover plate A708 is a thin transparent plastic, such as polycarbonate, or a glass sheet. The cover plate can be coated and patterned with a light absorbing material, also referred to as a black matrix A710. The black matrix can be deposited onto the cover plate as a thick film acrylic or vinyl resin that contains light absorbing pigments. Optionally, a separate layer may be provided.

The black matrix A710 absorbs substantially all incident ambient light A712 ambient light is light that originates from outside the spatial light modulator A700, from the vicinity of the viewer -- except in patterned light-transmissive regions A714 positioned substantially proximate to light-transmissive regions A716 formed in the optical cavity A704. The black matrix A710 thereby increases the contrast of an image formed by the spatial light modulator A700. The black matrix A710 can also function to absorb light escaping the optical cavity A704 that may be emitted, in a leaky or time-continuous fashion.

In one implementation, color filters, for example, in the form of acrylic or vinyl resins are deposited on the cover plate A708. The filters may be deposited in a fashion similar to that used to form the black matrix A710, but instead, the filters are patterned over the open apertures light transmissive regions A716 of the optical cavity A704. The resins can be doped alternately with red, green, blue or other pigments.

The spacing between the light modulation array A702 and the cover plate A708 is less than 100 microns, and may be as little as 10 microns or less. The light modulation array A702 and the cover plate A708 preferably do not touch, except, in some cases, at predetermined points, as this may interfere with the operation of the light modulation array A702. The spacing can be maintained by means of lithographically defined spacers or posts, 2 to 20 microns tall, which are placed in between the individual right modulators in the light modulators array A702, or the spacing can be maintained by a sheet metal spacer inserted around the edges of the combined device.

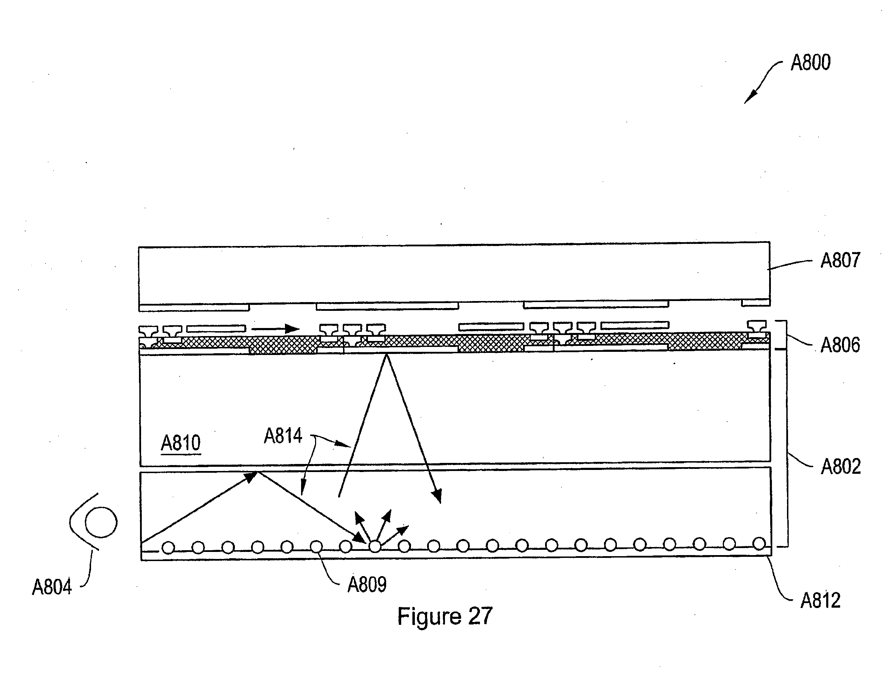

Figure 27 is a cross sectional view of a shutter-based spatial light modulator A800. The shutter-based spatial light modulator A800 includes an optical cavity A802, a light source A804, and a light modulation layer A806. In addition, the shutter-based spatial light modulator A804 includes a cover plate A807, such as the cover plate A708 described in relation to Figure 26.

The optical cavity A802, in the shutter-based spatial light modulator A800, includes a light guide A808 and the rear-facing portion of the light modulation array A806. The light modulation array A806 is formed on its own substrate A810. Both the light guide A808 and the substrate A810 each have front and rear sides. The light modulation array A806 is formed on the front side of the substrate A810. A front-facing, rear-reflective surface A812, in the form of a second metal layer, is deposited on the rear side of the light guide A808 to form the second reflective surface of the optical cavity A802. Alternatively, the optical cavity A802 includes a third surface located behind and substantially facing the rear side of the light guide A808. In such implementations, the front-facing, rear-reflective surface A812 is deposited on the third surface facing the front of the spatial light modulator A800, instead of directly on the rear side of the light guide A808. The light guide A808 includes a plurality of light scattering elements A809 distributed in a predetermined pattern on the rear-facing side of the light guide A808 to create a more uniform distribution of light throughout the optical cavity.

In one implementation, the light guide A808 and the substrate A810 are held in intimate contact with one another. They are preferably formed of materials having similar refractive indices so that reflections are avoided at their interface. In another implementation small standoffs or spacer materials keep the light guide A808 and the substrate A810 a predetermined distance apart, thereby optically decoupling the light guide A808 and substrate A810 from each other. The spacing apart of the light guide A808 and the substrate A810 results in an air gap A813 forming between the light guide A808 and the substrate A810. The air gap promotes total internal reflections within the light guide A808 at its front-facing surface, thereby facilitating the distribution of light A814 within the light guide before one of the light scattering elements A809 causes the light A814 to be directed toward the light modulator array A806 shutter assembly. Alternatively, the gap between the light guide A808 and the substrate A810 can be filled by a vacuum, one or more selected gasses, or a liquid.

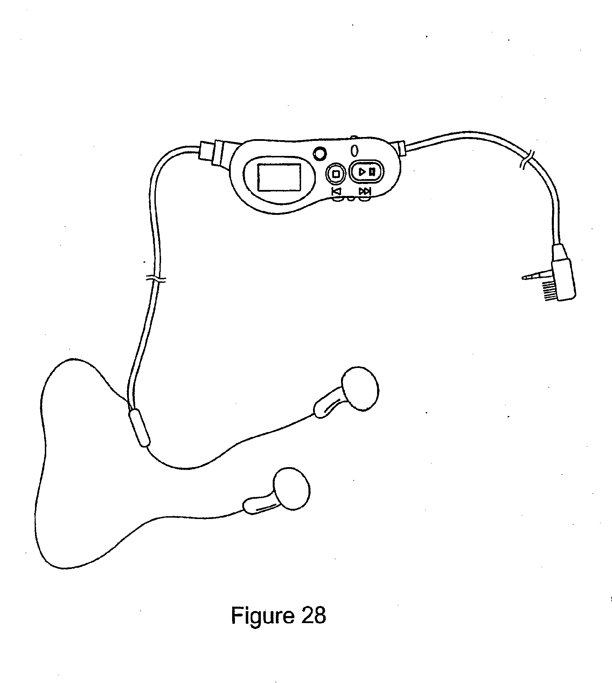

Figure 28 depicts a portable handheld device comprising a media player having a display located within the media player and capable of presenting graphic and text information to the user. More particularly, the embodiment of Figure 28 depicts an MP3 player of the type commonly employed for listening to music stored on digital media. In the depicted embodiment the housing is adapted to be held within the hand of the user or clipped to the user's clothing to allow for hands free transport of the device. The user interface includes a plurality of buttons located on the exterior of the housing and the display panel. The MP3 player depicted in Figure 28 may include a display controller similar to the display controller depicted in Figure 23. The display controller may have modes of operation capable of reducing power draw employed to present images on the display thereby prolonging the useable life of the onboard power source.

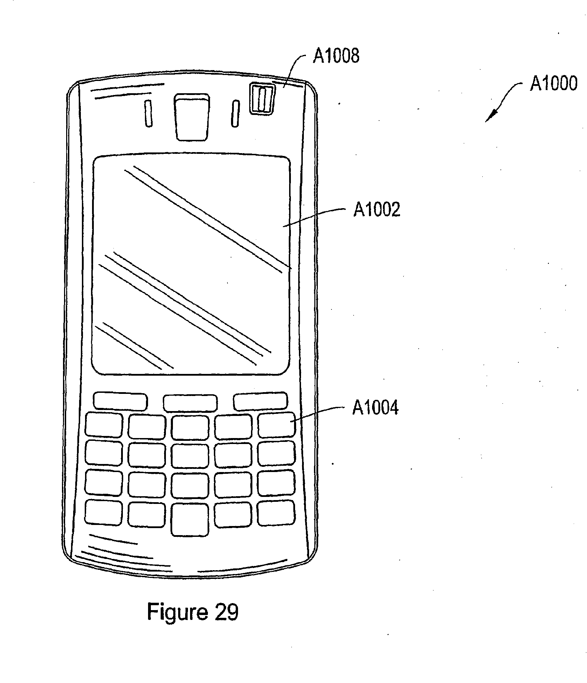

Figure 29 depicts another application of the systems and methods described herein. In particular, Figure 29 depicts a smart phone handheld portable device A1000 having a housing A1008, a display panel A1002, and a user interface device depicted as the keypad A1004. The smart phone handheld portable device A 1000 includes a MEMS display panel that may be comparable to the above described MEMS display panels and has a MEMS display controller comparable to the controller described above with reference to the device A10 shown in Figure 20. Optionally, the MEMS display controller of the system A1000 may include an optional power reserve mode wherein the power controller A153 of the MEMS display controller A150 determines that the power source is running low or has dropped below a predetermined threshold value. In such a mode of operation, which may be optionally user selectable, the MEMS display controller A150 operates in a low power mode to conserve power for the primary function of the smart phone device A1000 which is typically cellular communication. To this end, the MEMS display controller A150 may display image signals as monochromatic, typically black and white, static still signals on the display A1002. In the way, the display controller will deactivate field sequential color operations and use the while LED A 157d for the purpose of illuminating the display A 1002. The power controller A 153 may adjust the amplitude at which the while LED A157b is driven, selecting a low power mode of operation that drives the white LED A157d with a constant DC voltage that is sufficient to illuminate the display. Commercially available white LED devices operate in the 10 to 30 milliwatt range providing minimal draw from the power source A76.

The depicted smartphone may also have a touch sensitive screen as described above. The touch screen may be a commercially available touch screen that overlays the MEMS display panel, or at least a section of that panel. In this embodiment, the cover plate of the MEMS display panel may have a thickness selected to prevent an inward deflection of the display panel when the user presses downwardly with a finger or stylus. The thickness will vary depending upon the material, and can range from 2mm to 500mm. Additionally, a support, such as the posts A640, may be positioned between the moveable shutters and the cover plate to keep the cover plate spaced away from the shutters. The optional fluid lubricant also provides a hydraulic support that reduces inward deflection of the cover plate toward the moveable shutters. The MEMS display panel can avoid the ripple effect that touch sensitive LCD screens suffer from and provide better resolution during data input.

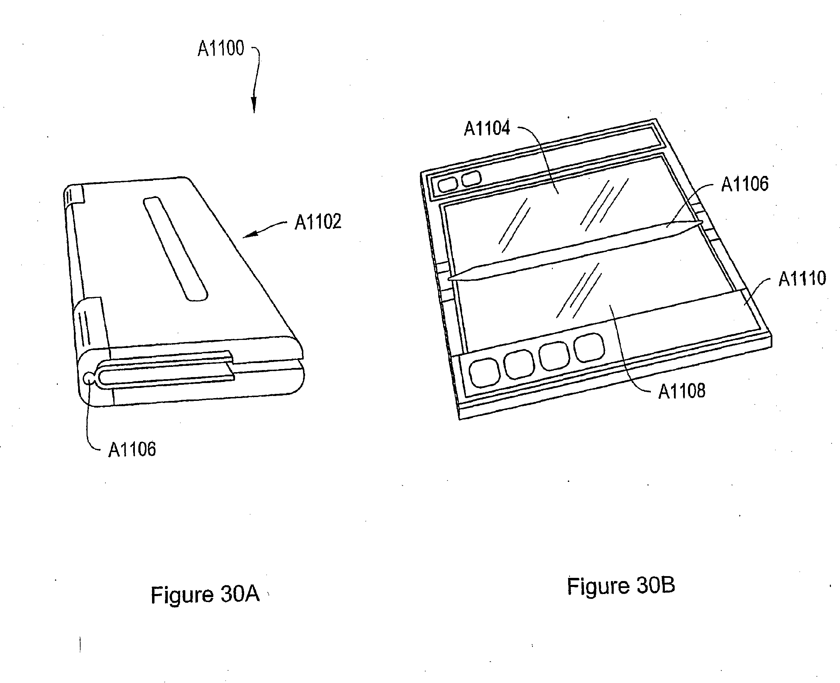

In particular, an e-book application is depicted in figure 30 where the e-book device is shown in Figure 30A as being in a closed position and being in an open position in Figure 30B. An e-book device is generally understood as an electronic display device capable of presented text to a user by reading a digital media device that stores the text, which may be a novel, newspaper, or other information, onto a display. In the embodiment depicted in Figures 30A and 30B the e-book A1100 incudes a housing, A1102 that has a hinge A1106 for allowing one half of the housing to close over the second half of the housing. As further depicted in Figure 30B, the e-book A1100 may have a first panel A1104 and a second panel A1108. A keypad A1110 can provide a series of user input devices that the user can use for manipulating which images appear on either of the screens A1104 or A1108.

In the embodiment depicted in Figures 30A and 30B, the e-book portable handheld device may have a MEMS display panel comparable to the MEMS display panels discussed above and may have a MEMS display controller comparable to the MEMS display controllers described as well above. The e-book A1100 is typically operated in a monochromatic mode where the MEMS display controller uses a white LED to drive static black and white images of text information to the user. In certain embodiments, color images such as a book cover or an image from the book may be displayed to the user as part of the content stored on the digital media, and in those instances the MEMS display controller may use field sequential color generation techniques such as those described above, to generate a color image on either of the display panels A1104 and A1108. The MEMS display controller may have a monochromatic mode of operation for generation static still images that the user pages through by using the user interface devices A1110. The MEMS display controller may have a monochromatic mode of operation running through controller A156 that sets up images in the frame buffer for display. The MEMS display controller can set shutters of the MEMS device into a configuration suitable for depicting the text information to be displayed to the user. Optionally, the operation mode may be in black and white or some other monochromatic color set that uses a lower power LED such as a white LED that is driven by a steady state voltage or by a light source that switches at a relatively slow rate sufficient for presenting graphic still images.

Figures 31A and 31B depict a further embodiment of the portable handheld devices described herein. In particular, Figure 31A depicts a wristwatch A1200 that has a wrist strap A1202 that attaches the body of the wristwatch A1200 to the arm of the user. The wristwatch A1200 includes a housing A1204 that includes a display panel A1208. The display panel is a MEMS display panel that may be comparable to the MEMS display panels discussed above. The MEMS display panel fits within a watch housing that has a form factor suitable for being carried on the user's wrist.

In the embodiment depicted in Figure 31A the MEMS display panel A1208 may include a segmented display section such as the segmented display sections discussed above. In particular, the display panel A1208 may comprise or include a display panel that has a display panel that has a segmented section such as the segmented section depicted in Figure 31B. Figure 31B illustrates one example of a segmented display that includes seven segments arranged into a figure eight. Each of the segments may include a plurality of shutter assemblies comparable to those discussed above that include transversely movable shutters capable of modulating light. Each of the segments has a group of shutter assemblies that are wired together and will therefore respond together to commands from the MEMS display controller contained within the watch A1200. The depicted segments may be formed on a class substrate that optionally is positioned above a light source. However, in the embodiment depicted in Figure 31B, the light source may be a front light source, or optionally the display may be reflective for a reflective display, the transversally movable shutters may be reflective, or may slide over a reflective surface. Either way the transverse shutters will modulate light such that the respective segment in the seven segment display may be set in an on condition or an off condition as appropriate. As discussed above the segments may be monochromatic or may be colored and to that end the MEMS segment display controller may use field sequential color control or colored filters may be applied to the display as also discussed above.

In the embodiment depicted in Figure 31B, the segmented display is shown as an independent display. However, the segmented display of Figure 31B may be one of a plurality of segmented displays laid out in a linear alignment so that a date, time, or other information can be displayed on the plural segmented displays. Additionally, the segmented displays may be formed on a substrate that also contains a matrix of transversally movable shutters thus providing a display that had integrated on it both a segmented display section and a pixilated display section. For example, in the watch application, the watch A 1200 may have a upper section that is a pixilated display and allows for the presentation of an image such as a watch face, compass rose, or other image. Beneath the pixilated matrix may be the segmented display that can be used for presenting a readout of time, date, stop watch functions, as well as segmented display sections used for presenting icons such as whether an alarm is set, whether the time is am or pm, and a designation of the date such as WE to stand for Wednesday.

To this end, the MEMS display controller may include a segment display driver capable of driving a segmented display under the program control of the controller.

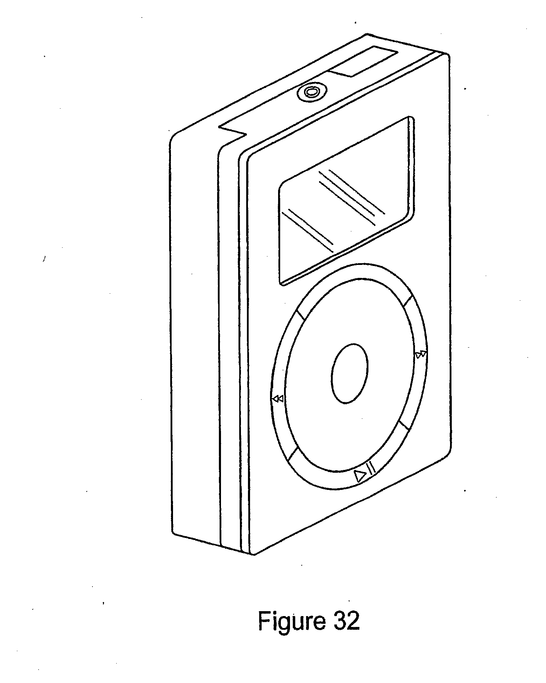

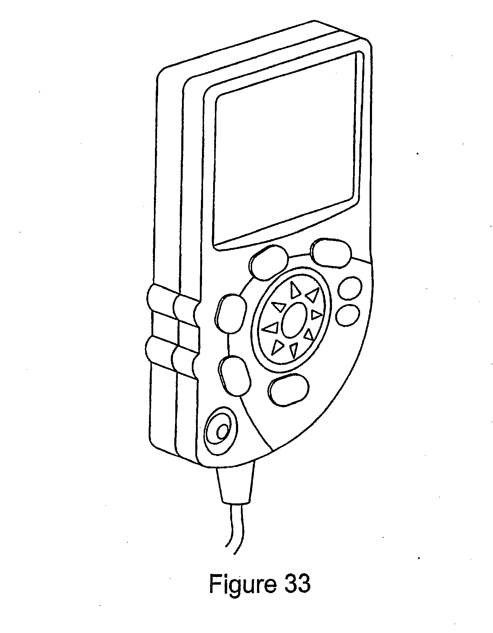

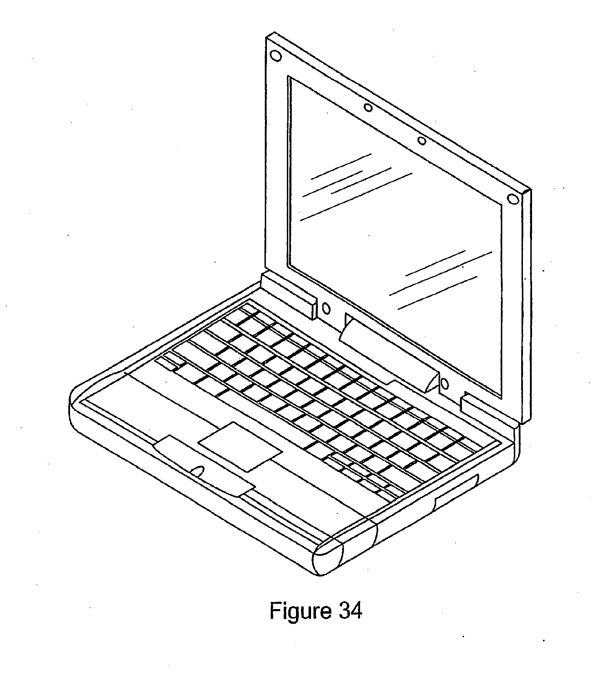

Figure 32 depicts a media player having a display panel comparable to the MEMS display panels described above. Figure 33 depicts a GNSS receiver having a display panel also similar to the display panels discussed above. Figure 34 depicts a laptop computer having a display panel also comparable to the display panels discussed above. The laptop computer can employ the MEMS display controller to have power modes that conserve power in response to ambient light conditions measured by a light level detector, and in response to user controls and power source levels. For example, the systems and methods described herein can detect available power, or user input to conserve power, and move the mode of operation to a monochromatic mode, or chose a bit depth, such as 4 bit color, that provides a limited set of colors and conserves power.

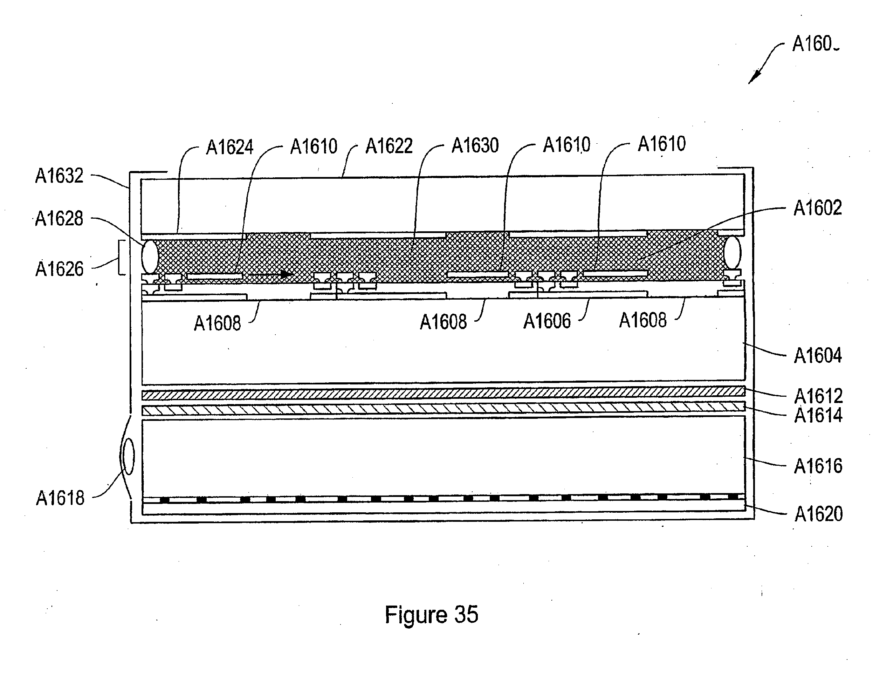

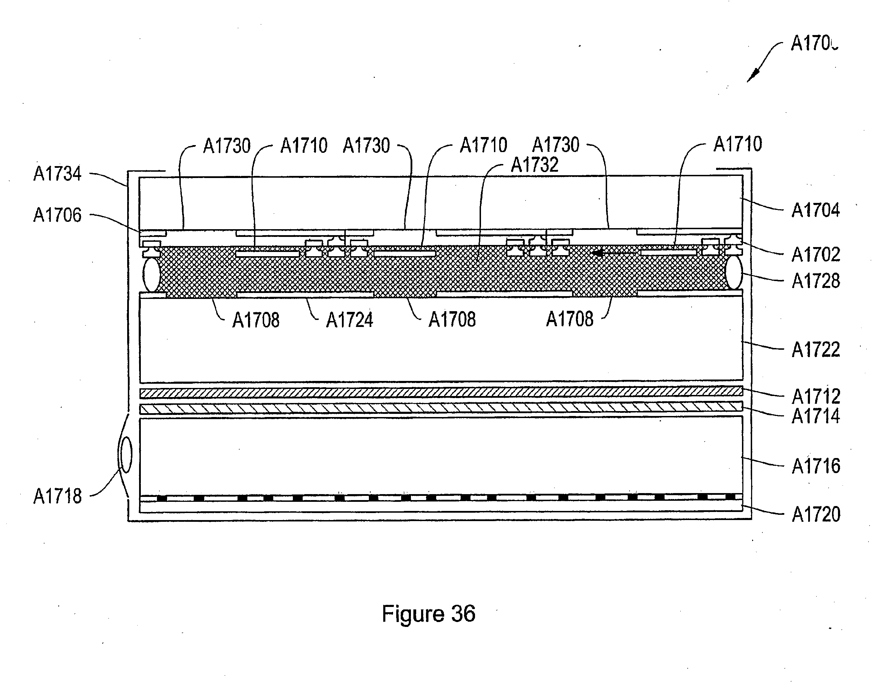

The invention may be embodied in other specific forms without departing from the spirit or essential characteristics thereof. For example, Figures 35 and 36 depict alternate embodiments of MEMS display panels.

Figure 35 is a cross sectional view of a display assembly A1600 incorporating shutter assemblies A1602. The shutter assemblies A1602 are disposed on a glass substrate A1604. A reflective film A1606 disposed on the substrate A1604 defines a plurality of surface apertures A1608 located beneath the closed positions of the shutters A1610 of the shutter assemblies A1602. The reflective film A1606 reflects light not passing through the surface apertures A1608 back towards the rear of the display assembly A1600. An optional diffuser A1612 and an optional brightness enhancing film A1614 can separate the substrate A1604 from a backlight A1616. The backlight A1616 is illuminated by one or more light sources A1618. The light sources A1618 can be, for example, and without limitation, incandescent lamps, fluorescent lamps, lasers, or light emitting diodes. A reflective film A1620 is disposed behind the backlight A1616, reflecting light towards the shutter assemblies A1602. Light rays from the backlight that do not pass through one of the shutter assemblies A1602 will be returned to the backlight and reflected again from the film A1620. In this fashion light that fails to leave the display to form an image on the first pass can be recycled and made available for transmission through other open apertures in the array of shutter assemblies A1602. Such light recycling has been shown to increase the illumination efficiency of the display. A cover plate A1622 forms the front of the display assembly A1600. The rear side of the cover plate A1622 can be covered with a black matrix A1624 to increase contrast. The cover plate A1622 is supported a predetermined distance away from the shutter assemblies A1602 forming a gap A1626. The gap A1626 is maintained by mechanical supports and/or by an epoxy seal A1628 attaching the cover plate A1622 to the substrate A1604. The epoxy A1628 should have a curing temperature preferably below about 200 C, it should have a coefficient of thermal expansion preferably below about 50 ppm per degree C and should be moisture resistant. An exemplary epoxy A1628 is EPO-TEK B9016-1, sold by Epoxy Technology, Inc.

The epoxy seal A1628 seals in a working fluid A1630. The working fluid A1630 is engineered with viscosities preferably below about 10 centipoise and with relative dielectric constant preferably above about 2.0, and dielectric breakdown strengths above about 10⁴ V/cm. The working fluid A1630 can also serve as a lubricant. Its mechanical and electrical properties are also effective at reducing the voltage necessary for moving the shutter between open and closed positions. In one implementation, the working fluid A1630 preferably has a low refractive index, preferably less than about 1.5. In another implementation the working fluid A1630 has a refractive index that matches that of the substrate A1604. Suitable working fluids A1630 include, without limitation, de-ionized water, methanol, ethanol, silicone oils, fluorinated silicone oils, dimethylsiloxane, polydimethylsiloxane, hexamethyldisiloxane, and diethylbenzene.

A sheet metal or molded plastic assembly bracket A 1632 holds the cover plate A1622, shutter assemblies A1602, the substrate A1604, the backlight A1616 and the other component parts together around the edges. The assembly bracket A 1632 is fastened with screws or indent tabs to add rigidity to the combined display assembly A 1600. In some implementations, the light source A1618 is molded in place by an epoxy potting compound.

Figure 36 is a cross sectional view of a display assembly A1700 incorporating shutter assemblies A1702. The shutter assemblies A1702 are disposed on a glass substrate A 1704.

Display assembly A1700 includes a backlight A1766, which is illuminated by one or more light sources A1718. The light sources A1718 can be, for example, and without limitation, incandescent lamps, fluorescent lamps, lasers, or light emitting diodes. A reflective film A1720 is disposed behind the backlight A1716, reflecting light towards the shutter assemblies A1702.

The substrate A1704 is oriented so that the shutter assemblies A1702 face the backlight.

Interposed between the backlight A1716 and the shutter assemblies A1702 are an optional diffuser A1712 and an optional brightness enhancing film A1714. Also interposed between the backlight A1716 and the shutter assemblies A1702 is an aperture plate A 1722. Disposed on the aperture plate A 1722, and facing the shutter assemblies, is a reflective film A1724. The reflective film A1724 defines a plurality of surface apertures A1708 located beneath the closed positions of the shutters A1710 of the shutter assemblies A1702. The aperture plate A1722 is supported a predetermined distance away from the shutter assemblies A1702 forming a gap A1726. The gap A1726 is maintained by mechanical supports and/or by an epoxy seal A1728 attaching the aperture plate A1722 to the substrate A1704.

The reflective film A1724 reflects light not passing through the surface apertures A1708 back towards the rear of the display assembly A1700. Light rays from the backlight that do not pass through one of the shutter assemblies A1702 will be returned to the backlight and reflected again from the film A1720. In this fashion light that fails to leave the display to form an image on the first pass can be recycled and made available for transmission through other open apertures in the array of shutter assemblies A1702. Such light recycling has been shown to increase the illumination efficiency of the display.

The substrate A1704 forms the front of the display assembly A1700. An absorbing film A1706, disposed on the substrate A1704, defines a plurality of surface apertures A1730 located between the shutter assemblies A1702 and the substrate A1704. The film A1706 is designed to absorb ambient light and therefore increase the contrast of the display.

The epoxy A1728 should have a curing temperature preferably below about 200 C, it should have a coefficient of thermal expansion preferably below about 50 ppm per degree C and should be moisture resistant. An exemplary epoxy A1728 is EPO-TEK B9022-1, sold by Epoxy Technology, Inc.

The epoxy seal A1728 seals in a working fluid A1732. The working fluid A 1732 is engineered with viscosities preferably below about 10 centipoise and with relative dielectric constant preferably above about 2.0, and dielectric breakdown strengths above about 10⁴ V/cm. The working fluid A 1732 can also serve as a lubricant. Its mechanical and electrical properties are also effective at reducing the voltage necessary for moving the shutter between open and closed positions. In one implementation, the working fluid A 1732 preferably has a low refractive index, preferably less than about 1.5. In another implementation the working fluid A1732 has a refractive index that matches that of the substrate A1704. Suitable working fluids A1730 include, without limitation, de-ionized water, methanol, ethanol, silicone oils, fluorinated silicone oils, dimethylsiloxane, polydimethylsiloxane, hexamethyldisiloxane, and diethylbenzene.

A sheet metal or molded plastic assembly bracket A1734 holds the aperture plate A1722, shutter assemblies A1702, the substrate A1704, the backlight A1716 and the other component parts together around the edges. The assembly bracket A 1732 is fastened with screws or indent tabs to add rigidity to the combined display assembly A1700. In some implementations, the light source A1718 is molded in place by an epoxy potting compound.

## Claims

1. A display apparatus comprising:
an array of pixels arranged in rows and columns including
a transparent substrate (A630), and
a plurality of MEMS-based light modulators (912); and
a control matrix (900) disposed on the substrate including,
a common electrical connection (914) among a set of pixels, the set of pixels including pixels in at least two of the columns and in at least two of the rows,
a data voltage interconnect (906a) corresponding to one of the columns, and
a switch (908a) incorporated into one of the pixels for controlling actuation of a corresponding MEMS-based light modulator in response to a voltage applied by the data voltage interconnect.

2. The display apparatus of claim 1, wherein the common electrical connection is a global actuation interconnect.

3. The display apparatus of claim 1, wherein the common electrical connection supplies a bias voltage to the set of pixels.

4. The display apparatus of claim 1, comprising a global actuation voltage source for applying a global actuation voltage to the common electrical connection.

5. The display apparatus of claim 4, wherein the global actuation voltage source applies a voltage sufficient to actuate the pixel.

6. The display apparatus of claim 1, wherein the common electrical connection comprises a common current drain for accepting charge stored in the pixels in the array of pixels, thereby allowing for actuation of the plurality of corresponding MEMS-based light modulators.

7. The display apparatus of claim 1, wherein the MEMS-based light modulators comprise shutter assemblies.

8. The display apparatus of claim 3, wherein application of a data voltage to the data voltage interconnect substantially reduces the minimum additional voltage change needed to actuate one of the MEMS-based light modulators, and wherein the common electrical connection supplies the minimum additional voltage change.

9. The display apparatus of claim 1, wherein at least one pixel in the array of pixels includes a first actuator for driving the MEMS-based light modulator into a first state and a second actuator for driving the MEMS-based light modulator into a second state.

10. The display apparatus of claim 1, wherein the one pixel comprises a memory element, and wherein the switch corresponding to the pixel controls the storage of the data voltage by the memory element.

11. A method of forming an image on a display, comprising:
selecting a first scan-line (904) of the display, wherein the scan line (904) includes a plurality of pixels;
for at least a first pixel of the plurality of pixels in the selected scan line, selectively regulating a voltage across a first actuator via a first switch (908a) disposed on a transparent substrate, thereby enabling the first actuator to drive a corresponding MEMS-based light modulator into a first state;
selecting a second scan line (904) of the display including a second plurality of pixels;
for at least a second pixel of the second plurality of pixels in the selected second scan line, selectively regulating a voltage across a second actuator via a second switch (908a), thereby enabling the second actuator to drive a corresponding second MEMS-based light modulator into a second state;
applying a global actuation voltage to a global actuation interconnect (914) shared among at least two pixels in the first scan line and at least two pixels in the second scan line, thereby actuating the first and second enabled actuators; and
directing light towards the first and second scan lines to form an image.

12. The method of claim 11, wherein the global actuation interconnect provides a common current drain for accepting charge stored in the pixels in the array of pixels, thereby allowing for actuation of the enabled actuators.

13. The method of claim 11, wherein the first and second MEMS-based light modulators comprise shutter assemblies.

14. The method of claim 11, wherein the voltage across the first actuator is regulated by the application of a data voltage to the first switch, and wherein the magnitude of the voltage regulated by the switch is substantially greater than the magnitude of the data voltage.

15. The method of claim 11, wherein driving the first and second MEMS-based light modulators into first and second states comprises moving shutters incorporated into the respective shutter assemblies in a plane parallel to a substrate on which the shutters assemblies are formed.

## Patentansprüche

1. Eine Anzeigevorrichtung, die Folgendes aufweist:
einen Anordnung von Pixeln, die in Zeilen und Spalten angeordnet sind, die Folgendes beinhaltet
ein transparentes Substrat (A630), und
eine Vielzahl von MEMS-basierten Lichtmodulatoren (912); und
eine Steuermatrix (900), die auf dem Substrat angeordnet ist, die Folgendes beinhaltet
eine gemeinsame elektrische Verbindung (914) innerhalb eines Satzes von Pixeln, wobei der Satz von Pixeln Pixel in wenigstens zwei der Spalten und wenigstens zwei der Zeilen beinhaltet,
eine Datenspannungszwischenverbindung (906a), die einer der Spalten entspricht, und
einen Schaltelement (908a), das in eines der Pixel aufgenommen ist, zum Steuern einer Betätigung bzw. Ansteuerung eines entsprechenden MEMS-basierten Lichtmodulators ansprechend auf eine Spannung, die durch die Datenspannungszwischenverbindung angelegt wird.

2. Anzeigevorrichtung nach Anspruch 1, wobei die gemeinsame elektrische Verbindung eine globale Betätigungs- bzw. Ansteuerungszwischenverbindung ist.

3. Anzeigevorrichtung nach Anspruch 1, wobei die gemeinsame elektrische Verbindung eine Vorspannung an den Satz von Pixeln vorsieht.

4. Anzeigevorrichtung nach Anspruch 1, die eine globale Betätigungs- bzw. Ansteuerungsspannungsquelle zum Anlegen einer globalen Betätigungs- bzw. Ansteuerungsspannung an die gemeinsame elektrische Verbindung aufweist.

5. Anzeigevorrichtung nach Anspruch 4, wobei die globale Betätigungs- bzw. Ansteuerungsspannungsquelle eine Spannung anlegt, die ausreichend ist, um das Pixel zu betätigen bzw. anzusteuern.

6. Anzeigevorrichtung nach Anspruch 1, wobei die gemeinsame elektrische Verbindung eine gemeinsame Stromsenke zum Aufnehmen von Ladung aufweist, die in den Pixeln in der Anordnung von Pixeln gespeichert ist, wodurch die Betätigung bzw. Ansteuerung der Vielzahl von entsprechenden MEMS-basierten Lichtmodulatoren gestattet wird.

7. Anzeigevorrichtung nach Anspruch 1, wobei die MEMS-basierten Lichtmodulatoren Blendenanordnungen aufweisen.

8. Anzeigevorrichtung nach Anspruch 3, wobei das Anlegen einer Datenspannung an die Datenspannungszwischenverbindung die minimale zusätzliche Spannung reduziert, die benötigt wird, um einen der MEMSbasierten Lichtmodulatoren zu betätigen bzw. anzusteuern, und wobei die gemeinsame elektrische Verbindung die minimale zusätzliche Spannungsveränderung liefert.

9. Anzeigevorrichtung nach Anspruch 1, wobei wenigstens ein Pixel in der Anordnung von Pixeln ein erstes Betätigungs- bzw. Ansteuerungselement zum Treiben bzw. Schalten des MEMS-basierten Lichtmodulators in einen ersten Zustand und ein zweites Betätigungs- bzw. Ansteuerungselement zum Treiben bzw. Schalten des MEMS-basierten Lichtmodulators in einen zweiten Zustand beinhaltet.

10. Anzeigevorrichtung nach Anspruch 1, wobei das eine Pixel ein Speicherelement aufweist, und wobei das Schaltelement, das dem Pixel entspricht, die Speicherung der Datenspannung durch das Speicherelement steuert.

11. Ein Verfahren zum Ausbilden eines Bildes auf einer Anzeige, das Folgendes aufweist:
Auswählen einer ersten Scan-Zeile (904) der Anzeige, wobei die Scan-Zeile (904) eine Vielzahl von Pixeln beinhaltet;
für wenigstens ein erstes Pixel der Vielzahl von Pixeln in der ausgewählten Scan-Zeile, selektives Regeln einer Spannung über ein erstes Betätigungs- bzw. Ansteuerungselement hinweg mittels eines erstes Schaltelements (908a), das auf einem transparenten Substrat angeordnet ist, wodurch es einem ersten Betätigungs- bzw. Ansteuerungselement ermöglicht wird, einen entsprechenden MEMS-basierten Lichtmodulator in einen ersten Zustand zu treiben bzw. zu schalten;
Auswählen einer zweiten Scan-Zeile (904) der Anzeige, die eine zweite Vielzahl von Pixeln beinhaltet;
für wenigstens ein zweites Pixel der zweiten Vielzahl von Pixeln in der ausgewählten zweiten Scan-Zeile, selektives Regeln einer Spannung über ein zweites Betätigungs- bzw. Ansteuerungselement hinweg mittels eines zweiten Schaltelements (908a), wodurch es dem zweiten Betätigungs- bzw.
Ansteuerungselement ermöglicht wird, einen entsprechenden zweiten MEMS-basierten Lichtmodulator in einen zweiten Zustand zu treiben bzw. zu schalten;
Anlegen einer globalen Betätigungs- bzw. Ansteuerungsspannung an eine globale Betätigungs- bzw. Ansteuerungszwischenverbindung (914), die von wenigstens zwei Pixeln in der ersten Scan-Zeile und wenigstens zwei Pixeln in der zweiten Scan-Zeile gemeinsam verwendet wird, wodurch die ersten und zweiten aktivierten Betätigungs- bzw. Ansteuerungselemente betätigt bzw. angesteuert werden; und
Richten von Licht auf die ersten und zweiten Scan-Zeilen, um ein Bild auszubilden.

12. Verfahren nach Anspruch 11, wobei die globale Betätigungs- bzw. Ansteuerungszwischenverbindung eine gemeinsame Stromsenke zum Aufnehmen von Ladung vorsieht, die in den Pixeln in der Anordnung von Pixeln gespeichert ist, wodurch eine Betätigung bzw. Ansteuerung der aktivieren Betätigungs- bzw. Ansteuerungselemente gestattet wird.

13. Verfahren nach Anspruch 11, wobei die ersten und zweiten MEMS-basierten Lichtmodulatoren Blendenanordnungen aufweisen.

14. Verfahren nach Anspruch 11, wobei die Spannung über das erste Betätigungs- bzw. Ansteuerungselement hinweg durch Anlegen einer Datenspannung an das erste Schaltelement geregelt wird, und wobei die Größe der Spannung, die durch das Schaltelement geregelt wird, wesentlich größer ist als die Größe der Datenspannung.

15. Verfahren nach Anspruch 11, wobei das Treiben bzw. Schalten der ersten und zweiten MEMS-basierten Lichtmodulatoren in erste und zweite Zustände Bewegen von Blenden aufweist, die in die jeweiligen Blendenanordnungen aufgenommen sind, und zwar in einer Ebene parallel zu einem Substrat, auf dem die Blendenanordnungen ausgebildet sind.

## Revendications

1. Appareil d'affichage comprenant :
une matrice de pixels agencés en rangées et en colonnes comprenant
un substrat transparent (A630), et
une pluralité de modulateurs de lumière à MEMS (912) ; et
une matrice de commande (900) disposée sur le substrat comprenant
une connexion électrique commune (914) parmi un ensemble de pixels, l'ensemble de pixels comprenant des pixels dans au moins deux des colonnes et dans au moins deux des rangées,
une interconnexion de tension de données (906a) correspondant à l'une des colonnes, et
un élément de commutation (908a) incorporé dans l'un des pixels pour commander l'actionnement d'un modulateur de lumière à MEMS correspondant en réponse à une tension appliquée par l'interconnexion de tension de données.

2. Appareil d'affichage selon la revendication 1, dans lequel la connexion électrique commune est une interconnexion d'actionnement global.

3. Appareil d'affichage selon la revendication 1, dans lequel la connexion électrique commune fournit une tension de polarisation à l'ensemble de pixels.

4. Appareil d'affichage selon la revendication 1, comprenant une source de tension d'actionnement global pour appliquer une tension d'actionnement global à la connexion électrique commune.

5. Appareil d'affichage selon la revendication 4, dans lequel la source de tension d'actionnement global applique une tension suffisante pour actionner le pixel.

6. Appareil d'affichage selon la revendication 1, dans lequel la connexion électrique commune comprend un drain de courant commun pour accepter des charges stockées dans les pixels dans la matrice de pixels, de manière à permettre l'actionnement de la pluralité de modulateurs de lumière à MEMS correspondants.

7. Appareil d'affichage selon la revendication 1, dans lequel les modulateurs de lumière à MEMS comprennent des ensembles obturateurs.

8. Appareil d'affichage selon la revendication 3, dans lequel l'application d'une tension de données à l'interconnexion de tension de données réduit la variation de tension supplémentaire minimale nécessaire pour actionner l'un des modulateurs de lumière à MEMS, et dans lequel la connexion électrique commune fournit la variation de tension supplémentaire minimale.

9. Appareil d'affichage selon la revendication 1, dans lequel au moins un pixel dans la matrice de pixels comprend un premier actionneur pour amener le modulateur de lumière à MEMS dans un premier état et un second actionneur pour amener le modulateur de lumière à MEMS dans un second état.

10. Appareil d'affichage selon la revendication 1, dans lequel le pixel en question comprend un élément de mémoire, et dans lequel l'élément de commutation correspondant au pixel commande le stockage de la tension de données par l'élément de mémoire.

11. Procédé de formation d'une image sur un dispositif d'affichage, comprenant les étapes consistant à :
sélectionner une première ligne de balayage (904) du dispositif d'affichage, la ligne de balayage (904) comprenant une pluralité de pixels ;
pour au moins un premier pixel de la pluralité de pixels dans la ligne de balayage sélectionnée, réguler sélectivement une tension aux bornes d'un premier actionneur par l'intermédiaire d'un premier élément de commutation (908a) disposé sur un substrat transparent, de manière à valider le premier actionneur pour amener un modulateur de lumière à MEMS correspondant dans un premier état ;
sélectionner une seconde ligne de balayage (904) du dispositif d'affichage comprenant une seconde pluralité de pixels ;
pour au moins un second pixel de la seconde pluralité de pixels dans la seconde ligne de balayage sélectionnée, réguler sélectivement une tension aux bornes d'un second actionneur par l'intermédiaire d'un second élément de commutation (908a), de manière à valider le second actionneur pour amener un second modulateur de lumière à MEMS correspondant dans un second état ;
appliquer une tension d'actionnement global à une interconnexion d'actionnement global (914) partagée parmi au moins deux pixels dans la première ligne de balayage et au moins deux pixels dans la seconde ligne de balayage, de manière à actionner les premier et second actionneurs validés ; et
diriger de la lumière vers les première et seconde lignes de balayage afin de former une image.

12. Procédé selon la revendication 11, dans lequel l'interconnexion d'actionnement global fournit un drain de courant commun pour accepter des charges stockées dans les pixels dans la matrice de pixels, de manière à permettre l'actionnement des actionneurs validés.

13. Procédé selon la revendication 11, dans lequel les premier et second modulateurs de lumière à MEMS comprennent des ensembles obturateurs.

14. Procédé selon la revendication 11, dans lequel la tension aux bornes du premier actionneur est régulée par l'application d'une tension de données au premier élément de commutation, et dans lequel l'amplitude de la tension régulée par l'élément de commutation est sensiblement plus grande que l'amplitude de la tension de données.

15. Procédé selon la revendication 11, dans lequel l'opération consistant à amener les premier et second modulateurs de lumière à MEMS dans des premier et second états consiste à déplacer des obturateurs incorporés dans les ensembles obturateurs respectifs dans un plan parallèle à un substrat sur lequel les ensembles obturateurs sont formés.
